(19) **Europäisches Patentamt**
**European Patent Office**
**Office européen des brevets**

(11) **EP 4 654 723 A1**

(12) **EUROPEAN PATENT APPLICATION**
published in accordance with Art. 153(4) EPC

(43) Date of publication:
**26.11.2025 Bulletin 2025/48**

(21) Application number: **23916693.7**

(22) Date of filing: **17.01.2023**

(51) International Patent Classification (IPC):
*H04W 72/25* (2023.01)    *H04W 72/02* (2009.01)

(52) Cooperative Patent Classification (CPC):
**H04W 72/02; H04W 72/25**

(86) International application number:
**PCT/CN2023/072665**

(87) International publication number:
**WO 2024/152203 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **RGTH
Patentanwälte PartGmbB
Neuer Wall 10
20354 Hamburg (DE)**

(54) **METHOD FOR SIDELINK TRANSMISSION, AND TERMINAL DEVICE**

(57)    Provided are a method for sidelink transmission and a terminal device. The method comprises: a first terminal device receiving first information reported by a second terminal device, the first information including one or more of the following information: CSI-RS resource information, beam failure indication information, and a measurement result corresponding to the CSI-RS resource information, wherein the CSI-RS resource information is used for indicating a CSI-RS resource selected by the second terminal device. Transmission of CSI-RS resource-related information and/or beam failure indication information between terminal devices helps a sidelink system in implementing beam-based transmission.

First terminal device

Second terminal device

S2610 First information (including beam failure indication information)

FIG. 26

**Description**

**TECHNICAL FIELD**

This application relates to the field of communications technologies, and more specifically, to a sidelink transmission method and a terminal device.

**BACKGROUND**

To improve a transmission rate of a sidelink system, a beam-based transmission manner may be considered in the sidelink system. How the sidelink system should support the beam-based transmission mode is not discussed in a current protocol.

**SUMMARY**

This application provides a sidelink transmission method and a terminal device. The following describes the aspects related to this application.

According to a first aspect, a sidelink transmission method is provided, and the method includes: receiving, by a first terminal device, first information reported by a second terminal device, where the first information includes one or more of the following information: channel state information reference signal (channel state information reference signal, CSI-RS) resource information; beam failure indication information; or a measurement result corresponding to CSI-RS resource information, where the CSI-RS resource information is used for indicating a CSI-RS resource selected by the second terminal device.

According to a second aspect, a sidelink transmission method is provided, and the method includes: reporting, by a second terminal device, first information to a first terminal device, where the first information includes one or more of the following information: CSI-RS resource information; beam failure indication information; or a measurement result corresponding to CSI-RS resource information, where the CSI-RS resource information is used for indicating a CSI-RS resource selected by the second terminal device.

According to a third aspect, a terminal device is provided, where the terminal device is a first terminal device, and the first terminal device includes: a communications module, configured to receive first information reported by a second terminal device, where the first information includes one or more of following information: CSI-RS resource information; beam failure indication information; or a measurement result corresponding to CSI-RS resource information, where the CSI-RS resource information is used for indicating a CSI-RS resource selected by the second terminal device.

According to a fourth aspect, a terminal device is provided, where the terminal device is a second terminal device, and the second terminal device includes: a communications module, configured to report first information to a first terminal device, where the first information includes one or more of the following information: CSI-RS resource information; beam failure indication information; or a measurement result corresponding to CSI-RS resource information, where the CSI-RS resource information is used for indicating a CSI-RS resource selected by the second terminal device.

According to a fifth aspect, a terminal device is provided, and the terminal device includes a transceiver, a memory, and a processor. The memory is configured to store a program, and the processor is configured to: invoke a program in the memory, and control the transceiver to receive or transmit a signal, to cause a terminal to execute the method according to any one of the first aspect and the second aspect.

According to a sixth aspect, an apparatus is provided, and the apparatus includes a processor, configured to invoke a program from a memory, to cause the apparatus to execute the method according to any one of the first aspect and the second aspect.

According to a seventh aspect, a chip is provided, and the chip includes a processor, configured to invoke a program from a memory, to cause a device on which the chip is installed to execute the method according to any one of the first aspect and the second aspect.

According to an eighth aspect, a computer-readable storage medium is provided, where the computer-readable storage medium stores a program, and the program causes a computer to execute the method according to any one of the first aspect and the second aspect.

According to a ninth aspect, a computer program product is provided. The computer program product includes a program, where the program causes a computer to execute the method according to any one of the first aspect and the second aspect.

According to a tenth aspect, a computer program is provided. The computer program causes a computer to execute the method according to any one of the first aspect and the second aspect.

Transmission of CSI-RS resource-related information and/or beam failure indication information between terminal devices helps a sidelink system implement beam-based transmission.

## BRIEF DESCRIPTION OF DRAWINGS

FIG. 1 is an example diagram of a system architecture of a wireless communications system to which embodiments of this application are applicable.

FIG. 2 is an example diagram of a scenario of sidelink communication within network coverage.

FIG. 3 is an example diagram of a scenario of sidelink communication with partial network coverage.

FIG. 4 is an example diagram of a scenario of sidelink communication outside network coverage.

FIG. 5 is an example diagram of a scenario of sidelink communication based on a central control node.

FIG. 6 is an example diagram of a broadcast-based sidelink communication manner.

FIG. 7 is an example diagram of a unicast-based sidelink communication manner.

FIG. 8 is an example diagram of a multicast-based sidelink communication manner.

FIG. 9A is an example diagram of a slot structure used for a sidelink communications system.

FIG. 9B is another example diagram of a slot structure used for a sidelink communications system.

FIG. 10 is an example diagram of a mapping manner of a CSI-RS in sidelink.

FIG. 11 is an example diagram of a communication scenario of a wide beam communications system.

FIG. 12 is an example diagram of a communication scenario of a narrow beam communications system.

FIG. 13 is a schematic flowchart of a usage manner of a TCI status.

FIG. 14 is an example diagram of a slot structure that includes a CSI-RS according to an embodiment of this application.

FIG. 15 is another example diagram of a slot structure that includes a CSI-RS according to an embodiment of this application.

FIG. 16 is an example diagram of an arrangement manner of periodic CSI-RS resources according to an embodiment of this application.

FIG. 17 is an example diagram of an indication manner of a physical resource block (physical resource block, PRB) available for transmitting a CSI-RS according to an embodiment of this application.

FIG. 18 is an example diagram of another indication manner of a PRB available for transmitting a CSI-RS according to an embodiment of this application.

FIG. 19 is an example diagram of still another indication manner of a PRB available for transmitting a CSI-RS according to an embodiment of this application.

FIG. 20 is a schematic flowchart of a method for sidelink transmission according to an embodiment of this application.

FIG. 21 is an example diagram of a possible arrangement manner of a periodic CSI-RS resource according to an embodiment of this application.

FIG. 22 is an example diagram of a beam selection process according to an embodiment of this application.

FIG. 23 is another example diagram of a beam selection process according to an embodiment of this application.

FIG. 24 is an example diagram of another possible arrangement manner of a periodic CSI-RS resource according to an embodiment of this application.

FIG. 25 is an example diagram of a manner for determining a beam failure according to an embodiment of this application.

FIG. 26 is a schematic flowchart of another method for sidelink transmission according to an embodiment of this application.

FIG. 27 is an example diagram of a manner of carrying beam failure indication information according to an embodiment of this application.

FIG. 28 is another example diagram of a manner of carrying beam failure indication information according to an embodiment of this application.

FIG. 29 is a schematic flowchart of still another method for sidelink transmission according to an embodiment of this application.

FIG. 30 is an example diagram of a time domain relationship between a CSI-RS resource and a PSFCH according to an embodiment of this application.

FIG. 31 is an example diagram of another time domain relationship between a CSI-RS resource and a PSFCH according to an embodiment of this application.

FIG. 32 is a schematic structural diagram of a terminal device according to an embodiment of this application.

FIG. 33 is another schematic structural diagram of a terminal device according to an embodiment of this application.

FIG. 34 is a schematic structural diagram of an apparatus according to an embodiment of this application.

## DESCRIPTION OF EMBODIMENTS

## Communications system architecture

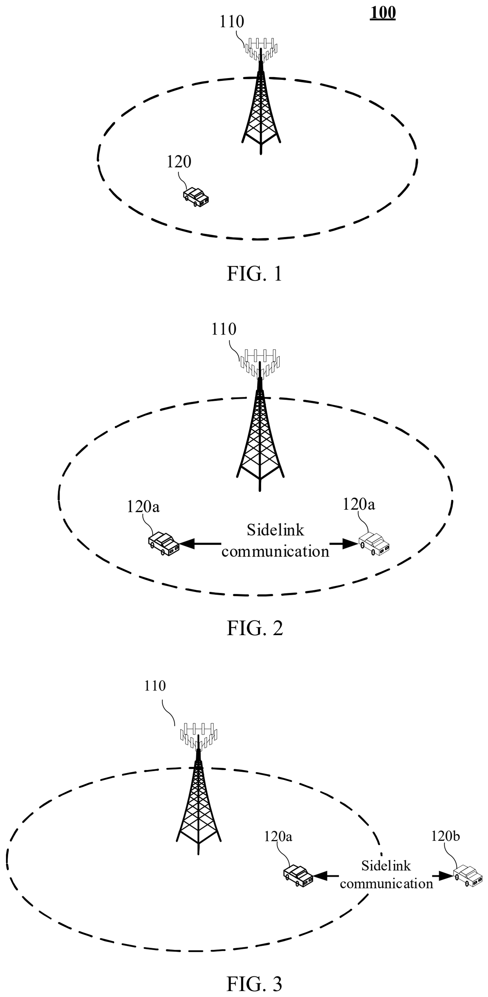

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th-generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may serve as a scheduling entity that provides a sidelink (sidelink, SL) signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to serve as a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNB MeNB, a secondary eNB SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

**Sidelink communication in different network coverage statuses**

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct transmission of communication data between terminal devices. Compared with conventional cellular communication, direct transmission of communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, and sidelink communication outside network coverage.

FIG. 2 is an example diagram of a scenario of sidelink communication within network coverage. In the scenario shown in FIG. 2, both the two terminal devices 120a are located within coverage of the network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

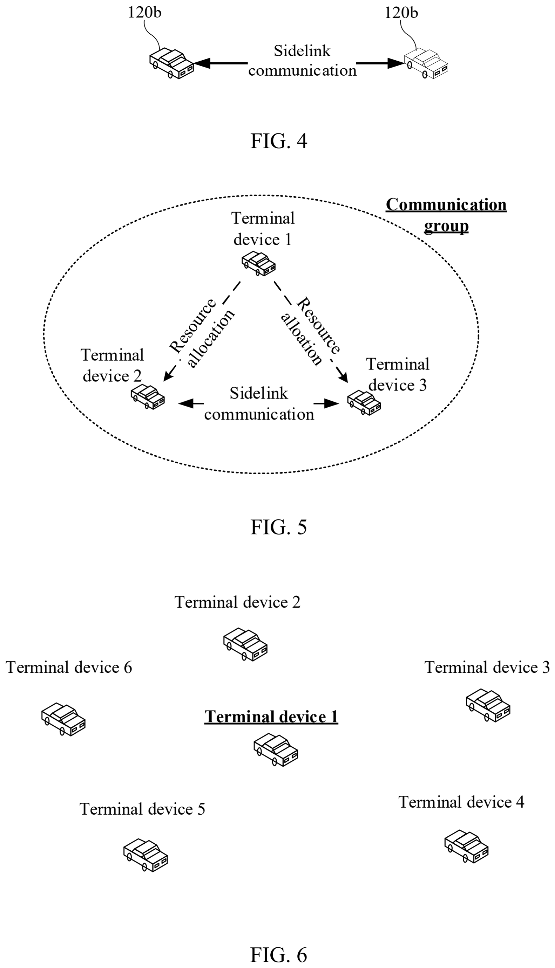

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

**Sidelink communication based on a central control node**

FIG. 5 is an example diagram of a scenario of sidelink communication based on a central control node. In the scenario of sidelink communication, a plurality of terminal devices may form a communication group, and the communication group has a central control node. The central control node may be a terminal device (for example, a terminal device 1 in FIG. 5) in the communication group, and the terminal device may also be referred to as a cluster header (cluster header, CH) terminal device. The central control node may be responsible for implementing one or more of the following functions: establishing a communication group, adding a group member to or deleting a group member from a communication group, coordinating resources within a communication group, allocating sidelink transmission resources to another terminal device, receiving sidelink feedback information from another terminal device, and coordinating resources with another communication group.

**Mode of sidelink communication**

Two modes of sidelink communication are defined in some standards or protocols (for example, the 3rd Generation Partnership Project (3rd Generation Partnership Project, 3GPP)): a first mode and a second mode.

In the first mode, a resource (the resource mentioned in this application may also be referred to as a transmission resource, such as a time-frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario in which there is coverage of the network device, for example, the scenario shown in FIG. 2. In the scenario shown in FIG. 2, the terminal device 120a is located within the coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission by using the selected resource. For example, in the scenario shown in FIG. 4, the terminal device 120b is located outside the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

**Data transmission modes of sidelink communication**

Some sidelink communications systems (such as long term evolution vehicle to everything (long term evolution vehicle to everything, LTE-V2X)) support a broadcast-based data transmission mode (briefly referred to as broadcast transmission below). For the broadcast transmission, a receiving-end terminal may be any terminal device around a transmitting-end terminal. For example, in FIG. 6, a terminal device 1 is a transmitting-end terminal, and a receiving-end terminal corresponding to the transmitting-end terminal is any terminal device around the terminal device 1, for example, may be a terminal device 2 to a terminal device 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

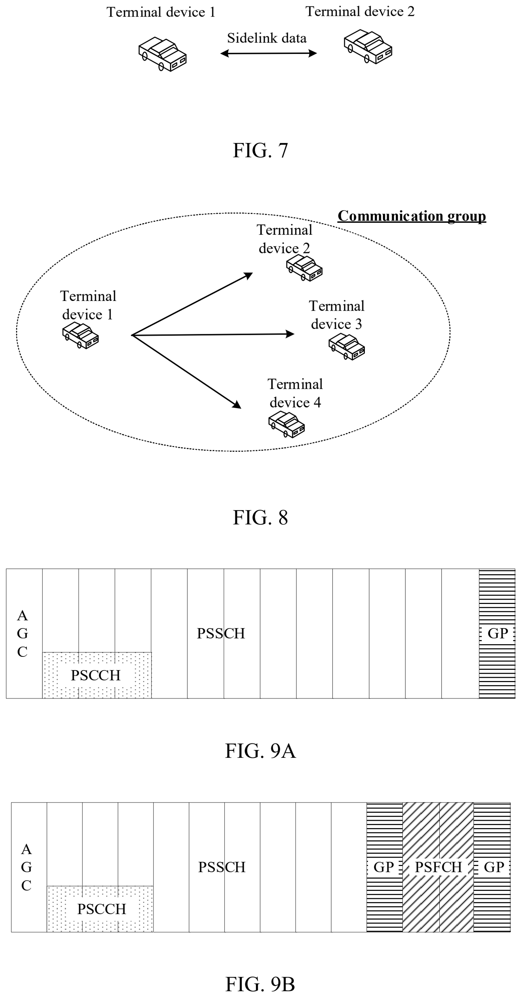

For the unicast transmission, the receiving-end terminal generally includes only one terminal device. For example, in FIG. 7, unicast transmission is performed between a terminal device 1 and a terminal device 2. The terminal device 1 may be a transmitting-end terminal, and the terminal device 2 may be a receiving-end terminal. Alternatively, the terminal device 1 may be a receiving-end terminal, and the terminal device 2 may be a transmitting-end terminal.

For the multicast transmission, the receiving-end terminal may be terminal devices in a communication group, or the receiving-end terminal may be terminal devices within a specific transmission distance. For example, in FIG. 8, a terminal device 1, a terminal device 2, a terminal device 3, and a terminal device 4 constitute a communication group. If the terminal device 1 transmits data, all the other terminal devices (the terminal device 2 to the terminal device 4) in the group may be receiving-end terminals.

**Slot structure for sidelink communication**

In a communications system, a frame, a subframe or a slot structure of sidelink communication may be defined. In some sidelink systems, a plurality of slot structures are defined. For example, two slot structures are defined in an NR sidelink (NR sidelink, NR SL) communications system. One of the slot structures does not include a physical sidelink feedback channel (physical sidelink feedback channel, PSFCH), as shown in FIG. 9A; and the other of the slot structures includes a PSFCH, as shown in FIG. 9B.

A physical sidelink control channel (physical sidelink control channel, PSCCH) in the NR SL may use a second sidelink symbol of a slot as a start position in time domain, and the PSCCH may occupy two or three symbols in time domain (all the symbols mentioned herein may refer to orthogonal frequency division multiplexing (orthogonal frequency division multiplexing, OFDM) symbols). The PSCCH may occupy a plurality of PRBs in frequency domain. For example, a quantity of PRBs occupied by the PSCCH may be selected from the following values: {10, 12, 15, 20, 25}.

To reduce complexity of blind detection performed by a terminal device on the PSCCH, generally, in one resource pool, only one symbol quantity and one PRB quantity are configured for the PSCCH. In addition, because the NR SL uses a sub-channel (sub-channel) as a minimum granularity of PSSCH resource allocation, the quantity of PRBs occupied by the PSCCH must be less than or equal to a quantity of PRBs included in one sub-channel in a resource pool.

Referring to FIG. 9A, for a slot structure that does not include a PSFCH, the PSSCH in the NR SL may use a second sidelink symbol of the slot as a start position in time domain. The last sidelink symbol in the slot is used as a guard period (guard period, GP), and a remaining symbol may be used for mapping the PSSCH. The first sidelink symbol in the slot may be a repetition of the second sidelink symbol. Generally, a terminal device as a receiving end uses the first sidelink symbol as a symbol for performing automatic gain control (automatic gain control, AGC). Thus, data on the first sidelink symbol is not generally used for data demodulation. The PSSCH may occupy K sub-channels in frequency domain, and each sub-channel may include M consecutive PRBs (values of K and M may be predefined in a protocol, or pre-configured, or configured by a network device, or determined depending on implementation of the terminal device).

FIG. 9B shows a slot structure including a PSFCH, and FIG. 9B schematically shows positions of symbols occupied by a PSFCH, a PSCCH, and a PSSCH in a slot. The slot structure mainly differs from the slot structure in FIG. 9A in that the second-to-last symbol and the third-to-last symbol in the slot are used for transmitting a PSFCH, and in addition, a symbol before the symbol used for transmitting the PSFCH is also used as a GP. It may be learned from the slot structure shown in FIG. 9B that, in one slot, the last symbol is used as a GP, the second-to-last symbol is used for transmitting the PSFCH, and data on the third-to-last symbol is the same as data on the second-to-last symbol used for transmitting the PSFCH, that is, the third-to-last symbol is used as a symbol for performing AGC, and a fourth-to-last symbol has a same function as a last symbol and is also used as a GP. In addition, a first symbol in the slot is used as an AGC, data on the symbol is the same as data on a second symbol in the slot. The PSCCH occupies three symbols, and remaining symbols may be used for transmitting the PSSCH.

## Sidelink CSI-RS

To better support unicast communication, an NR SL system supports a sidelink CSI-RS. In the NR SL system, an SL CSI-RS is transmitted only if the following three conditions are met.

Condition 1: A terminal device is required to transmit a PSSCH corresponding to the SL CSI-RS, that is, the terminal device cannot transmit only the SL CSI-RS.

Condition 2: Sidelink CSI reporting is activated by using higher layer signalling.

Condition 3: In a case that sidelink CSI reporting is activated by using higher layer signalling, a corresponding bit in second-stage SCI transmitted by terminal device triggers the sidelink CSI reporting.

A maximum quantity of ports supported by the SL CSI-RS is 2. When there are two ports, SL CSI-RSs for different ports are multiplexed in a code division manner on two adjacent resource elements (resource element, RE) of a same sidelink symbol, and a quantity of SL CSI-RSs for each port in one PRB is 1, that is, a density is 1. Therefore, in one PRB, the SL CSI-RS will appear on at most one sidelink symbol. A specific position of the sidelink symbol is determined by a terminal device that transmits the SL CSI-RS.

Generally, to avoid affecting resource mapping of a PSCCH and second-stage SCI, the SL CSI-RS cannot be located in a same sidelink symbol as the PSCCH and the second-stage SCI.

In addition, because channel estimation precision of a sidelink symbol in which a PSSCH DM-RS is located is relatively high, and SL CSI-RSs for the two ports are required to occupy two consecutive REs in frequency domain, the SL CSI-RS and the PSSCH DM-RS cannot be transmitted by using a same sidelink symbol.

In some cases, the position of the sidelink symbol occupied by the SL CSI-RS may be indicated by the parameter sl-CSI-RS-FirstSymbol in PC5 interface radio resource control (PC5 radio resource control, PC5-RRC) signalling. In addition, a position of a first RE occupied by the SL CSI-RS in one PRB is indicated by the parameter "sl-CSI-RS-FreqAllocation" in the PC5 RRC. If the SL CSI-RS corresponds to one port, the parameter is a bitmap whose length is 12, and corresponds to 12 REs in one PRB. If the SL CSI-RS corresponds to two ports, the parameter is a bitmap whose length is 6. In this case, the SL CSI-RS occupies two Res, $2f(1)$ and $2f(1) + 1$, where $f(1)$ denotes an identifier of a bit with a value of 1 in the bitmap.

A frequency domain position occupied by the SL CSI-RS is also determined by the terminal device that transmits the SL CSI-RS, and it should be noted that the frequency domain position determined for the SL CSI-RS cannot conflict with a frequency domain position occupied by a PT-RS.

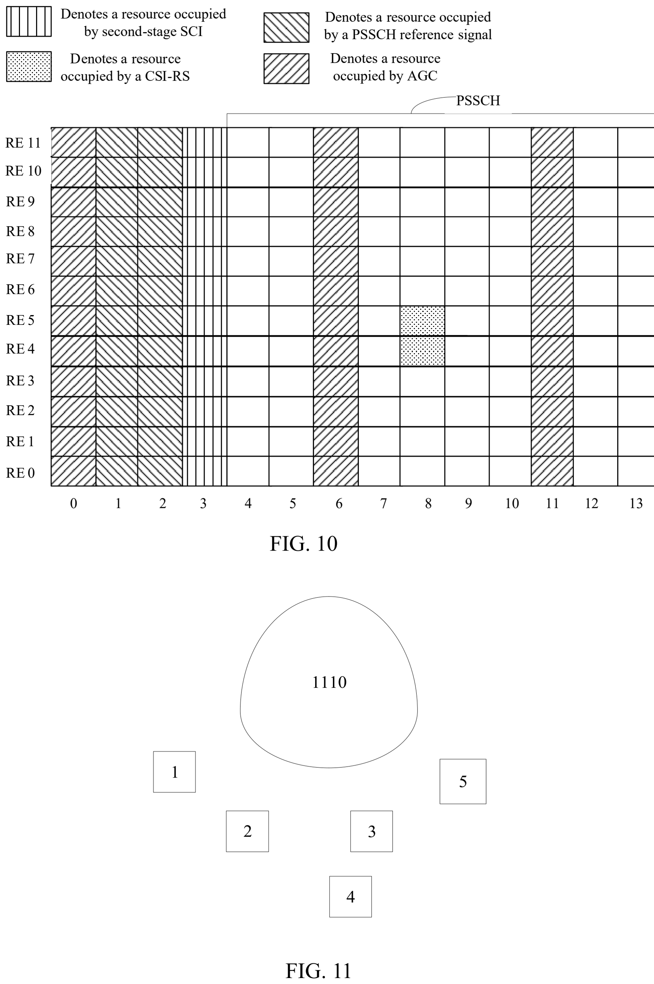

FIG. 10 is a schematic diagram of a time-frequency resource occupied by an SL CSI-RS. Referring to FIG. 10, it is assumed that a quantity of ports corresponding to the SL CSI-RS is 2, s1-CSI-RS-FirstSymbol indicates that locations of sidelink symbols occupied by the SL CSI-RS is 8, and s1-CSI-RS-FreqAllocation indicates a position of a first RE occupied by the SL CSI-RS in one PRB is $[b_5, b_4, b_3, b_2, b_1, b_0] = [0,0,0,1,0,0]$.

## Multi-beam system

A design objective of a communications system (for example, an NR system) includes high-bandwidth communication with a high frequency band (for example, a frequency band above 6 GHz). When a working frequency becomes higher, path loss in a transmission process increases, which affects a coverage capability of a high-frequency system. Therefore, to effectively ensure a coverage range of a high frequency band, an effective technical solution is based on massive multiple-input multiple-output (Massive multiple-in multipleout, Massive MIMO), to form beamforming with a larger gain, overcome propagation loss, and ensure coverage of a communications system.

Currently, a common large-scale antenna array is a millimeter-wave antenna array. Because a wavelength emitted by the millimeter-wave antenna array is relatively short, a spacing between antenna elements of the antenna array may be relatively short, and an aperture of an antenna element may be relatively small, so that more physical antenna elements may be integrated into a two-dimensional antenna array with a limited size.

In addition, because a size of the millimeter-wave antenna array is limited, a digital beamforming manner cannot be used due to factors such as hardware complexity, costs, and power consumption. Instead, usually an analog beamforming manner is used. The analog beamforming manner may reduce implementation complexity of a device while enhancing network coverage.

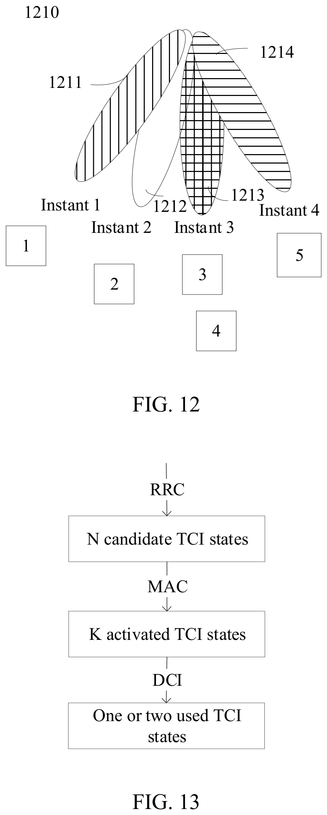

To facilitate understanding of a multi-beam system, with reference to FIG. 11 and FIG. 12, the following describes a beam-based communication process by using a scenario in which a network device communicates with a terminal device as an example.

Referring to FIG. 11, in a conventional communications system (for example, a 2G, 3G, or 4G system), a relatively wide beam (beam) 1110 is generally used to cover an entire cell (or referred to as a "sector"). In this way, terminal devices (for example, terminal devices 1 to 5) in the cell may communicate with a network device by using this relatively wide beam at each instant, for example, obtain a transmission resource allocated by the network device.

Referring to FIG. 12, in a relatively new communications system (for example, a 5G system or an NR system), a multi-beam (multi-beam) system 1210 may be used to cover an entire cell. Each beam (for example, beams 1211 to 1214) in the multi-beam system covers a relatively small range in the cell, and an effect of covering the entire cell by using a plurality of beams is achieved in a manner of beam sweeping (beam sweeping).

In a beam sweeping process, different beams are used at different instants to cover different areas in the cell. For example, at an instant 1, the communications system may cover, by using the beam 1211, an area in which a terminal device 1 is located. At an instant 2, the communications system may cover, by using the beam 1212, an area in which a terminal device 2 is located. At an instant 3, the communications system may cover, by using the beam 1213, an area in which the terminal device 3 and the terminal device 4 are located. At an instant 4, the communications system may cover, by using the beam 1214, an area in which a terminal device 5 is located.

For the multi-beam system, transmit energy may be more concentrated because a relatively narrow beam is used, thereby covering a further distance. However, because the beam is relatively narrow, each beam can cover only some areas in the cell. Therefore, a beam sweeping process of the multi-beam system may be understood as "trading time for space".

The analog beamforming may be used not only for a network device, but also for a terminal device. In addition, the analog beamforming may be used not only for signal transmission (referred to as a transmit beam), but also for signal receiving (referred to as a receive beam).

Currently, different beams are identified by using different signals carried in the beams. For example, different synchronization signal blocks (synchronization signal block, SSB) may be transmitted on different beams, so that the terminal device may distinguish between different beams by using different synchronization signal blocks. For another example, different CSI-RSs may be transmitted on different beams, and therefore, the terminal device may identify different beams by using CSI-RS signals and/or CSI-RS resources.

In the multi-beam system, a physical downlink control channel (physical downlink control channel, PDCCH) and a physical downlink shared channel (physical downlink shared channel, PDSCH) may be transmitted by using different downlink transmit beams.

For some communications systems (such as a communications system whose carrier band is below 6 GHz), a terminal device generally does not use any analog beam. In such communications systems, the terminal device may receive signals transmitted by different downlink transmit beams of the network device by using an omnidirectional antenna (or a near-omnidirectional antenna).

For some communications systems (such as a millimeter wave system), a terminal device may use an analog beam. In such communications systems, the terminal device may receive a signal transmitted by a downlink transmit beam corresponding to a downlink receive beam. In this case, beam indication (beam indication) information may be used to assist the terminal device in determining one or more of the following information: related information of a transmit beam of a network device, or related information of a receive beam corresponding to the terminal device.

In some communication protocols (such as NR-related protocols), beam indication information does not directly indicate a beam itself, but indicates a quasi co-located (quasi co-located, QCL) relationship between signals. On a terminal device side, receiving of a corresponding channel or a corresponding signal is also determined based on QCL hypothesis.

**QCL indication/hypothesis in downlink transmission**

When performing signal receiving, a terminal device may improve a receiving algorithm by using a feature of a transmission environment corresponding to data transmission, to improve receiving performance. For example, the terminal device may optimize design and a parameter of a channel estimator by using statistical characteristics of a channel. In some communications systems (such as an NR system), a characteristic of a transmission environment corresponding to data transmission may be represented by QCL information (QCL-Info).

When downlink data transmission is performed by using different transmission and receiving points (transmission and receiving point, TRP)/panels (panel)/beams, the characteristic of the transmission environment corresponding to data transmission may also change. Therefore, in some communications systems (such as an NR system), when a downlink control channel or a downlink data channel is required to be transmitted, a network device may transmit corresponding QCL information to a terminal device by using a transmission configuration indicator (transmission configuration indicator, TCI) state.

A TCI state may include the following configuration information: a TCI state identity (identity, ID), QCL information 1, and QCL information 2 (optional). The TCI state ID may be used for identifying a TCI state.

The QCL information may include the following information: QCL type configuration and QCL reference signal configuration. The QCL type configuration may be one of QCL-TypeA, QCL-TypeB, QCL-TypeC, or QCL-TypeD. The QCL reference signal configuration may include an identity of a cell (cell ID) in which a reference signal is located, a bandwidth part (bandwidth part, BWP), and an identity of the reference signal (for example, may be a CSI-RS resource identity or an SSB index).

If both the QCL information 1 and the QCL information 2 are configured, a QCL type of at least one of the QCL information 1 and the QCL information 2 must be one of the QCL-TypeA, QCL-TypeB, and QCL-TypeC, and a QCL type of the other QCL information must be QCL-Type D.

Different QCL type configurations are defined as follows:

QCL Type A (QCL-TypeA): {Doppler shift (doppler shift), Doppler spread (doppler spread), average delay (average delay), delay spread (delay spread)};
QCL Type B (QCL-TypeB): {Doppler shift, Doppler spread};
QCL Type C (QCL-TypeC): {Doppler shift, average delay}; and
QCL type D (QCL-TypeD): {spatial domain reception parameter}.

In an NR system, a network device may indicate a corresponding TCI state for a downlink signal or a downlink channel. If the network device configures, by using the TCI state, a QCL reference signal of a target downlink channel or a target downlink signal as an SSB or a CSI-RS, and the QCL type configuration is QCL-TypeA, QCL-TypeB or QCL-TypeC, it may be assumed by a terminal device that a large-scale parameter of the target downlink signal is the same as a large-scale parameter of the SSB or the CSI-RS. Specific content of the large-scale parameter may be determined based on the QCL type configuration.

Similarly, if the network device configures, by using the TCI state, the QCL reference signal of the target downlink channel or target downlink signal as an SSB or a CSI-RS, and the QCL type is configured as QCL-TypeD, the terminal device may receive the target downlink signal by using a same receive beam (namely, a same spatial domain receive parameter (spatial Rx parameter)) as that used for receiving the SSB or CSI-RS. Generally, on a network device side, the target downlink channel (or the target downlink signal) and an SSB or CSI-RS that is referenced are transmitted by a same TRP/panel/beam. If different TRPs/panels/beams are used for transmitting two downlink signals (or downlink channels), different TCI states are typically configured for the two downlink signals (or downlink channels).

For a downlink control channel, a TCI state of a control resource set (control resource set, CORESET) corresponding to the downlink control channel may be indicated by using RRC signalling or RRC signalling plus medium access control (medium access control, MAC) signalling.

For a downlink data channel (namely, a PDSCH), referring to FIG. 13, a TCI state set available for the downlink data channel may be indicated by using RRC signalling, some of the TCI states are activated by using MAC layer signalling, and finally, one or two TCI states are indicated from the activated TCI states by using a TCI state indicator field in DCI, and used for a downlink data channel scheduled by the DCI.

To improve a transmission rate of a sidelink system, a beam-based transmission manner may be considered in the sidelink system. For example, the sidelink system may be extended to millimeter-wave frequency band, and then sidelink transmission is performed in an analog beamforming manner to enhance transmission rate and network coverage of the sidelink system.

If the sidelink system uses the beam-based transmission manner, a terminal device used as a transmitting end may perform sidelink transmission based on a transmit beam; and/or a terminal device as a receiving end may perform sidelink reception based on a receive beam. In some cases, the transmit beam may also be referred to as a spatial domain transmission filter (spatial domain transmission filter), a transmitting-end spatial domain transmission filter, a spatial domain transmission filter used for transmission, or another name. Correspondingly, the receive beam may also be referred to as a spatial domain reception filter (spatial domain reception filter), a receiving-end spatial domain transmission filter, a spatial domain transmission filter used for reception, or another name. In some other cases, the transmit beam may also be referred to as a spatial domain transmission parameter (spatial domain transmission parameter). Correspondingly, the receive beam may also be referred to as a spatial domain reception parameter (spatial domain reception parameter). For ease of understanding, in embodiments of this application, the transmit beam or receive beam is mainly used as an example for description. The transmit beam may be interchanged with the spatial domain transmission filter or spatial domain transmission parameter, and the receive beam may be interchanged with the spatial domain reception filter or spatial domain reception parameter.

Introducing the beam-based transmission manner into a sidelink system has many advantages. However, how to specifically implement a beam-related operation in the sidelink system has not been discussed yet in a current protocol.

With reference to a plurality of embodiments, the following describes problems required to be considered in implementing beam-related operations in a sidelink system and corresponding solutions. It should be understood that, the following description is mainly from a perspective of a first terminal device and a second terminal device. The first terminal device refers to a transmitting end of a beam, and the second terminal device refers to a receiving end of a beam. The first terminal device and/or the second terminal device may be the terminal device described in any one of the foregoing embodiments, for example, may be the terminal device 120 mentioned above.

**Embodiment 1: Transmission of a CSI-RS**

In a sidelink system, beam-based transmission may be implemented by transmitting a CSI-RS.

If beam-based transmission is implemented based on the CSI-RS, a process of determining a transmit beam of a first terminal device may be performed in the following manner. First, the first terminal device transmits CSI-RSs in turn by using different transmit beams. Correspondingly, a second terminal device may receive, by using a same receive beam, the plurality of CSI-RSs transmitted by the first terminal device, and measure the received CSI-RSs. Then, the second terminal device may select an optimal CSI-RS, and then feed back CSI-RS resource information (such as a CSI-RS resource index) of the optimal CSI-RS to the first terminal device. In other words, a transmit beam corresponding to the CSI-RS resource information is an optimal transmit beam selected by the second terminal device. It may be learned from the foregoing process that, in a process of determining a transmit beam, the first terminal device is required to transmit a plurality of CSI-RSs.

If beam-based transmission is implemented based on the CSI-RS, a process of determining a receive beam of the second terminal device may be performed in the following manner. First, the first terminal device may transmit a plurality of CSI-RSs by using a same transmit beam. Optionally, the first terminal device may transmit the CSI-RSs by using a transmit beam that is optimal relative to the second terminal device. The second terminal device may receive, in turn by using different receive beams, the CSI-RSs transmitted by the first terminal device, and measure the received CSI-RSs. Then, the second terminal device may select an optimal receive beam from the receive beams based on measurement results of the received CSI-RSs. Then, when the first terminal device performs sidelink transmission by using the optimal transmit beam, the second terminal device may perform sidelink reception by using the optimal receive beam. Optionally, the first terminal device may execute the foregoing process for different transmit beams, so that optimal receive beams corresponding to respective transmit beams may be separately determined. Therefore, when the first terminal device performs sidelink transmission, the first terminal device may indicate, to the second terminal device, a transmit beam used for sidelink transmission. Correspondingly, the second terminal device may determine an optimal receive beam corresponding to the current transmit beam of the first terminal device, and perform sidelink reception by using the optimal receive beam. It may be learned from the foregoing process that, in a process of determining a receive beam, the first terminal device is required to transmit a plurality of CSI-RSs.

In some implementations, a CSI-RS transmission mechanism may follow the transmission manner described in the foregoing section "Sidelink CSI-RS", that is, one CSI-RS is transmitted in one slot, and the CSI-RS is transmitted simultaneously with a PSSCH. However, in the CSI-RS transmission mechanism, only one CSI-RS can be transmitted in one slot, and the CSI-RS and the PSSCH are transmitted simultaneously. When a plurality of CSI-RS are required to be transmitted, the CSI-RS transmission mechanism causes low transmission efficiency. This is because in a beam selection process, an optimal transmit or receive beam has not been determined by the first terminal device and the second terminal device, and the two terminal devices will not perform normal data transmission. Thus, in the beam selection process, a PSSCH that is transmitted generally does not carry normal sidelink data, but fills only a redundant bit, a padding bit, or the like, causing low transmission efficiency.

In addition, when the first terminal device works in mode 2, the first terminal device determines a transmission resource based on listening. In a process of listening to and selecting a transmission resource, mechanisms such as re-evaluation (re-evaluation) and pre-emption (pre-emption) may cause the first terminal device to perform resource reselection, thus causing the second terminal device to fail to accurately learn a resource for transmitting a CSI-RS by the first terminal device. In the process of determining a receive beam, the second terminal device is required to separately receive, by using different beams, a CSI-RS resource transmitted by the first terminal device. Thus, the second terminal device is required to accurately learn a time domain position of the CSI-RS resource transmitted by the first terminal device. However, it is difficult to achieve this objective based on the existing CSI-RS transmission mechanism.

Therefore, in some implementations, the CSI-RS transmission mechanism may use the following transmission mechanism: The first terminal device transmits one CSI-RS in one slot, and the CSI-RS occupies a second-to-last symbol and a third-to-last symbol that are available for sidelink transmission in the slot. That is to say, the CSI-RS may be transmitted in a transmission manner similar to a time domain structure of a PSFCH in an NR SL system.

In some implementations, the CSI-RS may not be transmitted with a PSCCH/PSSCH of the first terminal device, that is, the CSI-RS may not be transmitted with the PSCCH/PSSCH in a same slot.

In some implementations, a second-to-last symbol available for sidelink transmission in one slot may be used for carrying the CSI-RS, and a third-to-last time domain symbol available for sidelink transmission in one slot may be used for AGC adjustment performed by the second terminal device.

In some implementations, data transmitted in a second-to-last symbol available for sidelink transmission in one slot is the same as that transmitted in a third-to-last symbol available for sidelink transmission in the slot.

In some implementations, a next symbol of a last symbol of symbols available for transmitting the CSI-RS in a slot may be used for a GP symbol.

In some implementations, a previous symbol of a first symbol of symbols available for transmitting the CSI-RS in one slot may be a GP symbol.

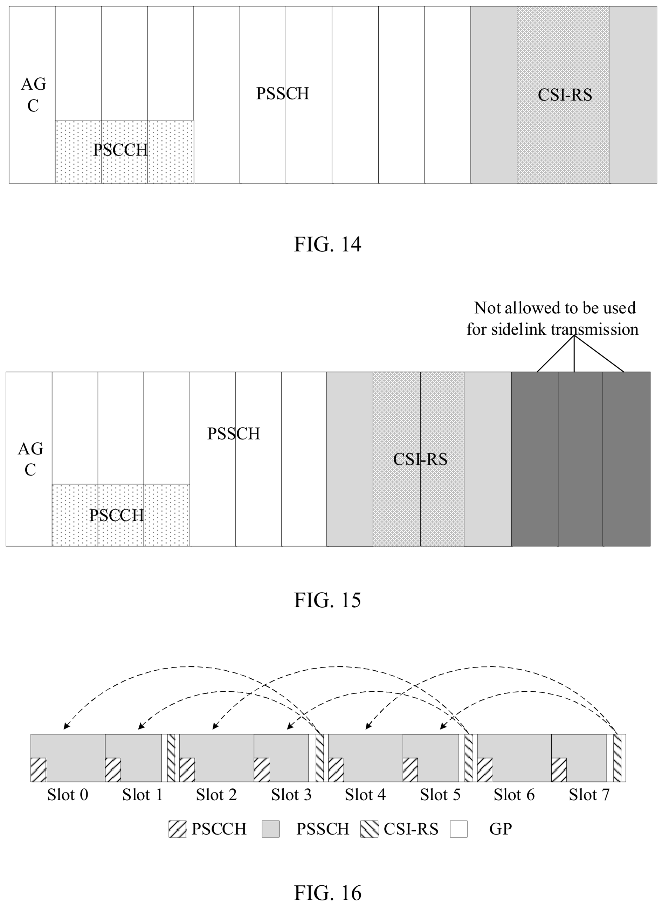

In the slot shown in FIG. 14, a CSI-RS is carried in a second-to-last symbol and a third-to-last symbol of the slot, and symbols located before and after the CSI-RS are GP symbols. The slot further includes a PSCCH/PSSCH, and a terminal device that transmits the PSCCH/PSSCH may be different from a terminal device that transmits the CSI-RS. It should be understood that, FIG. 14 only schematically shows a slot structure including the CSI-RS, and a relationship between the CSI-RS and the PSCCH and the PSSCH in frequency domain is not specifically specified.

When only part of symbols of one slot are allowed to be used for sidelink transmission, a CSI-RS may occupy a second-to-last symbol and a third-to-last symbol of symbols available for sidelink transmission. As shown in FIG. 15, the last three symbols in one slot may not be allowed to be used for sidelink transmission, and remaining 11 symbols are allowed to be used for sidelink transmission. In this case, a CSI-RS may occupy a second-to-last symbol and a third-to-last symbol of the 11 symbols.

**Embodiment 2: Configuration of a CSI-RS**

In some implementations, a transmission resource of a CSI-RS is determined based on configuration information. For ease of description, the configuration information is hereinafter referred to as configuration information A.

In some implementations, the configuration information A may include one or more of resource pool configuration information, sidelink BWP configuration information, or PC5-RRC signalling.

In some implementations, the configuration information A may include CSI-RS resource set configuration information.

In some implementations, the CSI-RS resource set configuration information includes a "repetition (repetition)" parameter. For example, the resource pool configuration information, the sidelink BWP configuration information, or the PC5-RRC signalling includes one or more of the following: a first CSI-RS resource set in which at least one "repetition" parameter is set to "off (off)", or a second CSI-RS resource set in which at least one "repetition" parameter is set to "on (on)". The first CSI-RS resource set may be used for determining a transmit beam, and the second CSI-RS resource set may be used for determining a receive beam.

In some implementations, the resource pool configuration information, the sidelink BWP configuration information, or the PC5-RRC signalling includes CSI report configuration information (for example, CSI-ReportConfig). The CSI report configuration information may be used to configure a report quantity (reportQuantity) (or a feedback type). The report quantity (or the feedback type) may include, for example, one or more of the following: 'cri' (CSI-RS resource indicator (CSI-RS resource indicator)), 'cri-RSRP' (CSI-RS resource indicator and reference signal received power (reference signal receiving power, RSRP)), 'cri-SINR' (CSI-RS resource indicator and signal to interference plus noise ratio (signal to interference plus noise ratio, SINR)), 'none' (not report), slot indication information, slot indication information and RSRP, or slot indication information and SINR. The slot indication information mentioned herein may be used to determine a time domain unit in which a selected CSI-RS resource is located.

In some implementations, the CSI-RS resource set is associated with one or more report quantities.

In some implementations, a CSI-RS resource in the CSI-RS resource set is associated with one or more report quantities.

For example, one or more CSI-RS resource sets (CSI-RS-ResourceSet) are configured in the resource pool configuration information, and each resource set configuration information includes a CSI-RS resource set identifier (CSI-RS-ResourceSetId), a CSI-RS resource configuration information (CSI-RS-Resource), or a "repetition" parameter configuration information. In addition, one or more pieces of CSI report configuration information are further configured in the resource pool configuration information, where each piece of the CSI report configuration information includes a parameter such as a CSI report configuration identifier (CSI-ReportConfigId) or a report quantity. Further, the CSI report configuration information may include the CSI-RS resource set identifier, or the CSI-RS resource set configuration information may include the CSI report configuration identifier. The CSI-RS resource set may be associated with the CSI report quantity based on the inclusion relationship between the CSI report configuration information and the CSI-RS resource set identifier.

It should be noted that, a process of determining a transmit beam or a receive beam may not be described in a standard. The process of determining a transmit beam or a receive beam may be embodied in that, a first terminal device transmits indication information to a second terminal device to indicate CSI-RS resource set information to be transmitted, and a purpose of currently transmitting a CSI-RS resource is indicated based on a parameter related to the CSI-RS resource set information.

For example, two CSI-RS resource sets are configured in the resource pool configuration information, a "repetition" parameter of a 1st CSI-RS resource set is set to "off", and a "repetition" parameter of a 2nd CSI-RS resource set is set to "on". When a first terminal device transmits indication information to a second terminal device to indicate that a CSI-RS resource set whose "repetition" parameter is "off" is used, it may be assumed by the second terminal device that the first terminal device transmits a CSI-RS resource by using different transmit beams, or it may be assumed by the second terminal device that the first terminal device does not transmit a CSI-RS resource by using a same transmit beam. In this case, the second terminal device may measure CSI-RSs transmitted by the first terminal device, and report index information and/or a measurement result of a selected CSI-RS resource to the first terminal device, so that the first terminal device determines a transmit beam. Alternatively, when the first terminal device transmits indication information to the second terminal device to indicate that a CSI-RS resource set whose "repetition" parameter is "on" is used, it may be assumed by the second terminal device that the first terminal device transmits CSI-RSs by using a same transmit beam. In this case, the second terminal device may receive, by using different receive beams, the CSI-RSs transmitted by the first terminal device, and measure the received CSI-RSs. The second terminal device may select a receive beam based on measurement results. After the receive beam is selected, the second terminal device generally does not need to report the selected receive beam to the first terminal device. It should be noted that, there may be a plurality of manners in which the first terminal device transmits the indication information to the second terminal device to indicate a value (namely, "off" or "on") of the "repetition" parameter. For example, SCI transmitted by the first terminal device includes an information field, and the information field includes 1-bit information. A value of the 1-bit information being 1 indicates that the CSI-RS resource set whose "repetition" parameter is "off" is used; a value of the 1-bit information being 0 indicates that the CSI-RS resource set whose "repetition" parameter is "on" is used. Alternatively, a value of the 1-bit information being "off" or "on" indicates that a corresponding CSI-RS resource set is used. For another example, the SCI includes an information field. The information field is used for indicating a used CSI-RS resource set identifier. Based on a value of a "repetition" parameter in CSI-RS resource set configuration information corresponding to the identifier, it may be determined whether the first terminal device triggers a process of determining a transmit beam of the first terminal device or a process of determining a receive beam of the second terminal device. In addition to being carried in the SCI, the indication information may also be carried in PC5-RRC or a medium access control control element (medium access control control element, MAC CE).

For example, two CSI-RS resource sets are configured in the resource pool configuration information, and a CSI report quantity associated with the CSI-RS resource set is configured. A CSI report quantity associated with a 1st CSI-RS resource set is 'cri-RSRP', and a CSI report quantity associated with a 2nd CSI-RS resource set is 'none'. When the first terminal device transmits indication information to the second terminal device to indicate that a CSI report quantity is 'cri-RSRP', it indicates that the first terminal device will transmit a CSI-RS resource in the 1st CSI-RS resource set. Alternatively, it may be assumed by the second terminal device that the first terminal device does not transmit CSI-RSs by using a same transmit beam. In this case, it may be assumed by the second terminal device that the first terminal device transmits the CSI-RSs by using different transmit beams. Therefore, the second terminal device may measure the CSI-RSs, and feed back an index and/or a measurement result of a selected CSI-RS resource, so that the first terminal device determines a transmit beam. Alternatively, when the first terminal device transmits indication information to the second terminal device to indicate that a CSI report quantity is 'none', it indicates that the first terminal device will transmit a CSI-RS resource in the 2nd CSI-RS resource set. In this case, it may be assumed by the second terminal device that the first terminal device transmits the CSI-RSs by using a same transmit beam. Therefore, the second terminal device may receive the CSI-RSs by using different receive beams. Then, the second terminal device may measure a received CSI-RS, and select a receive beam based on a measurement result, so as to implement a process of selecting a receive beam.

In some implementations, the configuration information A may include CSI-RS resource set identifier information. The CSI-RS resource set identifier information may be used for identifying a CSI-RS resource set.

In some implementations, the configuration information A may include CSI-RS resource identifier information. The CSI-RS resource identifier information may be used for identifying a CSI-RS resource. One CSI-RS resource set may include K (K >= 1) CSI-RS resources. Each CSI-RS resource in the CSI-RS resource set may be identified by using the CSI-RS resource identifier information.

In some implementations, the configuration information A may include a CSI report configuration identifier. The CSI report configuration identifier may be used to indicate a CSI report quantity. Further, the CSI report configuration identifier may be used to associate a CSI-RS resource set or a CSI-RS resource with the CSI report quantity.

In some implementations, the configuration information A may include a "repetition" parameter. For example, CSI-RS resource set configuration information includes a "repetition" parameter, and a value of the parameter is a first value (namely, off) or a second value (namely, on). When a CSI-RS resource set whose "repetition" parameter is the first value is used, the second terminal device may consider that the first terminal device does not transmit CSI-RSs by using a same transmit beam. Alternatively, the second terminal device may consider that the first terminal device will transmit CSI-RSs by using different transmit beams. When a CSI-RS resource set whose "repetition" parameter is the second value is used, the second terminal device does not consider that the first terminal device will transmit CSI-RSs by using different transmit beams. Alternatively, the second terminal device considers that the first terminal device transmits CSI-RSs by using a same transmit beam. Optionally, the "repetition" parameter is included in the CSI-RS resource set only when a report quantity (or a feedback type) related to the CSI-RS resource set is set to RSRP (for example, 'cri-RSRP', or slot indication information and RSRP), SINR (for example, 'cri-SINR', or slot indication information and SINR), slot indication information, or none ('none').

In some implementations, the configuration information A may include QCL type indication information. The QCL type indication information may be used for indicating a QCL type between CSI-RS resources in the CSI-RS resource set. For example, a possible value of the QCL type indication information may include: {QCL-TypeA, QCL-TypeB, QCL-TypeC, QCL-TypeD}. When a value of the QCL type indication information is QCL-TypeD, it may indicate that there is a QCL-TypeD relationship between all CSI-RS resources in the CSI-RS resource set. Alternatively, the QCL type indication information may be used for indicating whether the QCL type of a CSI-RS resource in the CSI-RS resource set is QCL-TypeD. The value of the QCL type indication information may be TRUE or FALSE.

In some implementations, the configuration information A may include a purpose (purpose). The parameter may be used for indicating whether the CSI-RS resource is used in one or more of the following: beam failure detection, determining a transmit beam, determining a receive beam, new beam selection (new beam selection), CSI measurement or report, or radio link failure (radio link failure, RLF) detection.

In some implementations, the configuration information A may include a resource type (resource type). This parameter may be used for indicating that the CSI-RS resource is aperiodic (aperiodic), semi-persistent (semi-persistent), or periodic (periodic). If the CSI-RS resource is periodic, after a terminal device receives a configured CSI-RS resource, the CSI-RS resource may be used. If the CSI-RS resource is semi-persistent, when the terminal device receives a configured CSI-RS resource and receives activation signalling (for example, the activation signalling is carried by using SCI or an MAC CE), the CSI-RS resource may be used.

In some implementations, the configuration information A may include time domain-related configuration information of the CSI-RS resource. For ease of description, the time domain-related configuration information of the CSI-RS resource is hereinafter referred to as configuration information B.

In some implementations, the configuration information B may include period indication information (also referred to as a period parameter). The period indication information may be used for determining a period of a CSI-RS resource. A period of a CSI resource may be represented by a quantity of slots. For example, if a period value indicated by the period indication information is P, it may indicate there is one slot including a CSI-RS out of every P slots. For example, P = {1, 2, 4, 8} indicates that there is one slot including a CSI-RS out of every 1 slot or 2/4/8 slots.

In some implementations, the configuration information B may include slot offset indication information. The slot offset indication information may be used for determining a slot offset of a CSI-RS resource. The slot offset value may be represented by a quantity of slots. The slot offset value may represent a slot offset of a first slot including the CSI-RS resource in one system frame number (system frame number, SFN) period or direct frame number (direct frame number, DFN) period relative to a first slot in one SFN period or DFN period. Alternatively, the slot offset value may represent a slot offset of a first slot including the CSI-RS resource in one SFN or DFN period relative to a first slot in a resource pool. A quantity of slots included in one SFN period or DFN period may be $10240 \times 2^{\mu}$. A parameter $\mu$ may be determined based on a subcarrier spacing, as shown in Table 1 below.

Table 1

| $\mu$ | $\Delta f = 2^{\mu} \cdot 15$ [kHz] |
|-------|-------------------------------------|
| 0     | 15                                  |
| 1     | 30                                  |
| 2     | 60                                  |

(continued)

| $\mu$ | $\Delta f = 2^{\mu} \cdot 15$ [kHz] |
|---|---|
| 3 | 120 |

For example, if the slot offset indicated by the slot offset indication information is 2 slots, when P = 4, there is one slot including a CSI-RS resource out of every four slots, and in one SFN period, a first slot including the CSI-RS resource is located at slot 2, where P denotes a period value of the CSI-RS resource.

Optionally, if the slot offset indication information is not included in configuration information related to the CSI-RS resource, when k mod P = 0, a terminal device expects that a slot $t_k'^{SL}$ includes the CSI-RS resource or a CSI-RS transmission opportunity, where $t_k'^{SL}(0 \le k < T'_{max})$ indicates a slot in a resource pool, $T'_{max}$ indicates a total quantity of slots in 10240 ms that belong to the resource pool, and P indicates the period value of the CSI-RS resource.

In some implementations, the configuration information B may include a minimum time interval. The minimum time interval may be represented by a slot quantity. This parameter may represent a minimum time interval between a 1st CSI-RS resource and its associated SCI, PSCCH, MAC CE, or indication information. The indication information mentioned herein may be used for indicating that the first terminal device will transmit a CSI-RS resource. Alternatively, the indication information may be used for activating a configured CSI-RS resource, and SCI, a PSCCH, or a MAC CE may be used for triggering transmission of a CSI-RS.

For example, a value of the minimum time interval is a, which may indicate that a first CSI-RS is located at a first slot following a slot n+a and including the CSI-RS resource, or may indicate that a slot of a first CSI-RS is not earlier than a slot following a slot n+a and including the CSI-RS resource. A value of the a mentioned herein may be determined according to protocol predefinition, pre-configuration information, network device configuration information, PC5-RRC signalling, indication information of the first terminal device, or indication information of the second terminal device. The indication information transmitted by the first terminal device may be carried by using, for example, SCI, a MAC CE, or PC5-RRC signalling. The indication information transmitted by the second terminal device may be carried by using, for example, SCI, a MAC CE, or PC5-RRC signalling. Slot n may denote a slot in which SCI, a PSCCH, a MAC CE, or indication information associated with the CSI-RS resource is located.

For example, the minimum time interval a = 2, the first terminal device transmits indication information in a slot n, and the indication information indicates that the first terminal device will transmit a CSI-RS. In this case, a slot of the CSI-RS may be slot n+2, or may be a first slot, including a CSI-RS resource, following the slot n+2 in a resource pool.

As shown in FIG. 16, a period of a CSI-RS resource is two slots, and a slot offset of the CSI-RS resource is one slot, and a minimum time interval a = 2. When indication information transmitted by the first terminal device in a slot 0 or a slot 1 indicates that the first terminal device will transmit CSI-RS, the 1st CSI-RS resource is located in a slot 3. Similarly, if SCI transmitted by the first terminal device in a slot 2 or the slot 3 indicates that a CSI-RS will be transmitted, the 1st CSI-RS resource is located in a slot 5, and the like.

Optionally, the minimum time interval represents a minimum time interval between a 1st CSI-RS resource in at least one CSI-RS resource associated with the indication information and a slot in which the indication information is located.

In some implementations, the configuration information B may include a time interval of two adjacent CSI-RS resources transmitted by the first terminal device. When the first terminal device indicates that a CSI-RS will be transmitted by using SCI (or indication information), in a process of determining a transmit beam or a receive beam, the first terminal device transmits a plurality of CSI-RSs. A time domain position of a 1st CSI-RS resource may be determined by using indication information of the SCI. Further, a time interval between two adjacent CSI-RS resources may be determined based on the parameter, that is, time domain positions of a plurality of CSI-RS resources may be determined.

Optionally, a time interval T1 of two adjacent CSI-RS resources transmitted by the first terminal device may be represented by a quantity of slots, or may be represented by a quantity of periods of CSI-RS resources. For example, T1 = {2, 4, 6, 8} slots. Alternatively, if a period P of the CSI-RS resources is 2 slots, then T1 = {1, 2, 3, 4} CSI-RS resource periods.

For example, a time interval T1 of two adjacent CSI-RS resources transmitted by the first terminal device is 4 slots, and SCI transmitted in a slot n indicates that four CSI-RS resources will be transmitted. In this case, the 1st CSI-RS resource is located in slot n+2. Further, with reference to the time interval T1, it may be determined that slots of the four CSI-RS resources are respectively slot n+2, slot n+6, slot n+10, and slot n+14.

Optionally, if the parameter (namely, the time interval of two adjacent CSI-RS resources transmitted by the first terminal device) is not configured, it may indicate that the time interval of adjacent CSI-RS resources is one CSI-RS period, that is, the first terminal device transmits CSI-RS resources in continuous CSI-RS resource periods respectively.

For example, the parameter is not configured for the first terminal device, a period of the CSI-RS resource is two slots, and SCI transmitted in the slot n indicates that four CSI-RS resources will be transmitted. In this case, it may be

determined that the 1st CSI-RS resource is located in the slot n+2. Further, with reference to the parameter (because the parameter is not configured for the first terminal device, a value of the parameter is one CSI-RS period), it may be determined that slots of the four CSI-RS resources are respectively slot n+2, slot n+4, slot n+6, and slot n+8.

Optionally, in time domain-related configuration information in CSI-RS resources, a quantity of slots may be a quantity of logical slots in a resource pool.

In some implementations, the configuration information A may include frequency domain-related configuration information of the CSI-RS resources. For ease of description, the frequency domain-related configuration information of the CSI-RS resources is hereinafter referred to as configuration information C.

In some implementations, the configuration information C may include frequency domain resource indication information of the CSI-RS resources. The frequency domain resource indication information may include information for indicating a PRB that may be used for transmitting a CSI-RS. For example, the PRB that may be used for transmitting a CSI-RS may be indicated in the following manner 1 or manner 2.

**Manner 1: An indication manner based on a bitmap**

For example, each bit in the bitmap may correspond to one PRB or one subcarrier. A length of the bitmap may be determined based on one or more of the following: a sidelink carrier, a sidelink BWP, or a frequency domain range of a current resource pool.

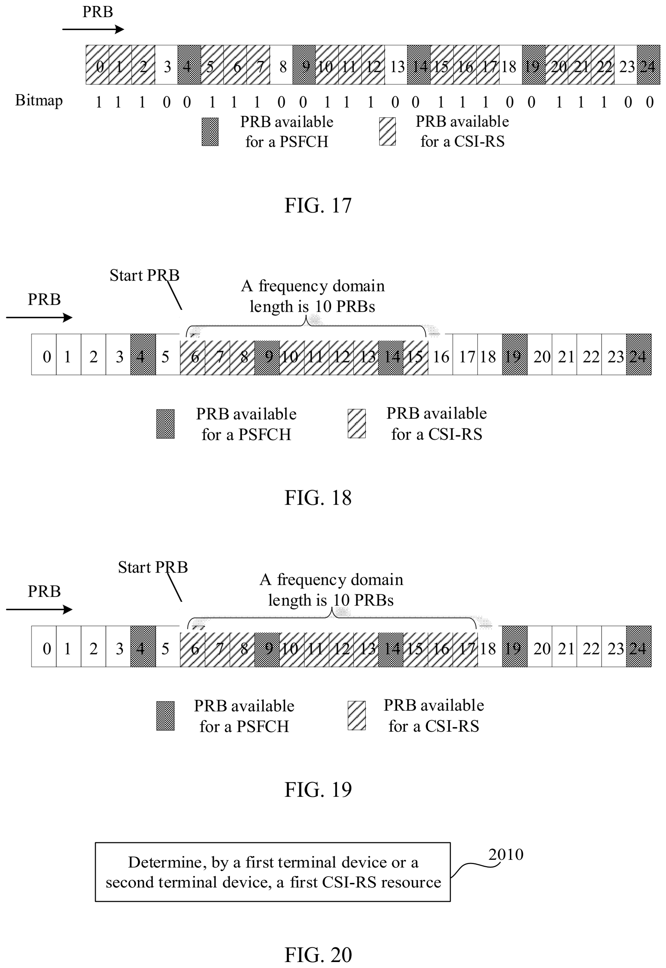

As shown in FIG. 17, a sidelink system may include 25 PRBs, where PRBs 4, 9, 14, 19, and 24 have been allocated for PSFCH transmission. PRBs, namely, PRBs 0, 1, 2, 5, 6, 7, 10, 11, 12, 15, 16, 17, 20, 21, and 22 in FIG. 17, available for transmitting CSI-RSs may be indicated by using a bitmap whose length is 25.

**Manner 2: An indication manner based on a frequency domain start position and a frequency domain length**

For example, a frequency domain start position and a frequency domain length may be separately indicated, or a frequency domain start position and a frequency domain length may be jointly indicated. For example, a resource indicator value (resource indicator value, RIV) may be determined based on the frequency domain start position and the frequency domain length, the RIV is included in the configuration information C, and a corresponding frequency domain start position and frequency domain length are determined based on the RIV value.

Optionally, the frequency domain start position may represent a frequency domain offset relative to a first frequency domain position. The first frequency domain position may be a frequency domain start position of a sidelink BWP or a frequency domain start position of a resource pool.

Optionally, a frequency domain end position may be determined based on the frequency domain start position and the frequency domain length. If a PRB for transmitting a PSFCH is included between the frequency domain start position and the frequency domain end position, the PRB may not be used for transmitting a CSI-RS. In other words, a PRB configured to transmit a PSFCH may not be included in PRBs used for transmitting CSI-RSs.

As shown in FIG. 18, a sidelink system may include 25 PRBs, where PRBs 4, 9, 14, 19, and 24 have been allocated for PSFCH transmission. In the 25 PRBs, a start PRB used for transmitting a CSI-RS is PRB 6, and a frequency domain length is 10 PRBs. Therefore, a PRB range for transmitting a CSI-RS may be determined to be PRB 6 to PRB 15. However, in the PRB 6 to PRB 15, the PRB 9 and the PRB 14 have already been used for PSFCH transmission, and thus the two PRBs cannot be used for transmitting the CSI-RS. Finally, PRBs that can be used for transmitting the CSI-RS include PRBs whose indexes are {6, 7, 8, 10, 11, 12, 13, 15}.

Alternatively, optionally, the frequency domain length may indicate a quantity of total PRBs used for transmitting the CSI-RS. If a PRB used for transmitting the PSFCH is encountered in a process of determining a CSI-RS frequency domain resource, the PRB may be skipped, and whether a next PRB is available for transmitting the CSI-RS is determined. This process is repeated until a quantity of PRBs determined is equal to the quantity of PRBs indicated by the frequency domain length.

As shown in FIG. 19, a sidelink system may include 25 PRBs, where PRBs 4, 9, 14, 19, and 24 have been allocated for PSFCH transmission. In the 25 PRBs, a start PRB used for transmitting a CSI-RS is PRB 6, and a frequency domain length is 10 PRBs. PRBs that may be used for transmitting the CSI-RS are determined from the PRB 6. Because the PRB 9 and the PRB 14 have already been allocated for PSFCH transmission, the two PRBs cannot be used for transmitting the CSI-RS. The two PRBs can be skipped, and whether other PRBs are available is further determined. Based on the foregoing manner, the finally determined 10 PRBs that may be used for transmitting the CSI-RS include PRBs whose indexes are {6, 7, 8, 10, 11, 12, 13, 15, 16, 17}.

In some implementations, the configuration information C may include information indicating a frequency domain resource included in each CSI-RS resource or information indicating a minimum frequency domain resource size included in each CSI-RS resource. The information may be required to be included because when a CSI-RS and a PSCCH/PSSCH are transmitted together, a frequency domain size of a CSI-RS resource may be determined based on a frequency domain size of a PSSCH associated with the CSI-RS resource. If the CSI-RS and the PSCCH/PSSCH are not transmitted together (such as the transmitting manners shown in FIG. 14 and FIG. 15), a size of a frequency domain resource for transmitting the CSI-RS is required to be additionally determined.

Optionally, the configuration information C may include indication information. The indication information may be used for indicating a quantity of PRBs (or sub-channels) included in a CSI-RS frequency domain resource. Alternatively, the indication information may indicate a quantity of minimum PRBs (or sub-channels) included in a CSI-RS frequency domain resource. For example, the indication information may indicate a quantity of PRBs. If CSI-RS resource configuration information includes the indication information, and the indication information indicates 12 PRBs, it indicates that each CSI-RS resource occupies 12 PRBs.

Optionally, frequency domain resources that may be included in each CSI-RS resource are N sub-channels (the sub-channel is a granularity for PSSCH resource allocation). N may be greater than or equal to 1, for example, N = 1.

Optionally, a size of a configured frequency domain resource that may be used for transmitting the CSI-RS should be divisible by a size of frequency domain resources included in each CSI-RS, so that the configured frequency domain resource that may be used for transmitting the CSI-RS may transmit an integer number of CSI-RSs, and the frequency domain resources included in respective CSI-RSs have a same size.

In some implementations, the configuration information C may include an interval between adjacent PRBs of the CSI-RS resource. Optionally, the CSI-RS may not be mapped to all PRBs in the frequency domain resources included in the CSI-RS resource, but an interval between adjacent PRBs for mapping a CSI-RS is indicated by using configuration information. For example, if a first PRB for mapping the CSI-RS is PRB 2, and an interval between adjacent PRBs for mapping the CSI-RS is 4 PRBs, the CSI-RS may be mapped to PRB 2, PRB 6, PRB 10, PRB 14, and the like. Optionally, if the parameter (namely, the interval between adjacent PRBs of the CSI-RS resource) is not configured, the CSI-RS may be continuously mapped to PRBs that may be used for transmitting the CSI-RS.

In some implementations, the configuration information C may include indication information for determining a frequency domain position of a CSI-RS resource in one PRB. The indication information may be used for indicating specific REs used for transmitting the CSI-RS in one PRB. For example, REs that may be used for transmitting the CSI-RS in one PRB may be indicated in a form of a bitmap.

In some implementations, the configuration information C may include a CSI-RS density. This parameter may be used for indicating a quantity of REs occupied by a CSI-RS for each antenna port in each PRB. For example, if the CSI-RS density is 2, it may indicate that in each PRB, the CSI-RS for each antenna port occupies two REs.

When the CSI-RS density is less than 1, the configuration information C may further include PRB information used for mapping the CSI-RS resource. For example, the CSI-RS density is 0.5, that is, each antenna port in every two PRBs occupies one RE. Further, the configuration information C may further include indication information that indicates PRB information for mapping the CSI-RS in every two PRBs. For example, the indication information may indicate mapping the CSI-RS on an odd (or even) PRBs.

In some implementations, the configuration information A may include code domain-related configuration information of a CSI-RS resource. For ease of description, the code domain-related configuration information of the CSI-RS resource is hereinafter referred to as configuration information D.

In some implementations, the configuration information D may include: a quantity of CSI-RS resources that may be multiplexed in a code division multiplexing mode. In other words, a plurality of CSI-RS resources may be multiplexed in a code division multiplexing (code division multiplexing, CDM) manner, and this parameter may be used for indicating a quantity of CSI-RS resources that may be multiplexed in a CDM mode for a same time-frequency resource.

In some implementations, the configuration information D may include a code division multiplexing type. This parameter may be used for determining a pattern of the CSI-RS, that is, a pattern of the CSI-RS in one PRB. In other words, the plurality of CSI-RSs may be multiplexed in one PRB in a CDM or frequency division multiplexing (frequency division multiplexing, FDM) manner, and a multiplexing manner and/or a multiplexing pattern of the plurality of CSI-RSs may be determined by using the parameter.

In some implementations, the configuration information D may include parameter indication information used for generating a CSI-RS sequence. For example, the parameter may be used for determining an initial sequence for generating a CSI-RS sequence.

For example, the CSI-RS sequence may be generated as follows:

$$r(m) = \frac{1}{\sqrt{2}}(1 - 2 \cdot c(2m)) + j\frac{1}{\sqrt{2}}(1 - 2 \cdot c(2m + 1))$$

Herein c(n) denotes a pseudorandom sequence, and c(n) may be determined by using the following formulas:

$$c(n) = \big(x_1(n + N_c) + x_2(n + N_c)\big)mod2$$

$$x_1(n + 31) = \big(x_1(n + 3) + x_1(n)\big)mod2$$

$$x_2(n + 31) = \big(x_2(n + 3) + x_2(n + 2) + x_2(n + 1) + x_2(n)\big)mod2$$

Herein $N_C$ = 1600, an initialization parameter of a first m sequence $x_1(n)$ is $x_1(0)$ = 1, $x_1(n)$ = 0, $n$ = 1,2,...,30, and a second m sequence $x_2(n)$ may be represented as $c_{\text{init}} = \sum_{i=0}^{30} x_2(i) \cdot 2^i$, where

$$c_{\text{init}} = \big(2^{10}\big(N_{\text{symb}}^{\text{slot}} n_{\text{s,f}}^{\mu} + l + 1\big)(2n_{\text{ID}} + 1) + n_{\text{ID}}\big)mod2^{31}$$

Herein $n_{\text{s,f}}^{\mu}$ denotes a slot number in a wireless frame, $l$ denotes an OFDM sequence number in a slot, and a value of $n_{\text{ID}}$ is determined by at least one of the following: a higher layer configuration parameter, a CSI-RS resource set identifier, a CSI-RS resource identifier, a cyclic redundancy check (cyclic redundancy check, CRC) sequence generated based on SCI, source identifier information, or destination identifier information. The higher layer configuration parameter may refer to a scrambling identity (ScramblingID). The source identifier information may be source identifier information carried in SCI. The destination identifier information may be destination identifier information carried in SCI. For example, the destination identifier information may be an identifier of the second terminal device, a group identifier of a terminal device group in which the second terminal device is located, an intra-group identifier of the second terminal device, or the like.

It should be understood that, various types of information or parameters described above may be included in same configuration information, or may be included in different configuration information.

**Embodiment 3: Determination of a CSI-RS resource**

When a beam-based transmission manner is used, in many scenarios, at least one of a first terminal device or a second terminal device is required to determine a CSI-RS resource.

For example, a transmit beam of the first terminal device is generally determined in the following manner. First, the first terminal device transmits CSI-RSs in turn by using different transmit beams. Correspondingly, the second terminal device may receive, by using a same receive beam, the plurality of CSI-RSs transmitted by the first terminal device, and measure the received CSI-RSs. Then, the second terminal device may select an optimal CSI-RS, and then feed back corresponding CSI-RS resource information (such as a CSI-RS resource index) of the optimal CSI-RS to the first terminal device. In other words, a transmit beam corresponding to the CSI-RS resource information is an optimal transmit beam for the second terminal device.

Optionally, the second terminal device may alternatively report or feed back CSI-RS resource information of N CSI-RSs (N may be greater than or equal to 1) and corresponding measurement results to the first terminal device. Correspondingly, the first terminal device may select one CSI-RS from the N CSI-RS resources, and perform sidelink transmission by using a transmit beam corresponding to the selected CSI-RS.

It may be learned from the foregoing process that, in a process of determining a transmit beam, the first terminal device is required to transmit a plurality of CSI-RSs. Therefore, in the process of determining a transmit beam, at least one of the first terminal device or the second terminal device is required to determine a CSI-RS resource.

For another example, in a process of determining an optimal receive beam of the second terminal device, the following manner is generally used. First, the first terminal device may transmit a plurality of CSI-RSs by using a same transmit beam. Optionally, the first terminal device may transmit the CSI-RSs by using a transmit beam that is optimal relative to the second terminal device. The second terminal device may receive, in turn by using different receive beams, the CSI-RSs transmitted by the first terminal device, and measure the received CSI-RSs. Then, the second terminal device may select an optimal receive beam from the receive beams based on measurement results of the received CSI-RSs. Then, when the first terminal device performs sidelink transmission by using the optimal transmit beam, the second terminal device may perform sidelink reception by using the optimal receive beam. Optionally, the first terminal device may execute the foregoing process for different transmit beams, so that optimal receive beams corresponding to respective transmit beams may be separately determined. Therefore, when the first terminal device performs sidelink transmission, the first terminal device may indicate, to the second terminal device, a transmit beam used for sidelink transmission. Correspondingly, the second terminal device may determine an optimal receive beam corresponding to the current transmit beam of the first terminal device, and perform sidelink reception by using the optimal receive beam.

It may be learned from the foregoing process that, in a process of determining a receive beam, the first terminal device is required to transmit a plurality of CSI-RSs. Therefore, in the process of determining a receive beam, at least one of the first terminal device or the second terminal device is required to determine a CSI-RS resource.

For another example, in a beam failure detection process, a CSI-RS resource is required to be configured for the second terminal device, and the second terminal device may perform beam failure detection based on the CSI-RS resource. Therefore, in the beam failure detection process, at least one of the first terminal device or the second terminal device is required to determine a CSI-RS resource.

It may be learned that, in both the beam selection process and beam failure detection process, a CSI-RS resource is required to be determined.

With reference to FIG. 20, the following describes in detail a sidelink transmission method provided in embodiments of this application. The sidelink transmission method mainly provides a manner of determining a CSI-RS resource.

Referring to FIG. 20, in step S2010, a first terminal device or a second terminal device determines a first CSI-RS resource. The first CSI-RS resource may include one or more CSI-RS resources.

In some implementations, the first CSI-RS resource may be an aperiodic sidelink CSI-RS resource.

In some implementations, the first CSI-RS resource may be a periodic sidelink CSI-RS resource.

In some implementations, the first CSI-RS resource may be a semi-persistent (semi-persistent) sidelink CSI-RS resource. The semi-persistent sidelink CSI-RS may also be referred to as a semi-static sidelink CSI-RS. After the semi-persistent sidelink CSI-RS resource is activated, the CSI-RS resource is a periodic CSI-RS resource. Therefore, the following description related to a period of the CSI-RS may be applicable to a periodic sidelink CSI-RS resource, or may be applicable to a semi-persistent sidelink CSI-RS resource. In other words, "periodic" hereinafter may be replaced with "semi-persistent" or "semi-static". For example, the periodic CSI-RS transmission opportunity mentioned in Embodiment 3.1 may be replaced with a semi-persistent CSI-RS transmission opportunity or a semi-static CSI-RS transmission opportunity; and the periodic CSI-RS transmission opportunity set may be replaced with a semi-persistent or semi-static CSI-RS transmission opportunity set.

In some implementations, the first CSI-RS resource may be determined based on configuration information. The configuration information may be determined based on one or more of the following: protocol predefined information, pre-configuration information, network device configuration information, resource pool configuration information, sidelink BWP configuration information, PC5-RRC signalling, indication information transmitted by the first terminal device, or indication information transmitted by the second terminal device. For example, the configuration information may be any type of configuration information mentioned in Embodiment 2. For details, reference may be made to Embodiment 2. Details are not described herein again.

In some implementations, the first CSI-RS resource may be activated based on indication information (or activation information) transmitted by the first terminal device. The indication information may be carried by using SCI or a MAC CE.

In some implementations, one CSI-RS resource in the first CSI-RS resource occupies a second-to-last symbol and a third-to-last time domain symbol of time domain symbols that may be used for sidelink transmission in a slot. Further, in some implementations, data transmitted on the second-to-last symbol is the same as data transmitted on the third-to-last time domain symbol. For example, the first CSI-RS resource may use the slot structure that includes a CSI-RS in Embodiment 1. For details, reference may be made to related descriptions in FIG. 14 and FIG. 15. Details are not described herein again.

In some implementations, the first CSI-RS resource may be used for determining a transmit beam. For example, in a process of determining a transmit beam, the first terminal device may periodically transmit CSI-RSs based on the first CSI-RS resource, so that the second terminal device may measure the CSI-RSs that are periodically transmitted, and select a transmit beam.

In some implementations, the first CSI-RS resource may be used for determining an initial transmit beam. In other words, the first CSI-RS resource may be used for determining a transmit beam for a first time.

In some implementations, the first CSI-RS resource may be used for determining a new transmit beam after beam failure occurs.

In some implementations, CSI-RS resources for determining a transmit beam in the first CSI-RS resource are not corresponding to a same transmit beam. In other word, the CSI-RS resources for determining a transmit beam in the first CSI-RS resource correspond to different transmit beams.

In some implementations, the first CSI-RS resource may be used for determining a receive beam. For example, in a process of determining a receive beam, the first terminal device may periodically transmit CSI-RSs based on the first CSI-RS resource, so that the second terminal device may measure the CSI-RSs that are periodically transmitted, and select a receive beam.

In some implementations, CSI-RS resources for determining a receive beam in the first CSI-RS resource correspond to a same transmit beam.

In some implementations, the first CSI-RS resource may be used for beam failure detection. For example, in a beam failure detection process, the first terminal device may periodically transmit CSI-RSs based on the first CSI-RS resource, so that the second terminal device may measure the CSI-RSs that are periodically transmitted, so as to determine whether a beam failure occurs.

In some implementations, CSI-RS resources used for beam failure detection in the first CSI-RS resource correspond to a same transmit beam. Alternatively, the CSI-RS resources used for beam failure detection in the first CSI-RS resource may alternatively correspond to different transmit beams.

Further, in some implementations, the CSI-RS resources used for beam failure detection in the first CSI-RS resource correspond to a same first transmit beam, and the first transmit beam is a transmit beam that is of the first terminal device and that is used for sidelink data transmission.

In some implementations, the first CSI-RS resource may be associated with one or more of the following: a periodic CSI-RS transmission opportunity (for example, a transmission slot); or a periodic CSI-RS transmission opportunity set (for example, a transmission slot set). For example, the first CSI-RS resource may be associated with both the periodic CSI-RS transmission opportunity and the periodic CSI-RS transmission opportunity set. For a detailed description, refer to Embodiment 3.1 below. For another example, the first CSI-RS resource may be associated with only the periodic CSI-RS transmission opportunity. For a detailed description, refer to Embodiment 3.2 below.

**Embodiment 3.1: A first CSI-RS is associated with both the periodic CSI-RS transmission opportunity and the periodic CSI-RS transmission opportunity set.**

If a first CSI-RS resource is associated with both a periodic CSI-RS transmission opportunity and a periodic CSI-RS transmission opportunity set, period parameters corresponding to the first CSI-RS resource may include a parameter P1, a parameter P2, and a parameter N. The parameter P1 may be used for indicating a period value corresponding to the periodic CSI-RS transmission opportunity set. The parameter P2 may be used for indicating a period value corresponding to the periodic CSI-RS transmission opportunity. The parameter N may be used for indicating a quantity of CSI-RS transmission opportunities included in one CSI-RS transmission opportunity set in the periodic CSI-RS transmission opportunity set.

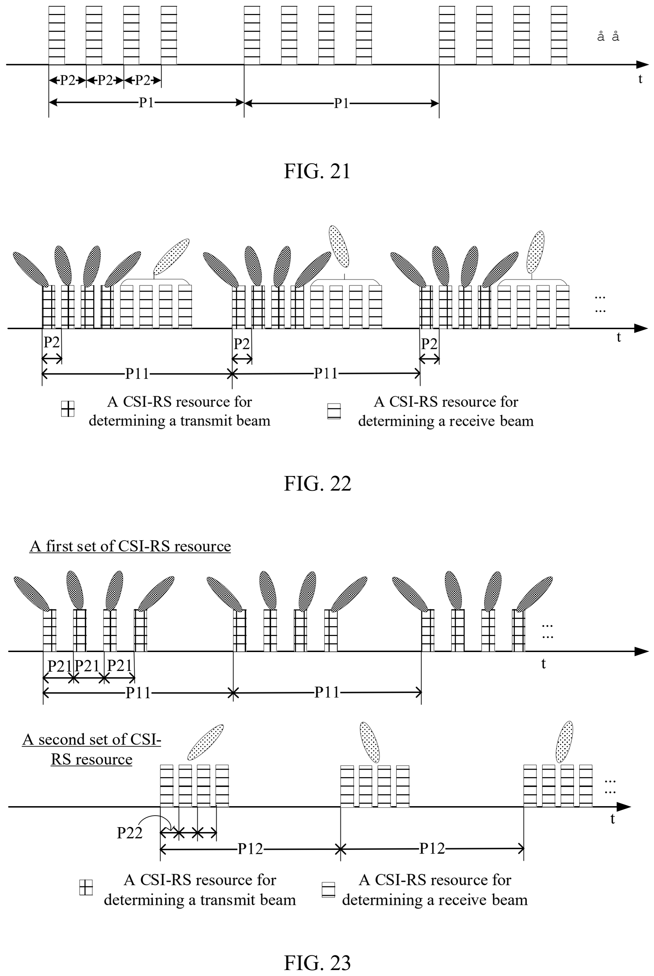

FIG. 21 shows an example in which a first CSI-RS resource is associated with both a CSI-RS transmission opportunity and a CSI-RS transmission opportunity set. Each pillar in FIG. 21 represents one CSI-RS transmission opportunity. It may be learned from FIG. 21 that a period of the CSI-RS transmission opportunity set associated with the first CSI-RS is P1. Each CSI-RS transmission opportunity set includes four CSI-RS transmission opportunities (that is, a value of the parameter N is 4). The four CSI-RS transmission opportunities are periodic, and a period value of the four CSI-RS transmission opportunities is P2.

In some implementations, the parameter P1 may be determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, a period value indicated by the parameter P1 may be represented by a slot quantity. The slot quantity may be, for example, a quantity of slots in a resource pool.

In some implementations, the parameter P2 may be determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, a period value indicated by the parameter P2 may be represented by a slot quantity. The slot quantity may be, for example, a quantity of slots in a resource pool.

In some implementations, the parameter N may be determined based on one or more of the following: protocol predefined information; pre-configuration information; network device configuration information; resource pool configuration information; PC5-RRC signalling; indication information transmitted by the first terminal device; indication information transmitted by the second terminal device; a quantity of transmit beams supported by the first terminal device; a quantity of receive beams supported by the second terminal device; or a quantity of CSI-RS resources used for beam failure detection.

In some implementations, if the first CSI-RS resource is used for determining a transmit beam, the parameter N may be determined based on the quantity of transmit beams supported by the first terminal device and/or the quantity of receive beams supported by the second terminal device. For example, if the first CSI-RS resource is used for determining a transmit beam, because the first terminal device is required to transmit CSI-RSs by using different transmit beams, the first CSI-RS resource may be determined based on the quantity of transmit beams supported by the first terminal device. For another example, if the first CSI-RS resource is used for determining an optimal beam pair between a transmit beam and a receive beam, because the first terminal device is required to transmit CSI-RSs by using different transmit beams, and the second terminal device is also required to receive the CSI-RSs by using different receive beams, the first CSI-RS resource may be determined based on the quantity of transmit beams supported by the first terminal device and the quantity of receive beams supported by the second terminal device.

For example, the parameter N may be determined based on a sum of the quantity of transmit beams supported by the first terminal device and the quantity of receive beams supported by the second terminal device. For example, the parameter N may be equal to the sum of the quantity of transmit beams supported by the first terminal device and the quantity of receive beams supported by the second terminal device.

For another example, the parameter N may be determined based on a product of the quantity of transmit beams supported by the first terminal device and the quantity of receive beams supported by the second terminal device. For example, the parameter N may be less than or equal to the product of the quantity of transmit beams supported by the first terminal device and the quantity of receive beams supported by the second terminal device.

In some implementations, if the first CSI-RS resource is used for determining a receive beam, the parameter N may be determined based on the quantity of transmit beams supported by the first terminal device and/or the quantity of receive beams supported by the second terminal device. For example, if the first CSI-RS resource is used for determining a receive beam, because the second terminal device is required to separately receive, by using different receive beams, CSI-RSs transmitted by the first terminal device, the first CSI-RS resource may be determined based on the quantity of receive beams supported by the second terminal device. For another example, if the first CSI-RS resource is used for determining an optimal beam pair between a transmit beam and a receive beam, because the first terminal device is required to transmit CSI-RSs by using different transmit beams, and the second terminal device is also required to receive the CSI-RSs by using different receive beams, the first CSI-RS resource may be determined based on the quantity of transmit beams supported by the first terminal device and the quantity of receive beams supported by the second terminal device.

In a specific example, the quantity of transmit beams supported by the first terminal device is 8, and the quantity of receive beams supported by the second terminal device is 4. When the first CSI-RS resource is used for determining a transmit beam, the first terminal device is required to transmit CSI-RSs by using different transmit beams respectively. Therefore, the parameter N may be determined based on a quantity of transmit beams supported by the first terminal device. For example, a value of the parameter N may be equal to 8.

In another specific example, the quantity of transmit beams supported by the first terminal device is 8, and the quantity of receive beams supported by the second terminal device is 4. When the first CSI-RS resource is used for determining a receive beam, the first terminal device transmits CSI-RSs by using a same transmit beam, and the second terminal device separately receives the CSI-RSs by using different receive beams. Therefore, the parameter N may be determined based on a quantity of receive beams supported by the second terminal device. For example, a value of the parameter N may be equal to 4.

In still another specific example, the quantity of transmit beams supported by the first terminal device is 8, and the quantity of receive beams supported by the second terminal device is 4. When the first CSI-RS resource is used for determining a transmit beam, because the quantity of transmit beams is 8, and the quantity of receive beams is 4, a total of 32 transmit beam and receive beam pairs are supported. To obtain an optimal transmit beam and receive beam pair, the first terminal device is required to transmit CSI-RSs 32 times, that is, one CSI-RS transmission opportunity set may include 32 CSI-RS resources (that is, a value of the parameter N may be equal to 32). For example, the first terminal device transmits CSI-RSs by using 8 transmit beams respectively, and the second terminal device separately receives the 8 CSI-RSs by using a first receive beam. the first terminal device transmits CSI-RSs by using 8 additional transmit beams respectively, and the second terminal device separately receives the 8 CSI-RSs by using a second receive beam; the first terminal device transmits CSI-RSs by using 8 additional transmit beams respectively, and the second terminal device separately receives the 8 CSI-RSs by using a third receive beam; and the first terminal device transmits CSI-RSs by using 8 additional transmit beams respectively, and the second terminal device separately receives the 8 CSI-RSs by using a fourth receive beam. Then, the second terminal device may select an optimal transmit beam based on 32 measurement results of CSI-RSs, and transmit the CSI-RS resource information corresponding to the optimal transmit beam to the first terminal device.

In some implementations, if the first CSI-RS resource is used for beam failure detection, the parameter N may be determined based on a quantity of CSI-RS resources used for beam failure detection. For example, if the quantity of CSI-RS resources used for beam failure detection is A, the parameter N is determined based on a value of the A. Certainly, in some other implementations, the value of the parameter A may alternatively be determined based on the value of the parameter N.

In some implementations, N CSI-RS transmission slots in one CSI-RS resource set may include N1+N2 CSI-RS transmission opportunities (that is, the parameter N may include the parameter N1 and the parameter N2). N1 CSI-RS transmission opportunities in the N1+N2 CSI-RS transmission opportunities may be used for determining a transmit beam, and N2 CSI-RS transmission opportunities may be used for determining a receive beam. The first terminal device may transmit CSI-RSs respectively by using different transmit beams in the N1 CSI-RS transmission opportunities, and the second terminal device may perform measurement by using a same receive beam in the N1 CSI-RS transmission opportunities, so as to select an optional transmit beam, and report, to the first terminal device, a CSI-RS resource corresponding to the optional transmit beam. The first terminal device may transmit CSI-RSs by using a same transmit beam in the N2 CSI-RS transmission opportunities, and the second terminal device may receive the CSI-RSs respectively by using different receive beams in the N2 CSI-RS transmission opportunities and perform measurement, and then select an optional receive beam based on measurement results.

As shown in FIG. 22, N = 8, N1 = 4, and N2 = 4, that is, each CSI-RS transmission slot set includes four CSI-RS transmission opportunities used for determining a transmit beam, and includes four CSI-RS transmission opportunities used for determining a receive beam. FIG. 22 exemplarily shows that the first four CSI-RS slots in each CSI-RS transmission slot set are used for determining a transmit beam, and the last four CSI-RS slots are used for determining a receive beam. In some other implementations, the first N2 CSI-RS slots may be used for determining a receive beam, and the last N1 CSI-RS slots may be used for determining a transmit beam.

In some other implementations, at least one of a first set of CSI-RS transmission resources or a second set of CSI-RS transmission resources may be determined based on configuration information. The first set of CSI-RS transmission resources may be used for determining or selecting a transmit beam, and the second set of CSI-RS transmission resources may be used for determining or selecting a receive beam.

As shown in FIG. 23, the first set of CSI-RS resources and the second set of CSI-RS resources may be determined based on the configuration information. The period parameter P1 mentioned above may include a parameter P11 and a parameter P12. The period parameter P2 may include parameters P21 and a P22. For the first set of CSI-RS resources, each CSI-RS transmission slot set includes four CSI-RS transmission slots. The first terminal device may transmit CSI-RSs by using different beams respectively, and the second terminal device may separately receive the CSI-RSs transmitted by the first terminal device by using a same receive beam and perform measurement. Then, the second terminal device may select an optional transmit beam based on measurement results, and transmit CSI-RS resource information corresponding to the optional transmit beam to the first terminal device. In addition, for the second set of CSI-RS resources, each CSI-RS transmission slot set includes four CSI-RS transmission slots. In each CSI-RS transmission resource set, the first terminal device may transmit CSI-RSs by using a same beam, and the second terminal device receives the CSI-RSs transmitted by the first terminal device by using different receive beams respectively and performs measurement, and then selects an optional receive beam based on measurement results.

**Embodiment 3.2: A first CSI-RS resource is associated with only a periodic CSI-RS transmission opportunity.**

If a first CSI-RS resource is associated with only a periodic CSI-RS transmission opportunity, a period parameter corresponding to the first CSI-RS resource may include a parameter P3. The parameter P3 may be used for indicating a period value corresponding to the periodic CSI-RS transmission opportunity.

In some implementations, the parameter P3 may be determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, a period value indicated by the parameter P3 may be represented by a slot quantity. The slot quantity may be, for example, a quantity of slots in a resource pool.

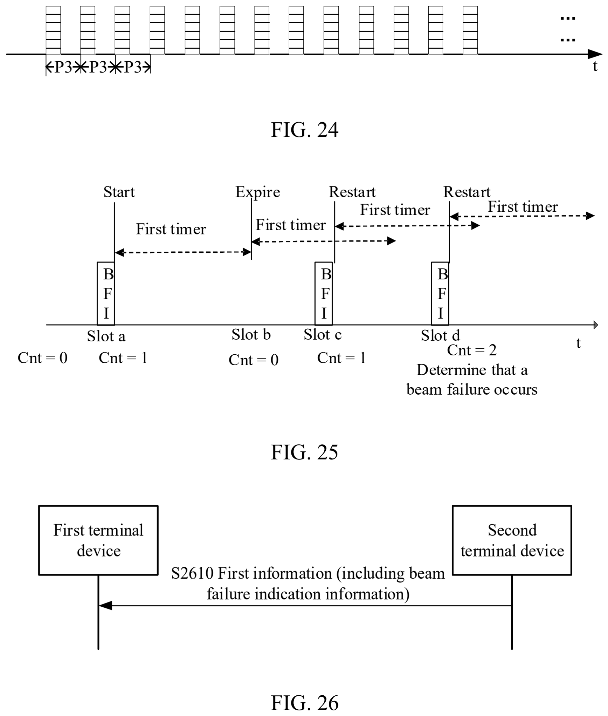

FIG. 24 shows an example in which a first CSI-RS resource is only associated with a CSI-RS transmission opportunity. Each pillar in FIG. 24 represents one CSI-RS transmission opportunity. It may be learned from FIG. 24 that a period of a CSI-RS transmission opportunity set associated with the first CSI-RS is P3.

Similar to that in Embodiment 3.1, if the first CSI-RS resource is used for determining a transmit beam and a receive beam, in an implementation, a set of CSI-RS transmission resources may be determined based on configuration information. In the set of CSI-RS transmission resources, every N CSI-RS transmission slots form one group, where N1 CSI-RS slot is used for determining a transmit beam, and N2 CSI-RS slot is used for determining a receive beam, and N = N1 + N2.

In another implementation, two sets of CSI-RS transmission resources may be determined based on configuration information, the first set of CSI-RSs is used for determining a transmit beam, and the second set of CSI-RSs is used for determining a receive beam. A specific implementation is similar to the manner illustrated in FIG. 23 in Embodiment 3.1, and details are not described herein again.

With reference to Embodiment 3.1 and Embodiment 3.2, the foregoing describes in detail a periodic structure of a first CSI-RS resource. With reference to Embodiment 3.3, the following describes in detail a manner of determining a first CSI-RS resource. It should be understood that Embodiment 3.3 may be combined with Embodiment 3.1, or may be combined with Embodiment 3.2.

**Embodiment 3.3: A manner of determining a time domain resource of a first CSI-RS resource**

The first CSI-RS resource may be determined based on one or more of parameters 1 to 4 described below. The parameter 1 may be used for determining a time domain position of a $1^{st}$ CSI-RS resource in the first CSI-RS resource. The parameter 2 may be used for indicating a period value corresponding to a periodic CSI-RS transmission opportunity. The parameter 3 may be used for indicating a period value corresponding to a periodic CSI-RS transmission opportunity set. The parameter 4 may be used for indicating a quantity of CSI-RS transmission opportunities included in one CSI-RS transmission opportunity set in the periodic CSI-RS transmission opportunity set.

The parameters 2 to 4 are period parameters of the first CSI-RS resource. Which parameter is included in the period parameter of the first CSI-RS resource is related to a periodic structure used by the first CSI-RS resource. For example, if the first CSI-RS resource uses the periodic structure described in Embodiment 3.1, the period parameter of the first CSI-RS resource includes a parameter 2, a parameter 3, and a parameter 4. The parameter 2 may correspond to the parameter P2 in Embodiment 3.1, the parameter 3 may correspond to the parameter P1 in Embodiment 3.1, and the parameter 4 may correspond to the parameter N in Embodiment 3.1. For another example, if the first CSI-RS resource uses the periodic structure described in Embodiment 3.2, the period parameter of the first CSI-RS resource may include a parameter 2. The parameter 2 may correspond to the parameter P3 in Embodiment 3.2.

In some implementations, the parameter 1 may include one or more of the following: a time domain position of a first time domain unit, or a time interval T2 (or referred to as a time offset).

In some implementations, the first time domain unit may be determined based on a time domain unit in which target information is located.

In some implementations, the target information may include activation information (or referred to as activation signalling) used for activating a CSI-RS resource. In other words, the first time domain unit may be determined based on a time domain unit in which the activation information is located. For example, the time domain unit in which the activation information is located is the first time domain unit. In an implementation, the first terminal device may acquire configuration information of a CSI-RS resource or a CSI-RS resource set. Then, the first terminal device may transmit the activation information to the second terminal device, and the activation information may be used for activating the CSI-RS resource or the CSI-RS resource set. Optionally, the activation information may be carried in SCI or a MAC CE. Alternatively, the activation information may be carried in both SCI and a MAC CE.

For example, when transmitting the activation information of the CSI-RS resource in a slot n, the first terminal device simultaneously transmits indication information, where the indication information is used for indicating a time interval T2. In this example, the $1^{st}$ CSI-RS resource may be a $1^{st}$ available CSI-RS resource located after a slot n+T2. Alternatively, the $1^{st}$ CSI-RS resource may be a $1^{st}$ available CSI-RS resource not earlier than a slot n+T2.

In some implementations, the target information may include indication information (hereinafter referred to as indication information 1) used for indicating transmission of a CSI-RS. In other words, the first time domain unit may be determined based on a time domain unit in which the indication information 1 is located. For example, the time domain unit in which the indication information 1 is located is the first time domain unit. The indication information 1 may be carried in SCI, a MAC CE, or PC5-RRC. Optionally, the indication information 1 may be carried in SCI or a MAC CE. Alternatively, the indication information 1 may be carried in both SCI and a MAC CE.

Optionally, the indication information 1 may include one or more of the following information: CSI-RS resource set index information, CSI-RS resource index information, indication information that indicates whether there is repetition (repetition), or a first information field. When a value of the first information field is a first value (for example, the first value is 1), the first information field may be used for indicating transmission of a CSI-RS.

For example, the indication information 1 may include indication information that indicates whether there is repetition. For example, two CSI-RS resource sets may be configured for the first terminal device, where a value of a "repetition" parameter in one CSI-RS resource set is "off (off)", and a value of a "repetition" parameter in the other CSI-RS resource set is "on (on)". For the first terminal device, an information field of the "repetition" parameter is included in SCI. When a value of the "repetition" parameter is a first value (for example, the first value may correspond to "off"), it indicates that the first terminal device will transmit a CSI-RS resource in a $1^{st}$ CSI-RS resource set. When a value of the "repetition" parameter is a second value (for example, the second value may correspond to "on (on)"), it indicates that the first terminal device will transmit a CSI-RS resource in a $2^{nd}$ CSI-RS resource set.

In some implementations, the target information may include indication information (hereinafter referred to as indication information 2) used for instructing (the second terminal device) to report CSI-RS resource information. In other words, the first time domain unit may be determined based on a time domain unit in which the indication information 2 is located. For example, the time domain unit in which the indication information 2 is located is the first time domain unit. The indication information 2 may be, for example, carried in SCI, a MAC CE, or PC5-RRC. Optionally, the indication information 2 may be carried in SCI or a MAC CE. Alternatively, the indication information 2 may be carried in both SCI and a MAC CE.

In some implementations, the target information may include indication information (hereinafter referred to as indication information 3) used for triggering or instructing (the second terminal device) to report beam failure information. In other words, the first time domain unit may be determined based on a time domain unit in which the indication information 3 is located. For example, the time domain unit in which the indication information 3 is located is the first time domain unit. Optionally, the indication information 3 may be carried in SCI or a MAC CE. Alternatively, the indication information 3 may be carried in both SCI and a MAC CE.

In some implementations, the target information may include indication information 4 used for instructing to report an RSRP or an SINR. In other words, the first time domain unit may be determined based on a time domain unit in which the indication information 4 is located. For example, the time domain unit in which the indication information 4 is located is the first time domain unit. Optionally, the indication information 4 may be carried in SCI or a MAC CE. Alternatively, the indication information 4 may be carried in both SCI and a MAC CE.

In some implementations, the target information may include indication information 5 used for indicating a report quantity. In other words, the first time domain unit may be determined based on a time domain unit in which the indication information 5 is located. For example, the time domain unit in which the indication information 5 is located is the first time domain unit. The report quantity may be, for example, one of the following: CRI, RSRP, SINR, CRI and RSRP, CRI and SINR, slot indication information, slot indication information and RSRP, slot indication information and SINR, and none (none). For example, if SCI transmitted by the first terminal device includes the report quantity, it may indicate that the first terminal device is to transmit a first CSI-RS resource. Correspondingly, the second terminal device may determine, based on a time domain unit in which the SCI is located, a time domain unit in which the 1st CSI-RS resource in the first CSI-RS resource is located. Optionally, the indication information 5 may be carried in SCI or a MAC CE. Alternatively, the indication information 5 may be carried in both SCI and a MAC CE.

In some implementations, a priority of the target information may be determined based on protocol predefined information, pre-configuration information, or network device configuration information.

In some implementations, the priority of the target information may be a highest priority in preset priorities. For example, a value of the priority of the target information may be 1.

In some implementations, the priority of the target information may be a lowest priority in the preset priorities. For example, a value of the priority of the target information may be 8.

In some implementations, the first time domain unit may be determined based on a reference time domain unit indicated by the first terminal device. For example, the first terminal device transmits indication information, and the indication information may be used for determining a first reference time domain unit. The first time domain unit may be determined based on the reference time domain unit. For example, the first time domain unit may be the reference time domain unit.

In some implementations, the time interval T2 may indicate, for example, a minimum time interval between the first time domain unit and the 1st CSI-RS resource. The time interval T2 may be determined based on one or more of the following: protocol predefined information, pre-configuration information, network device configuration information, resource pool configuration information, PC5-RRC signalling, indication information transmitted by the first terminal device, or indication information transmitted by the second terminal device.

For example, CSI-RS resource configuration information may be included in resource pool configuration information. The CSI-RS resource configuration information may include indication information for a minimum time interval. The minimum time interval represents a minimum time interval between the 1st CSI-RS resource and SCI, a PSCCH, a MAC CE, or indication information associated with the 1st CSI-RS resource.

For another example, the first terminal device transmits indication information, and the indication information is used for indicating the time interval T2. The time interval T2 may be a time interval or a time offset from a time domain unit in which the indication information is located, or the time interval T2 may be a time interval or a time offset from a first time domain unit. Optionally, the indication information may be carried in SCI, a MAC CE, or PC5-RRC. In an example, indication information transmitted by the first terminal device in SCI and used for indicating that the time interval T2 includes one index value, and a size of the time interval T2 may be determined based on the index value and a first correspondence. The first correspondence may indicate a correspondence between an index value and a time interval size. The first correspondence may be included in resource pool configuration information. The resource pool configuration information may be determined based on the pre-configuration information or the configuration information of the network device.

In some implementations, the 1st CSI-RS resource may refer to a 1st available CSI-RS resource that starts from the first time domain unit and is spaced by the time interval T2.

In some implementations, a time domain position of another CSI-RS resource, in the 1st CSI-RS resource, different from the first CSI-RS resource may be determined based on a parameter 5. The parameter 5 may be determined based on a period parameter of the first CSI-RS resource. The period parameter of the first CSI-RS resource may include, for example, one or more of a parameter 2, a parameter 3, or a parameter 4. By using Embodiment 3.1 as an example, the period parameter of the first CSI-RS resource may include a parameter 2 (corresponding to the parameter P2 in Embodiment 3.1), a parameter 3 (corresponding to the parameter P1 in Embodiment 3.1), and a parameter 4 (corresponding to the parameter N in Embodiment 3.1). By using Embodiment 3.2 as an example, the period parameter of the first CSI-RS resource may include a parameter 2 (corresponding to the parameter P3 in Embodiment 3.2).

In some implementations, the first CSI-RS resource may include a plurality of CSI-RS resources located in different time domain positions. The plurality of CSI-RS resources correspond to a same frequency domain resource, a same code domain resource, and a same CSI-RS sequence. Because a plurality of CSI-RSs are transmitted in different time domain positions, the plurality of CSI-RSs transmitted by the first terminal device may be distinguished by using the time domain positions. Therefore, the plurality of CSI-RSs transmitted in different time domain positions may have a same frequency domain resource, a same code domain resource, and a same CSI-RS sequence.

In some implementations, the first CSI-RS resource may include a plurality of CSI-RS resources located in different time domain positions, and the plurality of CSI-RS resources correspond to at least one of different frequency domain resources, different code domain resources, or different CSI-RS sequences. The plurality of CSI-RS resources corresponding to different frequency domain resources may refer to that the plurality of CSI-RS resources correspond to one or more of different sub-channels, different PRBs, or different RE positions in a PRB.

**Embodiment 4: Beam failure detection**

In an NR system, if a beam-based transmission manner is used between a network device and a terminal device, the terminal device is required to determine whether a beam failure occurs. To perform beam failure detection, the network device configures a periodic SSB or CSI-RS resource for the terminal device. The terminal device may measure the periodic SSB or CSI-RS resource. Then, the terminal device may determine, based on a measurement result of the periodic SSB or CSI-RS, whether a beam failure occurs.

However, in a sidelink system, a transmission resource of a sidelink synchronization signal block (sidelink synchronization signal block, S-SSB) is shared by a plurality of terminal devices. In other words, a plurality of terminal devices may simultaneously transmit an S-SSB on a same transmission resource. It may be learned that, in the sidelink system, the S-SSB is not suitable for performing beam failure detection.

Therefore, in the sidelink system, beam failure detection based on a CSI-RS (or CSI-RS resource) may be considered. A transmission mechanism of the CSI-RS may use, for example, the transmission mechanism described in Embodiment 1. Configuration information of the CSI-RS may include, for example, some or all of the configuration information described in Embodiment 2.

A semi-persistent or periodic CSI-RS resource is required to be configured for beam failure detection. For a configuration manner of the semi-persistent or periodic CSI-RS resource, reference may be made to Embodiment 3, and in particular, reference may be made to content related to beam failure detection in Embodiment 3.

The second terminal device may perform beam failure detection based on the CSI-RS resource. If it is determined that a determining condition of beam failure is met, the second terminal device may report beam failure indication information to the first terminal device. Optionally, if the second terminal device selects a new beam, the second terminal device may report information (namely, CSI-RS resource information corresponding to the transmit beam) about the newly selected transmit beam to the first terminal device. Optionally, the second terminal device may simultaneously or separately report beam failure information and the information about the newly selected transmit beam. For detailed description of reporting of the beam failure indication information, reference may be made to Embodiment 6 below. For detailed description of reporting of beam information (namely, CSI-RS resource information), reference may be made to Embodiment 7 below.

To enable the second terminal device to select a new transmit beam, in an implementation, the second terminal device may acquire configuration information of a periodic or semi-persistent CSI-RS resource, and select a transmit beam by using the CSI-RS resource.

Optionally, the first terminal device may transmit a CSI-RS resource used for beam failure detection by using a same transmit beam, or the second terminal device expects the first terminal device to transmit a CSI-RS resource used for beam failure detection by using a same transmit beam. In an implementation, the same transmit beam is a transmit beam used when the first terminal device performs sidelink transmission.

Optionally, the first terminal device does not transmit a CSI-RS resource used for new beam selection by using a same transmit beam, or transmits a CSI-RS resource used for new beam selection by using different transmit beams, or the second terminal device does not expect the first terminal device to transmit a CSI-RS resource used for new beam selection by using a same transmit beam, or the second terminal device expects the first terminal device to transmit a CSI-RS resource used for new beam selection by using different transmit beams.

For a manner of selecting a transmit beam, reference may be made to Embodiment 3, and in particular, reference may be made to content related to the selection of a transmit beam in Embodiment 3. Details are not described herein again.

A specific detection manner of beam failure detection is described in detail below by using an example.

When beam failure detection is performed, the second terminal device may determine a CSI-RS resource based on configuration information. Then, the second terminal device may measure the CSI-RS resource, and determine, based on a measurement result, whether a beam failure occurs.

If a beam failure occurs, the second terminal device may transmit beam failure indication information to the first terminal device to indicate that a beam failure occurs. Alternatively, regardless of whether a beam failure occurs, the second terminal device may transmit the beam failure indication information to the first terminal device, to indicate whether a beam failure occurs.

In some implementations, the beam failure indication information may be determined based on measurement of J CSI-RS resources, where J is a positive integer greater than or equal to 1.

In some implementations, the J CSI-RS resources may be periodic or semi-persistent CSI-RS resources. For example, the J CSI-RS resources may be J consecutive periodic CSI-RS resources.

In some implementations, a priority of the J CSI-RS resources may be determined based on protocol predefined information, pre-configuration information, or network configuration information.

In some implementations, the priority of the J CSI-RS resources is a highest priority or a lowest priority in preset priorities. For example, a value of the priority of the J CSI-RS resources is 1 (a highest priority), or a value of the priority of the J CSI-RS resources is 8 (a lowest priority).

In some implementations, the first terminal device may transmit the J CSI-RS resources by using a same transmit beam.

In some implementations, the J CSI-RS resources may belong to some or all of CSI-RS resources in the first CSI-RS resource in Embodiment 3. Therefore, content related to the first CSI-RS resource in Embodiment 3 may be applicable to this embodiment in a case in which there is no conflict.

In some implementations, the beam failure indication information being determined based on measurement of the J CSI-RS resources may include that: the beam failure indication information is determined based on one or more of the following: a first parameter; or first indication information received by a higher layer of the second terminal device; and the first indication information is determined based on measurement results (for example, may include a sidelink RSRP and/or a sidelink SINR) corresponding to A CSI-RS resources. The A CSI-RS resources belong to the J CSI-RS resources, and the A is less than or equal to the J. For example, $J = k \times A$, and the k is a positive integer greater than or equal to 1.

In some implementations, the higher layer of the second terminal device refers to a MAC layer of the second terminal device. The first indication information may be reported to the MAC layer by a lower layer (such as a physical layer) of the second terminal device.

In some implementations, the first indication information includes a beam failure instance (beam failure instance, BFI).

A reporting condition of the first indication information is not specifically limited in embodiments of this application.

In some implementations, the A CSI-RS resources may correspond to A measurement results. If measurement values corresponding to B measurement results in the A measurement results are all less than or equal to a first threshold, the first indication information may be reported to the higher layer of the second terminal device, where the B is a positive integer less than or equal to the A. For example, if A = 1, then B = 1. For another example, B = A, that is, the first indication information is reported to the higher layer when all the A measurement results are less than the first threshold.

A value of the J mentioned above may be determined based on, for example, one or more of the following: protocol predefined information, pre-configuration information, network device configuration information, resource pool configuration information, PC5-RRC signalling, indication information transmitted by the first terminal device, or indication information transmitted by the second terminal device.

A value of the A mentioned above may be determined based on, for example, one or more of the following: protocol predefined information, pre-configuration information, network device configuration information, resource pool configuration information, PC5-RRC signalling, indication information transmitted by the first terminal device, or indication information transmitted by the second terminal device.

A value of the B mentioned above may be determined based on, for example, one or more of the following: protocol predefined information, pre-configuration information, network device configuration information, resource pool configuration information, PC5-RRC signalling, indication information transmitted by the first terminal device, or indication information transmitted by the second terminal device.

A threshold value of the first threshold mentioned above may be determined based on, for example, one or more of the following: protocol predefined information, pre-configuration information, network device configuration information, resource pool configuration information, PC5-RRC signalling, indication information transmitted by the first terminal device, or indication information transmitted by the second terminal device.

In some other implementations, if a first measurement value is less than or equal to the first threshold, the first indication information is reported to the higher layer of the second terminal device.

For example, the first measurement value may be determined based on an average value of the A measurement results corresponding to the A CSI-RS resources.

For another example, the first measurement value may be determined based on a maximum value of the A measurement results corresponding to the A CSI-RS resources.

For another example, the first measurement value may be determined based on a minimum value of the A measurement results corresponding to the A CSI-RS resources.

In some implementations, if the higher layer of the second terminal device receives the first indication information, it may be determined that beam failure indication information is to be transmitted, or it may be determined that the transmitted beam failure indication information indicates a beam failure.

In some other implementations, it may be determined, based on the first indication information and a first parameter, whether to transmit the beam failure indication information or what is indicated by the transmitted beam failure indication information (a beam failure occurs or no beam failure occurs).

The first parameter may be, for example, used for determining whether at least one of a quantity of pieces of first indication information or a reporting interval meets a condition for transmitting the beam failure indication information.

In some implementations, the first parameter may include one or more of the following: a first timer (timer), or a first counter (counter).

In some implementations, timing duration of the first timer may be determined based on a period parameter corresponding to the A CSI-RS resources. For example, the timing duration of the first timer may be equal to $A \times P$, where P denotes a period value indicated by using the periodic parameter (for example, may be the parameter P2 or the parameter P3 in Embodiment 3).

In some implementations, the first timer may meet one or more of the following: if the higher layer receives the first indication information, the first timer starts (start) or restarts (restart); or if the first timer expires, the first timer restarts.

In some implementations, a count value of the first counter may be determined based on a quantity of pieces of first indication information received by the higher layer of the second terminal device.

In some implementations, the first counter may meet one or more of the following: in a case that the higher layer receives the first indication information, increasing a count value of the first counter by 1; in a case that the first counter is greater than or equal to a second threshold, determining that a beam failure occurs or beam failure recovery is triggered; in a case that the first timer expires, setting a count value of the first counter to 0; or in a case that the first counter is equal to a second threshold, setting the count value of the first counter to 0.

A threshold of the second threshold may be determined based on, for example, one or more of the following: protocol predefined information, pre-configuration information, network device configuration information, resource pool configuration information, PC5-RRC signalling, indication information transmitted by the first terminal device, or indication information transmitted by the second terminal device.

FIG. 25 is used as an example for description. In FIG. 25, a first counter is represented by Cnt, and first indication information is BFI. An initial value of the first counter is 0, and a second threshold is 2. In a slot a, BFI indication reported by a lower layer is received by a higher layer of the second terminal device, a first timer is started, and Cnt increases by 1. If the first timer expires (expire), or before the first timer expires (the first timer expires at slot b), and BFI indication reported by the lower layer is not received by the higher layer of the second terminal device, the first timer is restarted, and Cnt is reset to 0. Before the first timer expires next time, BFI indication reported by the lower layer is received by the higher layer of the second terminal device in a slot c, Cnt increases by 1, and the first timer is restarted. Then, before the first timer expires next time, BFI indication reported by the lower layer is received by the higher layer of the second terminal device in a slot d, and then Cnt increases by 1. In this case, Cnt = 2, and the second threshold is reached. Therefore, the second terminal device may determine that a beam failure occurs. Further, the second terminal device may restart the first timer, and reset the Cnt to 0.

The following describes a condition in which the second terminal device reports the beam failure indication information to the first terminal device.

In some implementations, reporting of the beam failure indication information includes one or more of the following: condition-based reporting (condition based reporting), trigger-based reporting (trigger based reporting), or periodic reporting (periodic reporting).

The condition-based reporting may include, for example: if the second terminal device determines that a beam failure occurs, the second terminal device reports the beam failure indication information to the first terminal device.

For example, the second terminal may determine, based on the foregoing first counter and second threshold, whether a beam failure occurs. If a value of the first counter is greater than or equal to the second threshold, a beam failure occurs. In this case, the second terminal device may report the beam failure indication information to the first terminal device. If a value of the first counter is less than the second threshold, no beam failure occurs. In this case, the second terminal device does not report the beam failure indication information to the first terminal device.

Alternatively, if a value of the first counter is greater than or equal to the second threshold, a beam failure occurs. In this case, the second terminal device may report the beam failure indication information to the first terminal device, to indicate that a beam failure occurs. If a value of the first counter is less than the second threshold, no beam failure occurs. In this case, the second terminal device may report the beam failure indication information to the first terminal device, to indicate that no beam failure occurs.

The trigger-based reporting may include, for example: if the second terminal device receives indication information used for triggering the second terminal device to report the beam failure indication information, the second terminal device reports the beam failure indication information to the first terminal device. For example, the second terminal may determine, based on the foregoing first counter and second threshold, whether a beam failure occurs. If a value of the first counter is greater than or equal to the second threshold, and the second terminal device receives the indication information used for triggering the second terminal device to report the beam failure indication information, the second terminal device may report the beam failure indication information to the first terminal device, to indicate that a beam failure occurs. If a value of the first counter is less than the second threshold, and the second terminal device receives the indication information used for triggering the second terminal device to report the beam failure indication information, the second terminal device may report the beam failure indication information to the first terminal device, to indicate that no beam failure occurs. If the indication information used for triggering the second terminal device to report the beam failure indication information is not received by the second terminal device, the second terminal device does not report the beam failure indication information to the first terminal device. If the second terminal device receives the indication information used for triggering the second terminal device to report the beam failure indication information, and a beam failure occurs after the second terminal device reports the beam failure indication information last time, the second terminal device reports the beam failure indication information, to indicate that a beam failure occurs. If the second terminal device receives the indication information used for triggering the second terminal device to report the beam failure indication information, and no beam failure occurs after the second terminal device reports the beam failure indication information last time, the second terminal device reports the beam failure indication information, to indicate that no beam failure occurs, or the second terminal device does not report the beam failure indication information to the first terminal device.

The periodic reporting may include, for example: if a reporting period of the beam failure indication information is reached, the second terminal device reports the beam failure indication information to the first terminal device. For example, if a beam failure occurs after the second terminal device reports the beam failure indication information last time, the second terminal device reports a beam failure; if no beam failure occurs after the second terminal device reports the beam failure indication information last time, it is reported that no beam failure occurs or the beam failure indication information is not reported.

In some implementations, a reporting period parameter of the beam failure indication information may be determined based on, for example, one or more of the following: protocol predefined information, pre-configuration information, network device configuration information, resource pool configuration information, PC5-RRC signalling, indication information transmitted by the first terminal device, or indication information transmitted by the second terminal device.

**Embodiment 5: Beam selection (or CSI-RS resource selection) of the second terminal device**

The second terminal device may obtain configuration information. The configuration information may be used for configuring a CSI-RS resource for beam selection. The configuration information may be, for example, the configuration information described in Embodiment 2. The CSI-RS resource configured based on the configuration information may be a periodic or semi-persistent CSI-RS resource. The CSI-RS resource may be, for example, the first CSI-RS resource described in Embodiment 3. For detailed description, reference may be made to Embodiment 3. After the CSI-RS resource is learned, the second terminal device may measure the CSI-RS resource, and select an optional transmit beam based on a measurement result. Then, the second terminal device may report CSI-RS resource information corresponding to the optional transmit beam to the first terminal device. The foregoing selection process for a transmit beam may occur in a selection process for an initial transmit beam, or may occur after a beam failure (namely, a selection process for a new transmit beam). In Embodiment 5, the selection process for a transmit beam is described in more detail by using an example.

In some implementations, CSI-RS resource information transmitted by the second terminal device to the first terminal device (which indicates that the second terminal device selects a transmit beam corresponding to the CSI-RS resource information) may be determined based on measurement of M CSI-RS resources, where the M is a positive integer greater than or equal to 1.

In some implementations, the M CSI-RS resources may be periodic or semi-persistent CSI-RS resources, for example, may be M consecutive periodic CSI-RS resources.

In some implementations, a priority of the M CSI-RS resources may be determined based on protocol predefined information, pre-configuration information, or network configuration information.

In some implementations, the priority of the M CSI-RS resources is a highest priority or a lowest priority in preset priorities. For example, a value of the priority of the M CSI-RS resources is 1 (a highest priority), or a value of the priority of the M CSI-RS resources is 8 (a lowest priority).

In some implementations, the first terminal device may transmit the M CSI-RS resources by using different transmit beams. Alternatively, the first terminal device does not transmit the M CSI-RS resources by using a same transmit beam. Alternatively, the second terminal device does not expect the first terminal device to transmit a second CSI-RS resource by using a same transmit beam. Alternatively, the second terminal device expects the first terminal device to transmit a second CSI-RS resource by using different transmit beams.

In some implementations, the M CSI-RS resources may belong to some or all of CSI-RS resources in the first CSI-RS resource in Embodiment 3. Therefore, content related to the first CSI-RS resource in Embodiment 3 may be applicable to this embodiment in a case in which there is no conflict.

In some implementations, a value of the M is determined, for example, based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, the CSI-RS resource information may be used for indicating D CSI-RS resources selected by the second terminal device.

For example, the D CSI-RS resources may be selected in descending order based on measurement results (for example, may be a sidelink RSRP and/or a sidelink SINR) corresponding to the M CSI-RS resources.

For another example, the D CSI-RS resources may be selected in descending order of measurement results corresponding to C CSI-RS resources. The C CSI-RS resources may correspond to C measurement results, and measurement values corresponding to the C measurement results are all greater than or equal to a third threshold, where the C is a positive integer greater than or equal to 1, and the D is a positive integer less than or equal to the C. For example, a default value of the C may be 1. If a value of the D is 1, the second terminal device may report CSI-RS resource information corresponding to a maximum measurement result to the first terminal device.

For another example, the D CSI-RS resources may be randomly selected from the C CSI-RS resources. The C CSI-RS resources may correspond to C measurement results, and measurement values corresponding to the C measurement results are all greater than or equal to a third threshold, where the C is a positive integer greater than or equal to 1, and the D is a positive integer less than or equal to the C. For example, a default value of the C may be 1. If a value of the D is 1, the second terminal device may report any CSI-RS resource information whose measurement result is greater than the third threshold to the first terminal device.

In some implementations, a value of the C is determined based on one or more of the following: protocol predefined information, pre-configuration information, network device configuration information, resource pool configuration information, PC5-RRC signalling, indication information transmitted by the first terminal device, or indication information transmitted by the second terminal device. The indication information transmitted by the first terminal device may be carried by using, for example, SCI, a MAC CE, or PC5-RRC signalling. The indication information transmitted by the second terminal device may be carried by using, for example, SCI, a MAC CE, or PC5-RRC signalling.

In some implementations, a value of the D is determined based on one or more of the following: protocol predefined information, pre-configuration information, network device configuration information, resource pool configuration information, PC5-RRC signalling, indication information transmitted by the first terminal device, or indication information transmitted by the second terminal device. The indication information transmitted by the first terminal device may be carried by using, for example, SCI, a MAC CE, or PC5-RRC signalling. The indication information transmitted by the second terminal device may be carried by using, for example, SCI, a MAC CE, or PC5-RRC signalling.

In some implementations, the third threshold is determined based on one or more of the following: protocol predefined information, pre-configuration information, network device configuration information, resource pool configuration information, PC5-RRC signalling, indication information transmitted by the first terminal device, or indication information transmitted by the second terminal device. The indication information transmitted by the first terminal device may be carried by using, for example, SCI, a MAC CE, or PC5-RRC signalling. The indication information transmitted by the second terminal device may be carried by using, for example, SCI, a MAC CE, or PC5-RRC signalling.

**Embodiment 6: Report on beam failure indication information**

FIG. 26 is a schematic flowchart of a method for sidelink transmission according to an embodiment of this application. Referring to FIG. 26, in step S2610, a first terminal device receives first information reported by a second terminal device. The first information may include beam failure indication information.

In some implementations, the beam failure indication information may be transmitted together with information w. The information w includes one or more of the following: CSI-RS resource information, or a measurement result corresponding to CSI-RS resource information. The CSI-RS resource information mentioned herein may be CSI-RS resource information corresponding to a new transmit beam selected after a beam failure.

In some implementations, the first information may be 1-bit information. For example, the 1-bit information may include a first value and a second value. If a value of the 1-bit information is the first value, it indicates that a beam failure occurs; if a value of the 1-bit information is the second value, it indicates that no beam failure occurs. For another example, the 1-bit information indicates a beam failure by using the first value. If a value of the 1-bit information is the second value, the value has no meaning. The first value may be 0, and the second value may be 1. Alternatively, the first value may be 1,

# EP 4 654 723 A1

and the second value may be 0.

A manner in which beam failure indication information is carried is not specifically limited in embodiments of this application. For example, the beam failure indication information may be carried by using first signalling or a first channel (or indicated by using first signalling or a first channel). The first signalling or the first channel may include one or more of the following: a PSFCH, SCI, a MAC CE, or PC5-RRC signalling.

In some implementations, the first signalling or the first channel is a PSFCH, and a priority corresponding to the first signalling or the first channel is determined based on protocol predefined information, pre-configuration information, or network device information.

In some implementations, the first signalling or the first channel is a PSFCH, and a priority corresponding to the first signalling or the first channel is a highest priority or a lowest priority in preset priorities. For example, a value of a priority corresponding to the first PSFCH is 1.

In some implementations, the first signalling or the first channel is SCI, and a priority corresponding to the first signalling or the first channel is determined based on protocol predefined information, pre-configuration information, or network device information.

In some implementations, the first signalling or the first channel is SCI, and a priority corresponding to the first signalling or the first channel is a highest priority or a lowest priority in preset priorities. For example, a value of a priority corresponding to the first SCI is 1.

In some implementations, the first signalling or the first channel is a MAC CE, and a priority corresponding to the first signalling or the first channel is determined based on protocol predefined information, pre-configuration information, or network device information.

In some implementations, the first signalling or the first channel is a MAC CE, and a priority corresponding to the first signalling or the first channel is a highest priority or a lowest priority in preset priorities. For example, a value of a priority corresponding to the MAC CE is 1.

In some implementations, if the first signalling or the first channel is a MAC CE, SCI transmitted together with the MAC CE includes information used for instructing to activate sidelink feedback. In other words, if the first signalling or the first channel is a MAC CE, the second terminal device activates sidelink feedback. For example, a value of an information field "HARQ feedback enabled/disabled indicator" in the SCI may be set to 1.

In some implementations, if the first signalling or the first channel is SCI, the SCI includes information used for instructing to activate sidelink feedback. In other words, if the first signalling or the first channel is SCI, the second terminal device activates sidelink feedback. For example, a value of an information field "HARQ feedback enabled/disabled indicator" in the SCI may be set to 1.

**Embodiment 6.1: First signalling or a first channel is a first PSFCH.**

Embodiment 6.1 describes in detail how to carry beam failure indication information by using a first PSFCH.

In some implementations, a time domain resource of the first PSFCH may include a second-to-last symbol and a third-to-last symbol of symbols that may be used for sidelink transmission in a slot. Further, in some implementations, data transmitted on the second-to-last symbol is the same as data transmitted on the third-to-last symbol. For example, for the first PSFCH, reference may be made to the foregoing implementation illustrated in FIG. 9B.

In some implementations, a first sequence may be generated based on the beam failure indication information, and then carried in the first PSFCH.

In some implementations, the first PSFCH may occupy K PRBs in frequency domain, where the K may be determined based on protocol predefined information, pre-configuration information, or network device configuration information. The K is a positive integer greater than or equal to 1, for example, K = 1.

For example, if the K is equal to 1, the first sequence is a sequence whose length is t, where t denotes a quantity of subcarriers included in one PRB. A value of t may be 12.

For another example, if the K is greater than 1, the first sequence may be a sequence whose length is less than or equal to $t \times K$. Then, the first sequence may be mapped to subcarriers corresponding to the K PRBs. Herein t denotes a quantity of subcarriers included in one PRB. A value of t may be 12.

For another example, if the K is greater than 1, the first sequence is a sequence whose length is t. In this case, sequences mapped to respective K PRBs all may be generated or determined based on the first sequence. Herein t denotes a quantity of subcarriers included in one PRB. A value of t may be 12.

In the following, a generation manner of the first sequence is described in detail by using an example.

The first sequence may be generated based on one or more of the following: a root sequence or a cyclic shift.

The cyclic shift may be generated based on one or more of the following: a slot number; a quantity of subcarriers included in one resource block RB; a quantity of symbols included in one slot; an index corresponding to a symbol used for transmitting a PSFCH (for example, a second symbol in a plurality of symbols used for transmitting a PSFCH) in a slot; a pseudorandom sequence; a second parameter determined based on a quantity of cyclic shift pairs or cyclic shifts; or a third parameter determined depending on whether a beam failure occurs.

In some implementations, in a case that a beam failure occurs, a value of the third parameter is 6, and/or in a case that no beam failure occurs, a value of the third parameter is 0.

In some implementations, in a case that a beam failure occurs, a value of the third parameter is 0, and/or in a case that no beam failure occurs, a value of the third parameter is 6.

In some implementations, in a case that a beam failure occurs, a value of the third parameter is 0. The third parameter does not include another value, or another value of the third parameter has no meaning.

In some implementations, in a case that a beam failure occurs, a value of the third parameter is 6. The third parameter does not include another value, or another value of the third parameter has no meaning.

For example, the beam failure indication information is 1-bit information, and if a value of the 1-bit information is 1, it indicates that a beam failure occurs. If a value of the 1-bit information is 0, there is no meaning. Correspondingly, if a value of the beam failure indication information is 1, a value of the third parameter is 0.

For example, the beam failure indication information is 1-bit information, and if a value of the 1-bit information is 0, it indicates that a beam failure occurs. If a value of the 1-bit information is 1, there is no meaning. Correspondingly, if a value of the beam failure indication information is 0, a value of the third parameter is 0.

For example, a first sequence $r_{u,v}^{(\alpha,\delta)}(n)$ may be generated as follows:

$$r_{u,v}^{(\alpha,\delta)}(n) = e^{j\alpha n}\bar{r}_{u,v}(n), \quad 0 \le n < M_{ZC}$$

Herein $M_{ZC}$ denotes a sequence length, $\bar{r}_{uv}(n)$ denotes a root sequence (base sequence), and $\alpha$ denotes a cyclic shift (cyclic shift).

For example, the cyclic shift may be determined based on the following formula:

$$\alpha_l = \frac{2\pi}{N_{sc}^{RB}}\left(\left(m_0 + m_{cs} + m_{int} + n_{cs}\left(n_{s,f}^{\mu}, l + l'\right)\right) \bmod N_{sc}^{RB}\right)$$

Herein $n_{cs}$ may be determined according to the following formula:

$$n_{cs}\left(n_{s,f}^{\mu}, l\right) = \sum_{m=0}^{7} 2^m\, c\left(8N_{symb}^{slot}n_{s,f}^{\mu} + 8l + m\right)$$

Herein $n_{s,f}^{\mu}$ denotes a slot number, $N_{sc}^{RB}$ denotes a quantity of subcarriers included in one RB, and $N_{symb}^{slot}$ denotes a quantity of symbols included in one slot. $l = 0$, and $l'$ denotes an index corresponding to a second OFDM symbol in a plurality of symbols used for PSFCH transmission in a slot. If a parameter $n_{ID}$ is configured for a higher layer, then $u = n_{ID} \bmod 30$; otherwise, $u = 0$. Herein $c(i)$ denotes a pseudorandom sequence. For a generation manner of the pseudorandom sequence, reference may be made to a generation manner of c(n) in Embodiment 2. If a parameter $n_{ID}$ is configured for a higher layer, then $c_{init} = n_{ID}$; otherwise, $c_{init} = 0$, and $m_{int} = 0$, where $m_0$ is a second parameter determined based on the quantity of cyclic shift pairs or cyclic shifts mentioned above, and $m_{cs}$ is a third parameter determined based on whether a beam failure occurs mentioned above.

If a beam failure is indicated by using 1-bit information, the beam failure may be indicated in the following two manners (hereinafter referred to as manner A and manner B). In different manners, values of the second parameter $m_0$ and the third parameter $m_{cs}$ are determined in different manners. The following describes in detail a manner of determining values of the second parameter $m_0$ and the third parameter $m_{cs}$ with reference to the manner A and manner B.

**Manner A**

If a value of the 1-bit information is 1, it indicates that a beam failure occurs; if a value of the 1-bit information is 0, it indicates that no beam failure occurs. Alternatively, if a value of the 1-bit information is 0, it indicates that a beam failure occurs; if a value of the 1-bit information is 1, it indicates that no beam failure occurs.

If the manner A is used for indicating a beam failure, a quantity of cyclic shift pairs may be determined based on configuration information, and a value of the second parameter $m_0$ may be determined according to the following Table 2.

Table 2

| Quantity of cyclic shift pairs | $m_0$ | | | | | |
|---|---|---|---|---|---|---|
| | cyclic shift pair index value 0 | cyclic shift pair index value 1 | cyclic shift pair index value 2 | cyclic shift pair index value 3 | cyclic shift pair index value 4 | cyclic shift pair index value 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A value of the third parameter $m_{cs}$ may be determined according to Table 3 or Table 4.

Table 3

| Whether a beam failure occurs | 0 (No beam failure occurs) | 1 (A beam failure occurs) |
|---|---|---|
| $m_{cs}$ | 0 | 6 |

Table 4

| Whether a beam failure occurs | 0 (No beam failure occurs) | 1 (A beam failure occurs) |
|---|---|---|
| $m_{cs}$ | 6 | 0 |

**Manner B**

It is only defined that, a value of the 1-bit information being 1 indicates that a beam failure occurs. If a value of the 1-bit information is 0, there is no meaning. Certainly, it may alternatively be defined that, a value of the 1-bit information being 0 indicates that a beam failure occurs. If a value of the 1-bit information is 1, there is no meaning. In this case, a quantity of cyclic shift pairs or cyclic shifts may be determined based on configuration information. If the quantity of cyclic shift pairs is configured, a value of $m_0$ may be determined according to Table 2. If the quantity of cyclic shifts is configured, a value of $m_0$ may be determined according to Table 5 below.

Table 5

| Quantity of cyclic shifts | $m_0$ | | | | | | | | | | | |
|---|---|---|---|---|---|---|---|---|---|---|---|---|
| | cyclic shift index value 0 | cyclic shift index value 1 | cyclic shift index value 2 | cyclic shift index value 3 | cyclic shift index value 4 | cyclic shift index value 5 | cyclic shift index value 6 | cyclic shift index value 7 | cyclic shift index value 8 | cyclic shift index value 9 | cyclic shift index value 10 | cyclic shift index value 11 |
| 1 | 0 | - | - | - | - | - | - | - | - | - | - | - |
| 2 | 0 | 3 | - | - | - | - | - | - | - | - | - | - |
| 3 | 0 | 2 | 4 | - | - | - | - | - | - | - | - | - |
| 6 | 0 | 1 | 2 | 3 | 4 | 5 | - | - | - | - | - | - |
| 12 | 0 | 1 | 2 | 3 | 4 | 5 | 6 | 7 | 8 | 9 | 10 | 11 |

A value of the third parameter $m_{cs}$ is determined according to the following Table 6 or Table 7.

Table 6

| Whether a beam failure occurs | 0 (A beam failure occurs) |
|---|---|
| $m_{cs}$ | 0 |

Table 7

| Whether a beam failure occurs | 1 (A beam failure occurs) |
|---|---|
| $m_{cs}$ | 0 |

The following describes a manner of determining a time domain resource (or a time domain position) of the first PSFCH.

In some implementations, the time domain resource of the first PSFCH may be determined based on a time domain position of a CSI-RS resource used for beam failure detection, for example, may be determined based on time domain positions of A CSI-RS resources (for detailed description of the A CSI-RS resources used for beam failure detection, reference may be made to Embodiment 4) used for determining whether to report first indication information (for example, BFI indication) to a higher layer. The time domain resource of the first PSFCH may be determined based on, for example, a time domain location of a last CSI-RS resource in the A CSI-RS resources.

For example, in a process of determining that a beam failure instance BFI occurs (for detailed description, reference may be made to a reporting process of the first indication information in Embodiment 4, and herein the first indication information being a BFI is mainly used as an example for description), whether a BFI occurs is determined based on measurement results of A CSI-RSs. A time domain unit in which the first PSFCH is located may be determined based on a time domain unit in which a last CSI-RS in the A CSI-RS resources is located. This is because the second terminal device determines, based on the measurement results of the A CSI-RS resources, whether a BFI occurs, and if a BFI occurs, BFI indication is reported to a higher layer of the second terminal device. After the BFI indication is received, the higher layer of the second terminal device increases a first counter by 1, and further determines, based on a value of the counter, whether a beam failure occurs. If a beam failure occurs, the second terminal device may carry beam failure indication information by using the first PSFCH, and report the beam failure indication information to the first terminal device by using the first PSFCH.

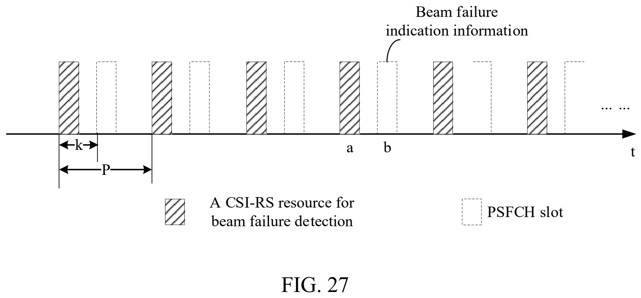

With reference to FIG. 27, the following provides an example in which A = 1. A periodic CSI-RS resource is determined based on configuration information, and a period of the CSI-RS resource is P. For each CSI-RS resource, there is a PSFCH resource corresponding to the CSI-RS resource. The PSFCH resource is used for carrying beam failure indication information, and a time interval between the CSI-RS resource and the PSFCH resource associated with the CSI-RS resource is k slots. The second terminal device may perform measurement based on a received CSI-RS resource and determine whether a determining condition of a beam failure is met. If it is determined, based on a measurement result of a CSI-RS transmitted in a slot a, that the beam failure condition is met, the second terminal device may carry the beam failure indication information in a PSFCH resource (namely, the PSFCH in a slot b in FIG. 27) associated with the CSI-RS resource in the slot a. Then, the second terminal device may report the beam failure indication information to the first terminal device by using the PSFCH.

In some implementations, a time domain resource of the first PSFCH may be determined based on a time domain position in which indication information A is located. The indication information A may be used for instructing the second terminal device to report the beam failure indication information.

Optionally, the indication information A may be used for triggering the second terminal device to report the beam failure indication information.

Optionally, the indication information A is carried in SCI and/or a MAC CE, and the time domain resource of the first PSFCH may be determined based on a time domain position in which the SCI or the MAC CE is located.

For example, the first terminal device transmits the indication information A to the second terminal device in a slot n, to instruct the second terminal device to report the beam failure indication information. The indication information A may be carried by using SCI or a MAC CE. The second terminal device determines that the first PSFCH is a first available PSFCH in a resource pool that is not earlier than a slot n+k. Alternatively, the second terminal device determines that the first PSFCH is a first available PSFCH following a slot n+k in a resource pool. The second terminal device may use the first PSFCH to carry the beam failure indication information. Optionally, a value of the parameter k may be determined based on one or more of the following: protocol predefined information, pre-configuration information, network device configuration information, PC5-RRC signalling, indication information from the first terminal device, or indication information from the second terminal device.

In some implementations, the time domain resource of the first PSFCH may be based on a time domain position of a first target CSI-RS resource. The first target CSI-RS resource is associated with a CSI-RS resource selected by the second terminal device after a beam failure is detected. The first terminal device may determine, based on the CSI-RS resource, a time domain unit in which a PSFCH associated with the CSI-RS resource is located. If a PSFCH (namely, the first PSFCH described above) carrying the beam failure indication information is detected in the time domain unit, it may be determined that a beam failure occurs. In this implementation, a new beam is selected by the second terminal device as a beam corresponding to a CSI-RS resource associated with the PSFCH.

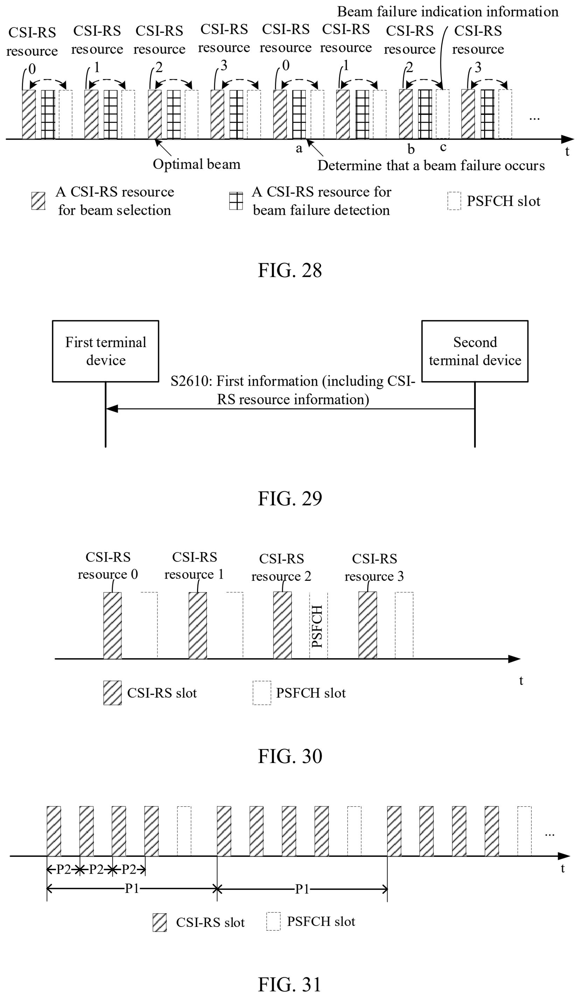

For example, as shown in FIG. 28, a CSI-RS resource for beam selection and a CSI-RS resource for beam failure detection are configured, and CSI-RS resources corresponding to respective beams have corresponding PSFCH resources. In an example illustrated in FIG. 28, the first terminal device supports four transmit beams. Therefore, the first terminal device transmits CSI-RSs respectively by using the four transmit beams in turn, namely, CSI-RS 0 to CSI-RS 3 shown in FIG. 28. The second terminal device determines that a beam corresponding to the CSI-RS 2 is an optimal transmit beam. Therefore, when the second terminal device determines, based on a CSI-RS transmitted in a slot a, that a beam failure occurs, a time domain position of a PSFCH carrying the beam failure indication information may be determined based on a CSI-RS resource corresponding to the transmit beam selected by the second terminal device. The CSI-RS 2 corresponding to a first optimal beam after the slot a is located in a slot b. Therefore, it may be determined based on the CSI-RS resource of the slot b that a resource of the PSFCH (namely, the first PSFCH described above) is located in a slot c. Therefore, the second terminal device may use a PSFCH in the slot c to carry the beam failure indication information.

In some implementations, at least one of a frequency domain resource or a code domain resource of the first PSFCH may be determined based on one or more of the following: index information of a PRB corresponding to a start position of a CSI-RS frequency domain resource; sub-channel information corresponding to a start position of a CSI-RS frequency domain resource; subcarrier information corresponding to a start position of a CSI-RS frequency domain resource; a quantity of PRBs available for transmitting a CSI-RS in a slot; a size of a frequency domain resource occupied by one CSI-RS (for example, may be represented by using a quantity of PRBs); a scrambling identity (ScramblingID) used for generating a CSI-RS sequence; a CSI-RS resource set identifier; a CSI-RS resource identifier (for example, an identifier of a CSI-RS resource selected by the second terminal device in a CSI-RS resource set); an index of a CSI-RS transmission opportunity; a time domain position and/or a frequency domain start position of a time-frequency resource that carries indication information X; source identifier information; destination identifier information; a quantity of PSFCHs multiplexed in one frequency domain resource in code division multiplexing mode; or a quantity of PRBs available for transmitting a PSFCH in one slot.

The CSI-RS resource set identifier mentioned above may be an index corresponding to a CSI-RS resource set determined based on configuration information. For example, at least two CSI-RS resource sets may be determined based on the configuration information. One of the two CSI-RS resource sets is used for determining a transmit beam, and a value of a parameter "repetition" of the CSI-RS resource set is "off". The other of the two CSI-RS resource sets is used for determining a receive beam, and a value of the parameter "repetition" of the CSI-RS resource set is "on". Indexes corresponding to the two resource sets may be 0 and 1 respectively, and the index may be used as the CSI-RS resource set identifier mentioned above.

The CSI-RS transmission opportunity index mentioned above may be an index of a CSI-RS resource selected by the second terminal device in a group of CSI-RS transmission opportunity sets. For example, a group of CSI-RS transmission opportunity sets includes Y CSI-RS transmission slots, and a corresponding index range is [0, Y-1]. If the CSI-RS resource selected by the second terminal device is a $2^{nd}$ CSI-RS resource in the group of CSI-RS resources, a transmission resource of the PSFCH carrying the beam failure indication information is determined based on an index of the CSI-RS resource in the CSI-RS transmission opportunity set, that is, a value of the index is 1.

The source identifier information may be, for example, source identifier information carried in the SCI. For example, the source identifier information may be an identifier of the first terminal device.

The destination identifier information may be, for example, destination identifier information carried in the SCI. For example, the destination identifier information may be an identifier of the second terminal device, a group identifier of a terminal group in which the second terminal device is located, an intra-group identifier of the second terminal device, or the like.

The indication information X may be transmitted by the first terminal device, and the indication information X may be used for instructing the second terminal device to report CSI-RS resource information. Alternatively, the indication information X is used for instructing the second terminal device to report beam failure indication information.

**Embodiment 6.2: First signalling or a first channel is SCI, a MAC CE, or PC5-RRC signalling.**

In some implementations, a sidelink transmission resource used for transmitting the first signalling or the first channel is configured based on a network device. For example, in mode 1, the second terminal device transmits a scheduling request (scheduling request, SR) to the network device. After the SR is received, the network device configures a sidelink transmission resource for transmitting the first signalling or the first channel for the second terminal device.

In some implementations, the sidelink transmission resource used for transmitting the first signalling or the first channel is determined by the second terminal device in a first time period range. For example, in mode 2, the second terminal device determines, in the first time period range, the sidelink transmission resource used for transmitting the first signalling or the first channel.

In some implementations, if the first signalling or the first channel is a MAC CE, only the MAC CE is carried in a PSSCH, or only second-stage SCI and a MAC CE are carried in a PSSCH.

In some implementations, if the first signalling or the first channel is a MAC CE, second-stage SCI, the MAC CE, and other sidelink data are carried in the PSSCH.

In some implementations, a start time of the first time period range may be determined based on the following information: a time domain position of a last CSI-RS resource in A CSI-RS resources used for beam failure detection (for detailed description of the A CSI-RS resources, reference may be made to Embodiment 4).

For example, if the last CSI-RS transmission resource of the A CSI-RS transmission resources is located in a time domain unit n, the start position of the first time period range may be a time domain unit n+T3, where T3 is a time interval. The T3 is an integer greater than or equal to 0, and the T3 is 1 slot, 4 slots, 6 slots, 11 slots, or 21 slots. A value of the T3 may be determined based on protocol predefined information, pre-configuration information, network device configuration information, PC5-RRC signalling, indication information from the first terminal device, or indication information from the second terminal device. The value of the T3 is related to a sidelink subcarrier spacing, that is, different sidelink subcarrier spacings may correspond to different values of the T3.

In some implementations, the start time of the first time period range may be determined based on one or more of the following information: a time domain position in which indication information B is located, or a time interval T4. The indication information B may be transmitted by the first terminal device, and the indication information B may be used for instructing the second terminal device to report beam failure indication information or CSI-RS resource information. Optionally, the indication information B is carried in SCI and/or a MAC CE, and a start time in the first time period range is determined based on a time domain unit in which the SCI or the MAC CE is located. For example, the start time (such as a start time domain unit) in the first time period range is a time domain unit in which the SCI or the MAC CE is located. Alternatively, the start time (for example, the start time domain unit) in the first time period range is a sum of the time interval T4 and a time domain unit in which the SCI or the MAC CE is located. The T4 is an integer greater than or equal to 0, and the T4 is 1 slot, 4 slots, 6 slots, 11 slots, or 21 slots. A value of the T4 may be determined based on protocol predefined information, pre-configuration information, network device configuration information, PC5-RRC signalling, indication information from the first terminal device, or indication information from the second terminal device. The value of the T4 is related to a sidelink subcarrier spacing, that is, different sidelink subcarrier spacings may correspond to different values of the T4.

In some implementations, the start time of the first time period range may be determined based on the following information: a time domain position of a first target CSI-RS resource. The first target CSI-RS resource may be associated with a CSI-RS resource selected by the second terminal device after a beam failure is detected. For example, a time domain unit in which a CSI-RS resource corresponding to an optimal transmit beam selected by the second terminal device is located is n, then the start time of the first time period range is a time domain unit n+T5. The T5 is a time interval. The T5 is an integer greater than or equal to 0, for example, the T5 is 1 slot, 4 slots, 6 slots, 11 slots, or 21 slots. A value of the T5 may be determined based on pre-configuration information, network device configuration information, PC5-RRC signalling, indication information from the first terminal device, or indication information from the second terminal device. The value of the T5 may be related to a sidelink subcarrier spacing, that is, different sidelink subcarrier spacings may correspond to different values of the T5.

Optionally, in some implementations, an end time of the first time period range may be determined based on one or more of following: protocol predefined information, pre-configuration information, network device configuration information, resource pool configuration information, PC5-RRC signalling, indication information transmitted by the first terminal device, or indication information transmitted by the second terminal device.

Optionally, in some implementations, duration corresponding to the first time period range may be determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, the indication information transmitted by the first terminal device is used for indicating a first latency boundary (latency boundary), and the end time of the first time period range is determined based on the start time of the first time period range and the first latency boundary.

For example, the first terminal device transmits indication information to the second terminal device, and the indication information is used for indicating a first latency boundary. The duration corresponding to the first time period range may be determined based on the first latency boundary. Alternatively, the end time of the first time period range may be determined based on the start time of the first time period range and the first latency boundary. The second terminal device may determine duration of a timer (timer) based on duration corresponding to the first latency boundary, and before the timer expires or fails, the second terminal device should report beam failure indication information to the first terminal device. A sidelink transmission resource determined by the second terminal device and used for reporting the beam failure indication information is located in a position before the timer expires or fails. The timer may be started when the second terminal device receives, from the first terminal device, indication information instructing to transmit a CSI-RS, or receives indication information transmitted by the first terminal device and instructing the second terminal device to report beam failure indication information, or receives indication information transmitted by the first terminal device and instructing the second terminal device to report CSI-RS resource information, or receives a first CSI-RS or a last CSI-RS used for determining a transmit beam.

In some implementations, when the first signalling or the first channel is SCI, a MAC CE, or PC5-RRC signalling, the first signalling or the first channel may simultaneously carry the beam failure indication information and information w. The information w may include one or more of the following: CSI-RS resource information, or a measurement result corresponding to CSI-RS resource information.

Optionally, the beam failure indication information and the information w are carried by using same signalling. For example, the beam failure indication information and the information w are carried by using same SCI. The beam failure indication information and the information w are carried by using a same MAC CE.

Optionally, the beam failure indication information and the information w are carried by using different signalling. For example, the beam failure indication information is carried by using SCI, and the information w is carried by using a MAC CE.

In some implementations, the beam failure indication information or the information w may be carried in a plurality of types of signalling. For example, the beam failure indication information may be carried by using both SCI and a MAC CE. For another example, the beam failure indication information may be carried by using SCI, and the beam failure indication information and CSI-RS resource indication information may be carried by using a MAC CE.

**Embodiment 7: Report on CSI-RS resource information**

It is noted that, in a process of determining a transmit beam, the first terminal device is required to transmit a CSI-RS to the second terminal device, so that the second terminal device measures a received CSI-RS. Then, the second terminal device selects a CSI-RS resource based on the measurement result of the CSI-RS, and reports the selected CSI-RS resource to the first terminal device.

In addition, after beam failure detection, the second terminal device may determine a new transmit beam. A process of determining the new transmit beam is similar to a process of determining an initial transmit beam, in which the second terminal device is also required to select a CSI-RS resource based on a measurement result of the CSI-RS, and report the selected CSI-RS resource to the first terminal device.

It can be learned from the foregoing description that, if a sidelink system introduces beam-based transmission, reporting of CSI-RS resource information is performed in many scenarios. With reference to FIG. 29, a manner of reporting the CSI-RS resource information is described in detail in Embodiment 7.

FIG. 29 is a schematic flowchart of a method for sidelink transmission according to an embodiment of this application. Referring to FIG. 29, in step S2910, a first terminal device receives first information reported by a second terminal device.

The first information may include one or more of the following information: CSI-RS resource information, or a measurement result corresponding to CSI-RS resource information. The CSI-RS resource information may be used for indicating a CSI-RS resource selected by the second terminal device. A transmit beam corresponding to the CSI-RS resource may be an initial transmit beam, or may be a new transmit beam selected after a beam failure.

A manner of carrying the CSI-RS resource information is not specifically limited in embodiments of this application. For example, the CSI-RS resource information may be carried by using second signalling or a second channel (or indicated by using second signalling or a second channel). The second signalling or the second channel may include one or more of the following: a PSFCH, SCI, a MAC CE, or PC5-RRC signalling.

In some implementations, the second signalling or the second channel is a PSFCH, and a priority corresponding to the second signalling or the second channel is determined based on protocol predefined information, pre-configuration information, or network device information.

In some implementations, the second signalling or the second channel is a PSFCH, and a priority corresponding to the second signalling or the second channel is a highest priority or a lowest priority in preset priorities. For example, a value of a priority corresponding to the first PSFCH is 1.

In some implementations, the second signalling or the second channel is SCI, and a priority corresponding to the second signalling or the second channel is determined based on protocol predefined information, pre-configuration information, or network device information.

In some implementations, the second signalling or the second channel is SCI, and a priority corresponding to the second signalling or the second channel is a highest priority or a lowest priority in preset priorities. For example, a value of a priority corresponding to the first SCI is 1.

In some implementations, the second signalling or the second channel is a MAC CE, and a priority corresponding to the second signalling or the second channel is determined based on protocol predefined information, pre-configuration information, or network device information.

In some implementations, the second signalling or the second channel is a MAC CE, and a priority corresponding to the second signalling or the second channel is a highest priority or a lowest priority in preset priorities. For example, a value of a priority corresponding to the MAC CE is 1.

In some implementations, if the second signalling or the second channel is a MAC CE, SCI transmitted together with the MAC CE includes information used for instructing to activate sidelink feedback. In other words, if the second signalling or the second channel is a MAC CE, the second terminal device activates sidelink feedback. For example, a value of an information field "HARQ feedback enabled/disabled indicator" in the SCI may be set to 1.

In some implementations, if the second signalling or the second channel is SCI, the SCI includes information used for instructing to activate sidelink feedback. In other words, if the second signalling or the second channel is SCI, the second terminal device activates sidelink feedback. For example, a value of an information field "HARQ feedback enabled/disabled indicator" in the SCI may be set to 1.

**Embodiment 7.1: Second signalling or a second channel is a second PSFCH.**

In some implementations, the second PSFCH may include one information bit. When a value of the one information bit is a first value, the one information bit may be used for indicating that a CSI-RS resource associated with the second PSFCH is a CSI-RS resource selected by the second terminal device. The first value may be 0, or may be 1.

In some implementations, a frequency domain resource of the second PSFCH is one PRB.

In some implementations, a time domain resource of the second PSFCH includes two symbols, which are respectively a second-to-last symbol and a third-to-last symbol of time domain symbols that may be used for sidelink transmission in a slot. Optionally, data transmitted on the second-to-last symbol is the same as data transmitted on the third-to-last symbol.

In some implementations, a transmission resource of the second PSFCH is associated with a transmission resource of the selected CSI-RS resource (for example, a time domain position in which the CSI-RS resource is located). For example, the time domain resource of the second PSFCH is determined based on the time domain position of the selected CSI-RS resource.

For example, one PSFCH may be associated with respective CSI-RS resources. If the second terminal device selects a CSI-RS resource, a PSFCH associated with the CSI-RS resource is the second PSFCH. Therefore, CSI-RS resource information associated with a PSFCH may be implicitly determined by detecting the PSFCH.

In some implementations, the frequency domain resource of the second PSFCH includes one PRB.

In some implementations, there is a time interval T6 between the second PSFCH and the CSI-RS resource selected by the second terminal device. The time interval T6 may be determined based on one or more of the following: protocol predefined information, pre-configuration information, network device configuration information, resource pool configuration information, PC5-RRC signalling, indication information transmitted by the first terminal device, or indication information transmitted by the second terminal device.

For example, a slot in which the PSFCH is located and a slot in which the CSI-RS resource is located are spaced by m slots, if the second terminal device transmits a CSI-RS in a slot n, detection is performed to determine whether there is a PSFCH carrying CSI-RS resource information in a slot n+m. If the PSFCH is detected, it indicates that the PSFCH is the second PSFCH described above, a CSI-RS resource associated with the PSFCH is the CSI-RS resource selected by the second terminal device, and the transmit beam corresponding to the CSI-RS resource is an optional transmit beam.

For another example, a slot in which the PSFCH is located and a slot in which the CSI-RS resource is located are spaced by m slots, if the second terminal device transmits a CSI-RS in a slot n, detection is performed to determine whether there is a PSFCH carrying CSI-RS resource information in a slot n+m. If it is detected that a value of 1-bit information carried in the PSFCH is 1 (or is 0), it indicates that the PSFCH is the second PSFCH described above, a CSI-RS resource associated with the PSFCH is the CSI-RS resource selected by the second terminal device, and the transmit beam corresponding to the CSI-RS resource is an optional transmit beam.

In a more specific example, referring to FIG. 30, a periodic CSI-RS resource is configured for determining a transmit beam by the second terminal device. In the example illustrated in FIG. 30, the first terminal device supports four transmit beams. Therefore, the first terminal device transmits four CSI-RSs by using four beams, respectively, and each CSI-RS has a corresponding PSFCH slot. When the first terminal device detects, on a PSFCH slot corresponding to a CSI-RS resource 2, a PSFCH (or a value of 1-bit information carried in the PSFCH is 1 (or is 0)), it may be determined that a beam corresponding to the CSI-RS resource 2 is an optional transmit beam.

In some implementations, the CSI-RS resource selected by the second terminal device belongs to a first group of CSI-RS resources. The transmission resource of the second PSFCH is associated with a transmission resource of the first group of CSI-RS resources.

In some implementations, the CSI-RS resource information may be used for indicating L CSI-RS resources selected by the second terminal device from the first group of CSI-RS resources, where the L is a positive integer greater than or equal to 1.

In some implementations, a value of the L is determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, the second PSFCH may carry $E \times L$ information bits, where the E is used for indicating a quantity of bits required to carry one of the L CSI-RS resources.

In some implementations, the second PSFCH may carry E information bits, where the E is used for indicating a quantity of bits required to carry one of the L CSI-RS resources.

In some implementations, a value of the E is determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, the frequency domain resource of the second PSFCH includes Q PRBs, where the Q is a positive integer greater than 1, For example, Q = 4, 8, 12, or 16.

In some implementations, a value of the Q is determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, the time domain resource of the second PSFCH is determined based on a CSI-RS resource in the first group of CSI-RS resources. For example, the time domain resource of the second PSFCH is determined based on a time domain position of a last CSI-RS resource in the first group of CSI-RS resources in time domain.

For example, as shown in FIG. 31, one group of CSI-RS resources includes four CSI-RS resources, and each group of CSI-RS resources corresponds to one PSFCH slot. The second terminal device may select an optional CSI-RS resource based on a measurement result of each CSI-RS resource in one group of CSI-RS resources, and feed back CSI-RS resource information (such as index information) corresponding to the CSI-RS resource carried in the PSFCH (namely, the second PSFCH described above) to the first terminal device.

In some implementations, the CSI-RS resource information includes CSI-RS index information, and the index information is used for indicating an index of a selected CSI-RS resource in the first group of CSI-RS resources. For example, the first group of CSI-RS resources includes four CSI-RS resources, and index values of corresponding CSI-RS resources are respectively 0, 1, 2, and 3. In this case, the CSI-RS resource information indicates that the index value is 2, which indicates that a third CSI-RS resource of the four CSI-RS resources included in the first group of CSI-RS resources.

In some implementations, at least one of a frequency domain resource or a code domain resource of the first PSFCH may be determined based on one or more of the following: index information of a PRB corresponding to a start position of a CSI-RS frequency domain resource; sub-channel information corresponding to a start position of a CSI-RS frequency domain resource; subcarrier information corresponding to a start position of a CSI-RS frequency domain resource; a quantity of PRBs available for transmitting a CSI-RS in a slot; a size of a frequency domain resource occupied by one CSI-RS (for example, represented by using a quantity of PRBs); a scrambling identity (ScramblingID) used for generating a CSI-RS sequence; a CSI-RS resource set identifier; a CSI-RS resource identifier (for example, an identifier of a CSI-RS resource selected by the second terminal device in a CSI-RS resource set); an index of a CSI-RS transmission opportunity; a time domain position and/or a frequency domain start position of a time-frequency resource that carries indication information V; source identifier information; destination identifier information; a quantity of PSFCHs multiplexed in one frequency domain resource in code division multiplexing mode; or a quantity of PRBs available for transmitting a PSFCH in one slot.

The CSI-RS resource set identifier may be an index corresponding to a CSI-RS resource set determined based on configuration information. For example, at least two CSI-RS resource sets may be determined based on the configuration information. One of the two CSI-RS resource sets is used for determining a transmit beam, and a value of a parameter "repetition" of the CSI-RS resource set is "off". The other of the two CSI-RS resource sets is used for determining a receive beam, and a value of the parameter "repetition" of the CSI-RS resource set is "on". Indexes corresponding to the two resource sets may be 0 and 1 respectively, and the index may be used as the CSI-RS resource set identifier mentioned above.

The CSI-RS transmission opportunity index may be an index of a CSI-RS resource selected by the second terminal device in a group of CSI-RS transmission opportunity sets. For example, a group of CSI-RS transmission opportunity sets includes Y CSI-RS transmission slots, and a corresponding index range is [0, Y-1]. If the CSI-RS resource selected by the second terminal device is a 2nd CSI-RS resource in the group of CSI-RS resources, a transmission resource of a PSFCH for CSI-RS resource information is determined based on an index of the CSI-RS resource in the CSI-RS transmission opportunity set, that is, a value of the index is 1.

The source identifier information may be, for example, source identifier information carried in the SCI. For example, the source identifier information may be an identifier of the first terminal device.

The destination identifier information may be, for example, destination identifier information carried in the SCI. For example, the destination identifier information may be an identifier of the second terminal device, a group identifier of a terminal group in which the second terminal device is located, an intra-group identifier of the second terminal device, or the like.

The indication information V may be transmitted by the first terminal device, and the indication information V may be used for instructing the second terminal device to report CSI-RS resource information. Alternatively, the indication information V is used for instructing the second terminal device to report beam failure indication information.

**Embodiment 7.2: Second signalling or a second channel is SCI or a MAC CE.**

In some implementations, a sidelink transmission resource used for transmitting the second signalling or the second channel is configured based on a network device. For example, in mode 1, the second terminal device transmits an SR to the network device. After the SR is received, the network device configures a sidelink transmission resource for transmitting the second signalling or the second channel for the second terminal device.

In some implementations, the sidelink transmission resource used for transmitting the second signalling or the second channel is determined by the second terminal device in a second time period range. For example, in mode 2, the second terminal device determines, in the second time period range, the sidelink transmission resource used for transmitting the second signalling or second channel.

In some implementations, if the second signalling or the second channel is a MAC CE, only the MAC CE is carried in a PSSCH, or only second-stage SCI and a MAC CE are carried in a PSSCH.

In some implementations, if the second signalling or the second channel is a MAC CE, second-stage SCI, the MAC CE, and other sidelink data are carried in the PSSCH.

In some implementations, a start time of the second time period range may be determined based on one or more of the following information: a time domain position of a last CSI-RS resource in a first group of CSI-RS resources in time domain, or a time interval T7. The first group of CSI-RS resources is a group of CSI-RS resources in which a CSI-RS resource selected by the second terminal device is located. For example, if a slot in which the last CSI-RS resource in the group of CSI-RS resources is located is a slot n, the start position of the second time period range may be a slot n+T7. For example, T7 = 1 slot, 4 slots, 6 slots, 11 slots, or 21 slots. A value of the T7 may be determined based on pre-configuration information, network device configuration information, PC5-RRC signalling, indication information from the first terminal device, or indication information from the second terminal device. A value of the T7 may be related to a sidelink subcarrier spacing, that is, different sidelink subcarrier spacings correspond to different values of the T7.

In some implementations, the start time of the second time period range may be determined based on one or more of the following information: a time domain position of a CSI-RS resource selected by the second terminal device, or a time interval T8. For example, if the time domain position of the CSI-RS resource selected by the second terminal device is a slot n, the start position of the second time period range may be a slot n+T8. For example, T8 = 1 slot, 4 slots, 6 slots, 11 slots, or 21 slots. A value of the T8 may be determined based on pre-configuration information, network device configuration information, PC5-RRC signalling, indication information from the first terminal device, or indication information from the second terminal device. A value of the T8 may be related to a sidelink subcarrier spacing, that is, different sidelink subcarrier spacings correspond to different values of the T8.

In some implementations, an end time of the second time period range may be determined based on one or more of the following: protocol predefined information, pre-configuration information, network device configuration information, resource pool configuration information, PC5-RRC signalling, indication information transmitted by the first terminal device, or indication information transmitted by the second terminal device.

In some implementations, duration corresponding to the second time period range may be determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, the indication information transmitted by the first terminal device is used for indicating a second latency boundary (latency boundary), and the end time of the second time period range is determined based on the start time of the second time period range and the second latency boundary.

For example, the first terminal device transmits indication information to the second terminal device, and the indication information is used for indicating a second latency boundary. The duration corresponding to the second time period range may be determined based on the second latency boundary. Alternatively, the end time of the second time period range may be determined based on the start time of the second time period range and the second latency boundary. The second terminal device may determine duration of a timer (timer) based on duration corresponding to the second latency boundary, and before the timer expires or fails, the second terminal device should report CSI-RS resource information to the first terminal device. A sidelink transmission resource determined by the second terminal device and used for reporting the CSI-RS resource information is located in a position before the timer expires or fails. The timer may be started when the second terminal device receives indication information transmitted by the first terminal device and instructing to transmit a CSI-RS, or receives indication information transmitted by the first terminal device and instructing the second terminal device to report beam failure indication information, or receives indication information transmitted by the first terminal device and instructing the second terminal device to report CSI-RS resource information, or receives a first CSI-RS or a last CSI-RS used for determining a transmit beam.

The following describes a condition for reporting CSI-RS resource information to the first terminal device by the second terminal device.

In some implementations, the reporting of the CSI-RS resource information may include one or more of the following: condition-based reporting, trigger-based reporting, or periodic reporting.

The condition-based reporting may include, for example: if the second terminal device determines that a beam failure occurs, the second terminal device reports the CSI-RS resource information to the first terminal device.

The trigger-based reporting may include, for example: if the second terminal device receives indication information transmitted by the first terminal device, and the indication information instructs the second terminal device to report the CSI-RS resource information, the second terminal device reports the CSI-RS resource information to the first terminal device.

The trigger-based reporting may alternatively include: if the second terminal device receives indication information transmitted by the first terminal device, and the indication information instructs the second terminal device to report the beam failure indication information, the second terminal device reports the beam failure indication information to the first terminal device, and reports the CSI-RS resource information together with the beam failure indication information.

The trigger-based reporting may include, for example: if the second terminal device receives indication information transmitted by the first terminal device, and the indication information instructs the second terminal device to report the beam failure indication information, the second terminal device reports the CSI-RS resource information to the first terminal device.

The trigger-based reporting may alternatively include: if the second terminal device receives indication information transmitted by the first terminal device, and the indication information instructs the second terminal device to report the beam failure indication information, the second terminal device may separately report the beam failure indication information and the CSI-RS resource information to the first terminal device.

It should be understood that, all CSI-RSs or CSI-RS resources mentioned in embodiments of this application may refer to sidelink CSI-RSs or sidelink CSI-RS resources. The CSI-RS resource mentioned in embodiments of this application may also be referred to as or replaced with a CSI-RS transmission resource.

It should be further understood that, symbols mentioned in embodiments of this application may all be referred to or replaced with time domain symbols or OFDM symbols.

It should be further understood that, the time domain position mentioned in embodiments of this application may refer to or be replaced with a time domain unit or a time domain resource.

It should be further understood that, the time domain unit or time domain position mentioned in embodiments of this application may refer to a slot.

It should be further understood that, in each embodiment of this application, when a time domain position of a transmission resource is determined based on a time domain unit or a time unit, the time domain position of the transmission resource may be determined based on a start position of the time domain unit or the time unit, or the time domain position of the transmission resource may be determined based on an end position of the time domain unit or the time unit.

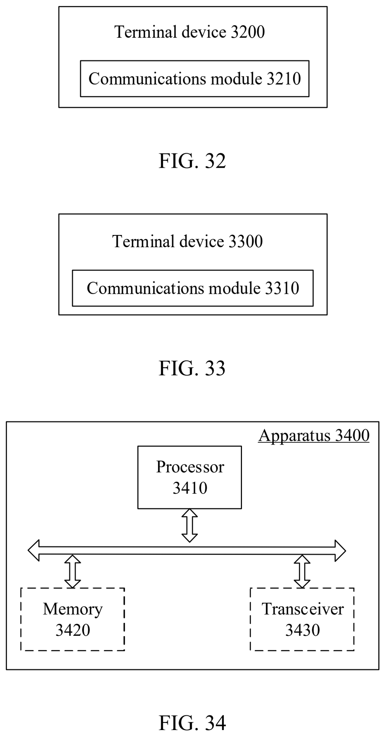

The method embodiments of this application are described above in detail with reference to FIG. 1 to FIG. 31. Apparatus embodiments of this application are described below in detail with reference to FIG. 32 to FIG. 34. It should be understood that the descriptions of the method embodiments correspond to descriptions of the apparatus embodiments, and therefore, for parts that are not described in detail, reference may be made to the foregoing method embodiments.

FIG. 32 is a schematic structural diagram of a terminal device according to an embodiment of this application. A terminal device 3200 shown in FIG. 32 may be the first terminal device mentioned in any one of the foregoing embodiments. The terminal device 3200 may include a communications module 3210.

The communications module 3210 may be configured to receive first information reported by a second terminal device, where the first information includes one or more of the following information: CSI-RS resource information; beam failure indication information; or a measurement result corresponding to CSI-RS resource information, where the CSI-RS resource information is used for indicating a CSI-RS resource selected by the second terminal device.

Optionally, in some implementations, the beam failure indication information is determined based on measurement of J CSI-RS resources, and the J is a positive integer greater than or equal to 1.

Optionally, in some implementations, the beam failure indication information is determined based on one or more of the following: a first parameter; or first indication information received by a higher layer of the second terminal device. The first indication information is determined based on measurement results corresponding to A CSI-RS resources, the A CSI-RS resources belong to the J CSI-RS resources, and the A is a positive integer greater than or equal to 1.

Optionally, in some implementations, the A CSI-RS resources are periodic CSI-RS resources.

Optionally, in some implementations, the first terminal device transmits the A CSI-RS resources by using a same spatial domain transmission filter.

Optionally, in some implementations, the A CSI-RS resources correspond to A measurement results. In a case that measurement values corresponding to B measurement results in the A measurement results are all less than or equal to a first threshold, the first indication information is reported to the higher layer of the second terminal device. The B is a positive integer less than or equal to the A.

Optionally, in some implementations, a value of the B is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, if a first measurement value is less than or equal to a first threshold, the first indication information is reported to a higher layer of the second terminal device. The first measurement value is determined based on an average value, a maximum value, or a minimum value of the A measurement results corresponding to the A CSI-RS resources.

Optionally, in some implementations, a value of the A is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the higher layer is a MAC layer.

Optionally, in some implementations, the first indication information includes a beam failure instance.

Optionally, in some implementations, the first parameter includes one or more of the following: a first timer; or a first counter.

Optionally, in some implementations, timing duration of the first timer is determined based on a period parameter corresponding to the A CSI-RS resources.

Optionally, in some implementations, the timing duration of the first timer is equal to $A \times P$, where P denotes a period value indicated by using the period parameter.

Optionally, in some implementations, a count value of the first counter is determined based on a quantity of pieces of the first indication information received by the higher layer.

Optionally, in some implementations, the first timer meets one or more of the following: in a case that the higher layer receives the first indication information, starting or restarting the first timer; or in a case that the first timer expires, restarting the first timer.

Optionally, in some implementations, the first counter meets one or more of the following: in a case that the higher layer receives the first indication information, increasing a count value of the first counter by 1; in a case that the first counter is greater than or equal to a second threshold, determining that a beam failure occurs or beam failure recovery is triggered; in a case that the first timer expires, setting a count value of the first counter to 0; or in a case that the first counter is equal to the second threshold, setting the count value of the first counter to 0.

Optionally, in some implementations, the measurement results include an RSRP and/or an SINR.

Optionally, in some implementations, priorities of the J CSI-RS resources are determined based on protocol predefined information, pre-configuration information, or network configuration information; or priorities of the J CSI-RS resources are a highest priority or a lowest priority in preset priorities.

Optionally, in some implementations, reporting of the beam failure indication information includes one or more of the following: condition-based reporting, trigger-based reporting, or periodic reporting.

Optionally, in some implementations, reporting of the beam failure indication information is performed in one or more of the following cases: when the second terminal device determines that a beam failure occurs; when the second terminal device receives indication information used for triggering the second terminal device to report the beam failure indication information; or when a reporting period of the beam failure indication information is reached.

Optionally, in some implementations, the CSI-RS resource information is determined based on measurement of M CSI-RS resources, and the M is a positive integer greater than or equal to 1.

Optionally, in some implementations, the M CSI-RS resources are periodic CSI-RS resources.

Optionally, in some implementations, the first terminal device transmits the M CSI-RS resources by using different spatial domain transmission filters, or the first terminal device does not transmit the M CSI-RS resources by using a same spatial domain transmission filter.

Optionally, in some implementations, priorities of the M CSI-RS resources are determined based on protocol predefined information, pre-configuration information, or network configuration information; or priorities of the M CSI-RS resources are a highest priority or a lowest priority in preset priorities.

Optionally, in some implementations, the CSI-RS resource information is used for indicating D CSI-RS resources selected by the second terminal device, and the D CSI-RS resources are selected in one of the following manners: being selected in descending order based on measurement results corresponding to the M CSI-RS resources; being selected in descending order based on measurement results corresponding to C CSI-RS resources; or being randomly selected from C CSI-RS resources, the C CSI-RS resources correspond to C measurement results, measurement values corresponding to the C measurement results are all greater than or equal to a third threshold, the C is a positive integer greater than or equal to 1, and the D is a positive integer less than or equal to C.

Optionally, in some implementations, a value of the C is determined based on one or more of the following: protocol predefined information, pre-configuration information, network device configuration information, resource pool configuration information, PC5-RRC signalling, indication information transmitted by the first terminal device, or indication information transmitted by the second terminal device; and/or a value of the D is determined based on one or more of the following: protocol predefined information, pre-configuration information, network device configuration information, resource pool configuration information, PC5-RRC signalling, indication information transmitted by the first terminal device, or indication information transmitted by the second terminal device; and/or the third threshold is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, reporting of the CSI-RS resource information includes one or more of the following: condition-based reporting, trigger-based reporting, or periodic reporting.

Optionally, in some implementations, reporting of the CSI-RS resource information is performed in one or more of the following cases: when the second terminal device determines that a beam failure occurs; when the second terminal device receives second indication information; or when a reporting period of the CSI-RS resource information is reached. The second indication information is transmitted by the first terminal device, and the second indication information is used for instructing the second terminal device to report the CSI-RS resource information; or the second indication information is used for instructing the second terminal device to report the beam failure indication information.

Optionally, in some implementations, the beam failure indication information is carried in first signalling or a first channel, and the first signalling or the first channel includes one or more of the following: a PSFCH, SCI, a MAC CE, or PC5-RRC signalling.

Optionally, in some implementations, the first signalling or the first channel is a first PSFCH.

Optionally, in some implementations, the first PSFCH is used for carrying a first sequence, and the first sequence is generated based on the beam failure indication information.

Optionally, in some implementations, the first PSFCH occupies K physical resource blocks PRBs in frequency domain, and the K is a positive integer greater than or equal to 1.

Optionally, in some implementations, in a case that the K is equal to 1, the first sequence is a sequence whose length is t; or in a case that the K is greater than 1, the first sequence is a sequence whose length is $t \times K$; or in a case that the K is greater than 1, the first sequence is a sequence whose length is t, and sequences to which the K PRBs are mapped are all generated based on the first sequence, where t denotes a quantity of subcarriers included in one PRB.

Optionally, in some implementations, the first sequence is generated based on one or more of the following: a root sequence; or a cyclic shift.

Optionally, in some implementations, the cyclic shift is generated based on one or more of the following: a slot number; a quantity of subcarriers included in one resource block RB; a quantity of symbols included in one slot; index information corresponding to a symbol for transmitting a PSFCH in a slot; a pseudorandom sequence; a second parameter determined based on a quantity of cyclic shift pairs or cyclic shifts; or a third parameter determined depending on whether a beam failure occurs.

Optionally, in some implementations, in a case that a beam failure occurs, a value of the third parameter is 6, and/or in a case that no beam failure occurs, a value of the third parameter is 0.

Optionally, in some implementations, a time domain resource of the first PSFCH is determined based on one of the following: a time domain position of A CSI-RS resources used for beam failure detection, where the A is a positive integer greater than or equal to 1; a time domain position in which third indication information is located, where the third indication information is used for instructing the second terminal device to report the beam failure indication information; and a time domain position of a first target CSI-RS resource, where the first target CSI-RS resource is associated with a CSI-RS resource selected by the second terminal device after a beam failure is detected.

Optionally, in some implementations, the time domain resource of the first PSFCH is determined based on a time domain location of a last CSI-RS resource in the A CSI-RS resources.

Optionally, in some implementations, the time domain resource of the first PSFCH includes a second-to-last symbol and a third-to-last symbol that are available for sidelink transmission in a slot, and same data is transmitted on the second-to-last symbol and the third-to-last symbol.

Optionally, in some implementations, the first signalling or the first channel is SCI, a MAC CE, or PC5-RRC signalling.

Optionally, in some implementations, the beam failure indication information is transmitted together with target information (which may refer to the foregoing information w), and the target information includes one or more of the following: the CSI-RS resource information; or the measurement result corresponding to the CSI-RS resource information.

Optionally, in some implementations, the beam failure indication information and the target information are carried by using same signalling; or the beam failure indication information and the target information are carried by using different signalling; or the beam failure indication information is carried in a plurality of types of signalling; or the target information is carried in a plurality of types of signalling.

Optionally, in some implementations, both the beam failure indication information and the target information are carried by using SCI; or both the beam failure indication information and the target information are carried by using a MAC CE; or the beam failure indication information is carried by using SCI, and the target information is carried by using a MAC CE; or the beam indication information is carried in both SCI and a MAC CE; or the target information is carried in both SCI and a MAC CE.

Optionally, in some implementations, a sidelink transmission resource used for transmitting the first signalling or the first channel is configured based on a network device or determined by the second terminal device in a first time period range.

Optionally, in some implementations, the first signalling or the first channel is a MAC CE, and a physical sidelink shared channel PSSCH carries only second-stage SCI and the MAC CE, or the PSSCH carries second-stage SCI, the MAC CE, and other sidelink data.

Optionally, in some implementations, a start time of the first time period range is determined based on one of the following: a time domain position of a last CSI-RS resource of A CSI-RS resources used for beam failure detection, where the A is a positive integer greater than or equal to 1; a time domain position in which fourth indication information is located, where the fourth indication information is transmitted by the first terminal device, and the fourth indication information is used for instructing the second terminal device to report the beam failure indication information; a time domain position of a first target CSI-RS resource, where the first target CSI-RS resource is associated with a CSI-RS resource selected by the second terminal device after a beam failure is detected; and a first time interval.

Optionally, in some implementations, the first time interval is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, a value of the first time interval is determined based on a sidelink subcarrier spacing.

Optionally, in some implementations, an end time of the first time period range is determined based on one or more of the following: protocol predefined information, pre-configuration information, network device configuration information, resource pool configuration information, PC5-RRC signalling, indication information transmitted by the first terminal device, or indication information transmitted by the second terminal device; or duration corresponding to the first time period range is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the indication information transmitted by the first terminal device is used for indicating a first latency boundary, and the end time of the first time period range is determined based on the start time of the first time period range and the first latency boundary.

Optionally, in some implementations, in a case that the first signalling or the first channel is a PSFCH, SCI, or a MAC CE, a priority corresponding to the first signalling or the first channel is determined based on protocol predefined information, pre-configuration information, or network device information; or in a case that the first signalling or the first channel is a PSFCH, SCI, or a MAC CE, a priority corresponding to the first signalling or the first channel is a highest priority in preset priorities.

Optionally, in some implementations, the CSI-RS resource information is carried in a second signalling or a second channel, and the second signalling or the second channel includes one or more of the following: a PSFCH; SCI; a MAC CE; or PC5-RRC signalling.

Optionally, in some implementations, the second signalling or the second channel is a second PSFCH.

Optionally, in some implementations, a transmission resource of the second PSFCH is associated with a transmission resource of the selected CSI-RS resource.

Optionally, in some implementations, a time domain resource of the second PSFCH is determined based on a time domain position of the selected CSI-RS resource.

Optionally, in some implementations, the second PSFCH carries one information bit, and when a value of the one information bit is a first value, the one information bit is used for indicating that a CSI-RS resource associated with the second PSFCH is a CSI-RS resource selected by the second terminal device.

Optionally, in some implementations, a frequency domain resource of the second PSFCH includes one PRB.

Optionally, in some implementations, there is a second time interval between the second PSFCH and the selected CSI-RS resource, and the second time interval is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the selected CSI-RS resource belongs to a first group of CSI-RS resources, and a transmission resource of the second PSFCH is associated with a transmission resource of the first group of CSI-RS resources.

Optionally, in some implementations, the CSI-RS resource information is used for indicating L CSI-RS resources selected by the second terminal device from the first group of CSI-RS resources, where the L is a positive integer greater than or equal to 1.

Optionally, in some implementations, a value of the L is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the second PSFCH carries $E \times L$ information bits, and the E is used for indicating a quantity of bits required to carry one CSI-RS resource in the L CSI-RS resources.

Optionally, in some implementations, the frequency domain resource of the second PSFCH includes Q PRBs, where Q is a positive integer greater than 1.

Optionally, in some implementations, a value of the Q is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the time domain resource of the second PSFCH is determined based on a time domain position of a last CSI-RS resource in the first set of CSI-RS resources in time domain.

Optionally, in some implementations, at least one of the frequency domain resource or a code domain resource of the second PSFCH is determined based on one or more of the following: index information of a PRB corresponding to a start position of a CSI-RS frequency domain resource; sub-channel information corresponding to a start position of a CSI-RS frequency domain resource; subcarrier information corresponding to a start position of a CSI-RS frequency domain resource; a quantity of PRBs available for transmitting a CSI-RS in a slot; a size of a frequency domain resource occupied by one CSI-RS; a scrambling identity used for generating a CSI-RS sequence; a CSI-RS resource set identifier; a CSI-RS resource identifier; an index of the selected CSI-RS resource in a group of CSI-RS resources; a time domain position and/or a frequency domain start position of a time-frequency resource that carries fifth indication information; source identifier information; destination identifier information; a quantity of PSFCHs multiplexed in one frequency domain resource in code division multiplexing mode; or a quantity of PRBs available for transmitting a PSFCH in one slot. The fifth indication information is transmitted by the first terminal device, and the fifth indication information is used for instructing the second terminal device to report the CSI-RS resource information; or the fifth indication information is used for instructing the second terminal device to report the beam failure indication information.

Optionally, in some implementations, the time domain resource of the second PSFCH includes a second-to-last symbol and a third-to-last symbol that are available for sidelink transmission in a slot, and same data is transmitted on the second-to-last symbol and the third-to-last symbol.

Optionally, in some implementations, the second signalling or the second channel is SCI or a MAC CE.

Optionally, in some implementations, the second signalling or the second channel is a MAC CE, and a PSSCH carries only second-stage SCI and the MAC CE, or the PSSCH carries second-stage SCI, the MAC CE, and other sidelink data.

Optionally, in some implementations, a sidelink transmission resource used for carrying the second signalling or the first channel is configured based on a network device or determined by the second terminal device in a second time period range.

Optionally, in some implementations, a start time of the second time period range is determined based on one of the following: a time domain position of the selected CSI-RS resource; a time domain position of a last CSI-RS resource in a first group of CSI-RS resources in time domain, where the selected CSI-RS resource belongs to the first group of CSI-RS resources; and a third time interval.

Optionally, in some implementations, the third time interval is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, a value of the third time interval is determined based on a sidelink subcarrier spacing.

Optionally, in some implementations, an end time of the second time period range is determined based on one or more of the following: protocol predefined information, pre-configuration information, network device configuration information, resource pool configuration information, PC5-RRC signalling, indication information transmitted by the first terminal device, or indication information transmitted by the second terminal device; or duration corresponding to the second time period range is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the indication information transmitted by the first terminal device is used for indicating a second latency boundary, and the end time of the second time period range is determined based on the start time of the second time period range and the second latency boundary.

Optionally, in some implementations, in a case that the second signalling or the second channel is a PSFCH, SCI, or a MAC CE, a priority corresponding to the second signalling or the second channel is determined based on protocol predefined information, pre-configuration information, or network device information; or in a case that the second signalling or the second channel is a PSFCH, SCI, or a MAC CE, a priority corresponding to the second signalling or the second channel is a highest priority in preset priorities.

Optionally, in some implementations, in a case that the first information is carried in a MAC CE, SCI transmitted together with the first information includes sixth indication information; or in a case that the first information is carried in SCI, the SCI that carries the first information includes the sixth indication information, where the sixth indication information is used for instructing to activate sidelink feedback.

FIG. 33 is a schematic structural diagram of a terminal device according to another embodiment of this application. The terminal device 3300 may be the second terminal device mentioned in any one of the foregoing embodiments. The terminal device 3300 may include a communications module 3310. The communications module 3310 may be configured to report first information to a first terminal device, where the first information includes one or more of the following information: CSI-RS resource information; beam failure indication information; or a measurement result corresponding to CSI-RS resource information, where the CSI-RS resource information is used for indicating a CSI-RS resource selected by the second terminal device.

Optionally, in some implementations, the beam failure indication information is determined based on measurement of J CSI-RS resources, and the J is a positive integer greater than or equal to 1.

Optionally, in some implementations, the beam failure indication information is determined based on one or more of the following: a first parameter; or first indication information received by a higher layer of the second terminal device. The first indication information is determined based on measurement results corresponding to A CSI-RS resources, the A CSI-RS resources belong to the J CSI-RS resources, and the A is a positive integer greater than or equal to 1.

Optionally, in some implementations, the A CSI-RS resources are periodic CSI-RS resources.

Optionally, in some implementations, the first terminal device transmits the A CSI-RS resources by using a same spatial domain transmission filter.

Optionally, in some implementations, the A CSI-RS resources correspond to A measurement results. In a case that measurement values corresponding to B measurement results in the A measurement results are all less than or equal to a first threshold, the first indication information is reported to the higher layer of the second terminal device. The B is a positive integer less than or equal to the A.

Optionally, in some implementations, a value of the B is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, if a first measurement value is less than or equal to a first threshold, the first indication information is reported to a higher layer of the second terminal device. The first measurement value is determined based on an average value, a maximum value, or a minimum value of the A measurement results corresponding to the A CSI-RS resources.

Optionally, in some implementations, a value of the A is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the higher layer is a MAC layer.

Optionally, in some implementations, the first indication information includes a beam failure instance.

Optionally, in some implementations, the first parameter includes one or more of the following: a first timer; or a first counter.

Optionally, in some implementations, timing duration of the first timer is determined based on a period parameter corresponding to the A CSI-RS resources.

Optionally, in some implementations, the timing duration of the first timer is equal to A×P, where P denotes a period value indicated by using the period parameter.

Optionally, in some implementations, a count value of the first counter is determined based on a quantity of pieces of the first indication information received by the higher layer.

Optionally, in some implementations, the first timer meets one or more of the following: in a case that the higher layer receives the first indication information, starting or restarting the first timer; or in a case that the first timer expires, restarting the first timer.

Optionally, in some implementations, the first counter meets one or more of the following: in a case that the higher layer receives the first indication information, increasing a count value of the first counter by 1; in a case that the first counter is greater than or equal to a second threshold, determining that a beam failure occurs or beam failure recovery is triggered; in a case that the first timer expires, setting a count value of the first counter to 0; or in a case that the first counter is equal to the second threshold, setting the count value of the first counter to 0.

Optionally, in some implementations, the measurement results include an RSRP and/or an SINR.

Optionally, in some implementations, priorities of the J CSI-RS resources are determined based on protocol predefined information, pre-configuration information, or network configuration information; or priorities of the J CSI-RS resources are a highest priority or a lowest priority in preset priorities.

Optionally, in some implementations, reporting of the beam failure indication information includes one or more of the following: condition-based reporting, trigger-based reporting, or periodic reporting.

Optionally, in some implementations, reporting of the beam failure indication information is performed in one or more of the following cases: when the second terminal device determines that a beam failure occurs; when the second terminal device receives indication information used for triggering the second terminal device to report the beam failure indication information; or when a reporting period of the beam failure indication information is reached.

Optionally, in some implementations, the CSI-RS resource information is determined based on measurement of M CSI-RS resources, and the M is a positive integer greater than or equal to 1.

Optionally, in some implementations, the M CSI-RS resources are periodic CSI-RS resources.

Optionally, in some implementations, the first terminal device transmits the M CSI-RS resources by using different spatial domain transmission filters, or the first terminal device does not transmit the M CSI-RS resources by using a same spatial domain transmission filter.

Optionally, in some implementations, priorities of the M CSI-RS resources are determined based on protocol predefined information, pre-configuration information, or network configuration information; or priorities of the M CSI-RS resources are a highest priority or a lowest priority in preset priorities.

Optionally, in some implementations, the CSI-RS resource information is used for indicating D CSI-RS resources selected by the second terminal device, and the D CSI-RS resources are selected in one of the following manners: being selected in descending order based on measurement results corresponding to the M CSI-RS resources; being selected in descending order based on measurement results corresponding to C CSI-RS resources; or being randomly selected from C CSI-RS resources. The C CSI-RS resources correspond to C measurement results, measurement values corresponding to the C measurement results are all greater than or equal to a third threshold, the C is a positive integer greater than or equal to 1, and the D is a positive integer less than or equal to C.

Optionally, in some implementations, a value of the C is determined based on one or more of the following: protocol predefined information, pre-configuration information, network device configuration information, resource pool configuration information, PC5-RRC signalling, indication information transmitted by the first terminal device, or indication information transmitted by the second terminal device; and/or a value of the D is determined based on one or more of the following: protocol predefined information, pre-configuration information, network device configuration information, resource pool configuration information, PC5-RRC signalling, indication information transmitted by the first terminal device, or indication information transmitted by the second terminal device; and/or the third threshold is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, reporting of the CSI-RS resource information includes one or more of the following: condition-based reporting, trigger-based reporting, or periodic reporting.

Optionally, in some implementations, reporting of the CSI-RS resource information is performed in one or more of the following cases: when the second terminal device determines that a beam failure occurs; when the second terminal device receives second indication information; or when a reporting period of the CSI-RS resource information is reached. The second indication information is transmitted by the first terminal device, and the second indication information is used for instructing the second terminal device to report the CSI-RS resource information; or the second indication information is used for instructing the second terminal device to report the beam failure indication information.

Optionally, in some implementations, the beam failure indication information is carried in first signalling or a first channel, and the first signalling or the first channel includes one or more of the following: a PSFCH, SCI, a MAC CE, or PC5-RRC signalling.

Optionally, in some implementations, the first signalling or the first channel is a first PSFCH.

Optionally, in some implementations, the first PSFCH is used for carrying a first sequence, and the first sequence is generated based on the beam failure indication information.

Optionally, in some implementations, the first PSFCH occupies K physical resource blocks PRBs in frequency domain, and the K is a positive integer greater than or equal to 1.

Optionally, in some implementations, in a case that the K is equal to 1, the first sequence is a sequence whose length is t; or in a case that the K is greater than 1, the first sequence is a sequence whose length is $t \times K$; or in a case that the K is greater than 1, the first sequence is a sequence whose length is t, and sequences to which the K PRBs are mapped are all generated based on the first sequence, where t denotes a quantity of subcarriers included in one PRB.

Optionally, in some implementations, the first sequence is generated based on one or more of the following: a root sequence; or a cyclic shift.

Optionally, in some implementations, the cyclic shift is generated based on one or more of the following: a slot number; a quantity of subcarriers included in one resource block RB; a quantity of symbols included in one slot; index information corresponding to a symbol for transmitting a PSFCH in a slot; a pseudorandom sequence; a second parameter determined based on a quantity of cyclic shift pairs or cyclic shifts; or a third parameter determined depending on whether a beam failure occurs.

Optionally, in some implementations, in a case that a beam failure occurs, a value of the third parameter is 6, and/or in a case that no beam failure occurs, a value of the third parameter is 0.

Optionally, in some implementations, a time domain resource of the first PSFCH is determined based on one of the following: a time domain position of A CSI-RS resources used for beam failure detection, where the A is a positive integer greater than or equal to 1; a time domain position in which third indication information is located, where the third indication information is used for instructing the second terminal device to report the beam failure indication information; and a time domain position of a first target CSI-RS resource, where the first target CSI-RS resource is associated with a CSI-RS resource selected by the second terminal device after a beam failure is detected.

Optionally, in some implementations, the time domain resource of the first PSFCH is determined based on a time domain location of a last CSI-RS resource in the A CSI-RS resources.

Optionally, in some implementations, the time domain resource of the first PSFCH includes a second-to-last symbol and a third-to-last symbol that are available for sidelink transmission in a slot, and same data is transmitted on the second-to-last symbol and the third-to-last symbol.

Optionally, in some implementations, the first signalling or the first channel is SCI, a MAC CE, or PC5-RRC signalling.

Optionally, in some implementations, the beam failure indication information is transmitted together with target information, and the target information includes one or more of the following: the CSI-RS resource information; or a measurement result corresponding to the CSI-RS resource information.

Optionally, in some implementations, the beam failure indication information and the target information are carried by using same signalling. The beam failure indication information and the target information are carried by using different signalling; or the beam failure indication information is carried in a plurality of types of signalling; or the target information is carried in a plurality of types of signalling.

Optionally, in some implementations, both the beam failure indication information and the target information are carried by using SCI; or the beam failure indication information and the target information are carried by using a MAC CE; or the beam failure indication information is carried by using SCI, and the target information is carried by using a MAC CE; or the beam failure indication information is carried in both SCI and a MAC CE; or the target information is carried in both SCI and a MAC CE.

Optionally, in some implementations, a sidelink transmission resource used for transmitting the first signalling or the first channel is configured based on a network device or determined by the second terminal device in a first time period range.

Optionally, in some implementations, the first signalling or the first channel is a MAC CE, and a PSSCH carries only second-stage SCI and the MAC CE, or the PSSCH carries second-stage SCI, the MAC CE, and other sidelink data.

Optionally, in some implementations, a start time of the first time period range is determined based on one of the following: a time domain position of a last CSI-RS resource of A CSI-RS resources used for beam failure detection, where the A is a positive integer greater than or equal to 1; a time domain position in which fourth indication information is located, where the fourth indication information is transmitted by the first terminal device, and the fourth indication information is used for instructing the second terminal device to report the beam failure indication information; a time domain position of a first target CSI-RS resource, where the first target CSI-RS resource is associated with a CSI-RS resource selected by the second terminal device after a beam failure is detected; and a first time interval.

Optionally, in some implementations, the first time interval is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, a value of the first time interval is determined based on a sidelink subcarrier spacing.

Optionally, in some implementations, an end time of the first time period range is determined based on one or more of the following: protocol predefined information, pre-configuration information, network device configuration information, resource pool configuration information, PC5-RRC signalling, indication information transmitted by the first terminal device, or indication information transmitted by the second terminal device; or duration corresponding to the first time period range is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the indication information transmitted by the first terminal device is used for indicating a first latency boundary, and the end time of the first time period range is determined based on the start time of the first time period range and the first latency boundary.

Optionally, in some implementations, in a case that the first signalling or the first channel is a PSFCH, SCI, or a MAC CE, a priority corresponding to the first signalling or the first channel is determined based on protocol predefined information, pre-configuration information, or network device information; or in a case that the first signalling or the first channel is a PSFCH, SCI, or a MAC CE, a priority corresponding to the first signalling or the first channel is a highest priority in preset priorities.

Optionally, in some implementations, the CSI-RS resource information is carried in second signalling or a second channel, and the second signalling or the second channel includes one or more of the following: a PSFCH; SCI; a MAC CE; or PC5-RRC signalling.

Optionally, in some implementations, the second signalling or the second channel is a second PSFCH.

Optionally, in some implementations, a transmission resource of the second PSFCH is associated with a transmission resource of the selected CSI-RS resource.

Optionally, in some implementations, a time domain resource of the second PSFCH is determined based on a time domain position of the selected CSI-RS resource.

Optionally, in some implementations, the second PSFCH carries one information bit, and when a value of the one information bit is a first value, the one information bit is used for indicating that a CSI-RS resource associated with the second PSFCH is a CSI-RS resource selected by the second terminal device.

Optionally, in some implementations, a frequency domain resource of the second PSFCH includes one PRB.

Optionally, in some implementations, there is a second time interval between the second PSFCH and the selected CSI-RS resource, and the second time interval is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the selected CSI-RS resource belongs to a first group of CSI-RS resources, and a transmission resource of the second PSFCH is associated with a transmission resource of the first group of CSI-RS resources.

Optionally, in some implementations, the CSI-RS resource information is used for indicating L CSI-RS resources selected by the second terminal device from the first group of CSI-RS resources, where the L is a positive integer greater than or equal to 1.

Optionally, in some implementations, a value of the L is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the second PSFCH carries $E \times L$ information bits, and the E is used for indicating a quantity of bits required to carry one CSI-RS resource in the L CSI-RS resources.

Optionally, in some implementations, the frequency domain resource of the second PSFCH includes Q PRBs, where Q is a positive integer greater than 1.

Optionally, in some implementations, a value of the Q is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the time domain resource of the second PSFCH is determined based on a time domain position of a last CSI-RS resource in the first group of CSI-RS resources in time domain.

Optionally, in some implementations, at least one of the frequency domain resource or a code domain resource of the second PSFCH is determined based on one or more of the following: index information of a PRB corresponding to a start position of a CSI-RS frequency domain resource; sub-channel information corresponding to a start position of a CSI-RS frequency domain resource; subcarrier information corresponding to a start position of a CSI-RS frequency domain resource; a quantity of PRBs available for transmitting a CSI-RS in a slot; a size of a frequency domain resource occupied by one CSI-RS; a scrambling identity used for generating a CSI-RS sequence; a CSI-RS resource set identifier; a CSI-RS resource identifier; an index of the selected CSI-RS resource in a group of CSI-RS resources; a time domain position and/or a frequency domain start position of a time-frequency resource that carries fifth indication information; source identifier information; destination identifier information; a quantity of PSFCHs multiplexed in one frequency domain resource in code division multiplexing mode; or a quantity of PRBs available for transmitting a PSFCH in one slot. The fifth indication information is transmitted by the first terminal device, and the fifth indication information is used for instructing the second terminal device to report the CSI-RS resource information; or the fifth indication information is used for instructing the second terminal device to report the beam failure indication information.

Optionally, in some implementations, the time domain resource of the second PSFCH includes a second-to-last symbol and a third-to-last symbol that are available for sidelink transmission in a slot, and same data is transmitted on the second-to-last symbol and the third-to-last symbol.

Optionally, in some implementations, the second signalling or the second channel is SCI or a MAC CE.

Optionally, in some implementations, the second signalling or the second channel is a MAC CE, and a PSSCH carries only second-stage SCI and the MAC CE, or the PSSCH carries second-stage SCI, the MAC CE, and other sidelink data.

Optionally, in some implementations, a sidelink transmission resource used for carrying the second signalling or the first channel is configured based on a network device or determined by the second terminal device in a second time period range.

Optionally, in some implementations, a start time of the second time period range is determined based on one of the following: a time domain position of the selected CSI-RS resource; a time domain position of a last CSI-RS resource in a first group of CSI-RS resources in time domain, where the selected CSI-RS resource belongs to the first group of CSI-RS resources; and a third time interval.

Optionally, in some implementations, the third time interval is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, a value of the third time interval is determined based on a sidelink subcarrier spacing.

Optionally, in some implementations, an end time of the second time period range is determined based on one or more of following: protocol predefined information, pre-configuration information, network device configuration information, resource pool configuration information, PC5-RRC signalling, indication information transmitted by the first terminal device, or indication information transmitted by the second terminal device; or duration corresponding to the second time period range is determined based on one or more of the following: protocol predefined information, pre-configuration information, network device configuration information, resource pool configuration information, PC5-RRC signalling, indication information transmitted by the first terminal device, or indication information transmitted by the second terminal device.

Optionally, in some implementations, the indication information transmitted by the first terminal device is used for indicating a second latency boundary, and the end time of the second time period range is determined based on the start time of the second time period range and the second latency boundary.

Optionally, in some implementations, in a case that the second signalling or the second channel is a PSFCH, SCI, or a MAC CE, a priority corresponding to the second signalling or the second channel is determined based on protocol predefined information, pre-configuration information, or network device information; or in a case that the second signalling or the second channel is a PSFCH, SCI, or a MAC CE, a priority corresponding to the second signalling or the second channel is a highest priority in preset priorities.

Optionally, in some implementations, in a case that the first information is carried in a MAC CE, SCI transmitted together with the first information includes sixth indication information; or in a case that the first information is carried in SCI, the SCI that carries the first information includes the sixth indication information, where the sixth indication information is used for instructing to activate sidelink feedback.

FIG. 34 is a schematic structural diagram of an apparatus according to an embodiment of this application. Dashed lines in FIG. 34 indicate that a unit or module is optional. The apparatus 3400 may be configured to implement the methods described in the foregoing method embodiments. The apparatus 3400 may be a chip or a terminal device.

The apparatus 3400 may include one or more processors 3410. The processor 3410 may support the apparatus 3400 in implementing the methods described in the foregoing method embodiments. The processor 3410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3400 may further include one or more memories 3420. The memory 3420 stores a program, and the program may be executed by the processor 3410, to cause the processor 3410 to execute the methods described in the foregoing method embodiments. The memory 3420 may be separate from the processor 3410 or may be integrated into the processor 3410.

The apparatus 3400 may further include a transceiver 3430. The processor 3410 may communicate with another device or chip by using the transceiver 3430. For example, the processor 3410 may transmit data to and receive data from another device or chip by using the transceiver 3430.

An embodiment of this application further provides a computer-readable storage medium for storing a program. The computer-readable storage medium may be applied to the terminal device provided in embodiments of this application, and the program causes a computer to perform the methods performed by the terminal device in various embodiments of this application.

An embodiment of this application further provides a computer program product. The computer program product includes a program. The computer program product may be applied to the terminal device provided in embodiments of this application, and the program causes a computer to perform the methods performed by the terminal device in various embodiments of this application.

An embodiment of this application further provides a computer program. The computer program may be applied to the terminal device provided in embodiments of this application, and the computer program causes a computer to perform the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A sidelink transmission method, comprising:
receiving, by a first terminal device, first information reported by a second terminal device, wherein the first information comprises one or more of following information:

channel state information reference signal CSI-RS resource information;
beam failure indication information; or
a measurement result corresponding to CSI-RS resource information,
wherein the CSI-RS resource information is used for indicating a CSI-RS resource selected by the second terminal device.

2.   The method according to claim 1, wherein the beam failure indication information is determined based on measurement of J CSI-RS resources, and the J is a positive integer greater than or equal to 1.

3.   The method according to claim 2, wherein the beam failure indication information is determined based on one or more of following:

a first parameter; or
first indication information received by a higher layer of the second terminal device,
wherein the first indication information is determined based on measurement results corresponding to A CSI-RS resources, the A CSI-RS resources belong to the J CSI-RS resources, and the A is a positive integer greater than or equal to 1.

4.   The method according to claim 3, wherein the A CSI-RS resources are periodic CSI-RS resources.

5.   The method according to claim 3 or 4, wherein the first terminal device transmits the A CSI-RS resources by using a same spatial domain transmission filter.

6.   The method according to any one of claims 3 to 5, wherein

the A CSI-RS resources correspond to A measurement results, and in a case that measurement values corresponding to B measurement results in the A measurement results are all less than or equal to a first threshold, the first indication information is reported to the higher layer of the second terminal device; and the B is a positive integer less than or equal to the A.

7. The method according to claim 6, wherein a value of the B is determined based on one or more of following: protocol predefined information, pre-configuration information, network device configuration information, resource pool configuration information, PC5 interface radio resource control PC5-RRC signalling, indication information transmitted by the first terminal device, or indication information transmitted by the second terminal device.

8. The method according to any one of claims 3 to 5, wherein in a case that a first measurement value is less than or equal to a first threshold, the first indication information is reported to the higher layer of the second terminal device; and the first measurement value is determined based on an average value, a maximum value, or a minimum value of the A measurement results corresponding to the A CSI-RS resources.

9. The method according to any one of claims 3 to 8, wherein a value of the A is determined based on one or more of following: protocol predefined information, pre-configuration information, network device configuration information, resource pool configuration information, PC5-RRC signalling, indication information transmitted by the first terminal device, or indication information transmitted by the second terminal device.

10. The method according to any one of claims 3 to 9, wherein the higher layer is a MAC layer.

11. The method according to any one of claims 3 to 10, wherein the first indication information comprises a beam failure instance.

12. The method according to any one of claims 3 to 11, wherein the first parameter comprises one or more of following:

    a first timer; or
    a first counter.

13. The method according to claim 12, wherein timing duration of the first timer is determined based on a period parameter corresponding to the A CSI-RS resources.

14. The method according to claim 13, wherein the timing duration of the first timer is equal to $A \times P$, and the P denotes a period value indicated by using the period parameter.

15. The method according to any one of claims 12 to 14, wherein a count value of the first counter is determined based on a quantity of pieces of the first indication information received by the higher layer.

16. The method according to any one of claims 12 to 15, wherein the first timer meets one or more of following:

    in a case that the higher layer receives the first indication information, starting or restarting the first timer; or
    in a case that the first timer expires, restarting the first timer.

17. The method according to any one of claims 12 to 16, wherein the first counter meets one or more of following:

    in a case that the higher layer receives the first indication information, increasing a count value of the first counter by 1;
    in a case that the first counter is greater than or equal to a second threshold, determining that a beam failure occurs or beam failure recovery is triggered;
    in a case that the first timer expires, setting a count value of the first counter to 0; or
    in a case that the first counter is equal to the second threshold, setting the count value of the first counter to 0.

18. The method according to any one of claims 3 to 17, wherein the measurement result comprises a sidelink reference signal received power RSRP and/or a sidelink signal to interference plus noise ratio SINR.

19. The method according to any one of claims 2 to 18, wherein

    priorities of the J CSI-RS resources are determined based on protocol predefined information, pre-configuration information, or network configuration information; or
    priorities of the J CSI-RS resources are a highest priority or a lowest priority in preset priorities.

20. The method according to any one of claims 1 to 19, wherein reporting of the beam failure indication information comprises one or more of following: condition-based reporting, trigger-based reporting, or periodic reporting.

21. The method according to any one of claims 1 to 20, wherein reporting of the beam failure indication information is performed in one or more of following cases:

when the second terminal device determines that a beam failure occurs;
when the second terminal device receives indication information used for triggering the second terminal device to report the beam failure indication information; or
when a reporting period of the beam failure indication information is reached.

22. The method according to any one of claims 1 to 21, wherein the CSI-RS resource information is determined based on measurement of M CSI-RS resources, and the M is a positive integer greater than or equal to 1.

23. The method according to claim 22, wherein the M CSI-RS resources are periodic CSI-RS resources.

24. The method according to claim 22 or 23, wherein the first terminal device transmits the M CSI-RS resources by using different spatial domain transmission filters, or the first terminal device does not transmit the M CSI-RS resources by using a same spatial domain transmission filter.

25. The method according to any one of claims 22 to 24, wherein

priorities of the M CSI-RS resources are determined based on protocol predefined information, pre-configuration information, or network configuration information; or
priorities of the M CSI-RS resources are a highest priority or a lowest priority in preset priorities.

26. The method according to any one of claims 22 to 25, wherein the CSI-RS resource information is used for indicating D CSI-RS resources selected by the second terminal device, and the D CSI-RS resources are selected in one of following manners:

being selected in descending order based on measurement results corresponding to the M CSI-RS resources;
being selected in descending order based on measurement results corresponding to C CSI-RS resources; or
being randomly selected from C CSI-RS resources,
wherein the C CSI-RS resources correspond to C measurement results, measurement values corresponding to the C measurement results are all greater than or equal to a third threshold, the C is a positive integer greater than or equal to 1, and the D is a positive integer less than or equal to C.

27. The method according to claim 26, wherein

a value of the C is determined based on one or more of following: protocol predefined information, pre-configuration information, network device configuration information, resource pool configuration information, PC5-RRC signalling, indication information transmitted by the first terminal device, or indication information transmitted by the second terminal device; and/or
a value of the D is determined based on one or more of following: protocol predefined information, pre-configuration information, network device configuration information, resource pool configuration information, PC5-RRC signalling, indication information transmitted by the first terminal device, or indication information transmitted by the second terminal device; and/or
the third threshold is determined based on one or more of following: protocol predefined information, pre-configuration information, network device configuration information, resource pool configuration information, PC5-RRC signalling, indication information transmitted by the first terminal device, or indication information transmitted by the second terminal device.

28. The method according to any one of claims 1 to 27, wherein reporting of the CSI-RS resource information comprises one or more of following: condition-based reporting, trigger-based reporting, or periodic reporting.

29. The method according to any one of claims 1 to 28, wherein reporting of the CSI-RS resource information is performed in one or more of following cases:

when the second terminal device determines that a beam failure occurs;

when the second terminal device receives second indication information; or

when a reporting period of the CSI-RS resource information is reached,

wherein the second indication information is transmitted by the first terminal device, and the second indication information is used for instructing the second terminal device to report the CSI-RS resource information; or the second indication information is used for instructing the second terminal device to report the beam failure indication information.

30. The method according to any one of claims 1 to 29, wherein the beam failure indication information is carried in first signalling or a first channel, and the first signalling or the first channel comprises one or more of following:

a physical sidelink feedback channel PSFCH;
sidelink control information SCI;
a medium access control control element MAC CE; or
PC5-RRC signalling.

31. The method according to claim 30, wherein the first signalling or the first channel is a first PSFCH.

32. The method according to claim 31, wherein the first PSFCH is used for carrying a first sequence, and the first sequence is generated based on the beam failure indication information.

33. The method according to claim 32, wherein the first PSFCH occupies K physical resource blocks PRBs in frequency domain, and the K is a positive integer greater than or equal to 1.

34. The method according to claim 33, wherein

in a case that the K is equal to 1, the first sequence is a sequence whose length is t; or
in a case that the K is greater than 1, the first sequence is a sequence whose length is t$\times$K; or
in a case that the K is greater than 1, the first sequence is a sequence whose length is t, and sequences to which the K PRBs are mapped are all generated based on the first sequence,
wherein t denotes a quantity of subcarriers comprised in one PRB.

35. The method according to any one of claims 32 to 34, wherein the first sequence is generated based on one or more of following:

a root sequence; or
a cyclic shift.

36. The method according to claim 35, wherein the cyclic shift is generated based on one or more of following:

a slot number;
a quantity of subcarriers comprised in one resource block RB;
a quantity of symbols comprised in one slot;
index information corresponding to a symbol for transmitting a PSFCH in a slot;
a pseudorandom sequence;
a second parameter determined based on a quantity of cyclic shift pairs or cyclic shifts; or
a third parameter determined depending on whether a beam failure occurs.

37. The method according to claim 36, wherein
in a case that a beam failure occurs, a value of the third parameter is 6, and/or in a case that no beam failure occurs, a value of the third parameter is 0.

38. The method according to any one of claims 31 to 37, wherein a time domain resource of the first PSFCH is determined based on one of following:

a time domain position of A CSI-RS resources used for beam failure detection, wherein the A is a positive integer greater than or equal to 1;
a time domain position in which third indication information is located, wherein the third indication information is used for instructing the second terminal device to report the beam failure indication information; and

a time domain position of a first target CSI-RS resource, wherein the first target CSI-RS resource is associated with a CSI-RS resource selected by the second terminal device after a beam failure is detected.

39. The method according to claim 38, wherein the time domain resource of the first PSFCH is determined based on a time domain position of a last CSI-RS resource in the A CSI-RS resources.

40. The method according to any one of claims 31 to 39, wherein the time domain resource of the first PSFCH comprises a second-to-last symbol and a third-to-last symbol that are available for sidelink transmission in a slot, and same data is transmitted on the second-to-last symbol and the third-to-last symbol.

41. The method according to claim 30, wherein the first signalling or the first channel is SCI, a MAC CE, or PC5-RRC signalling.

42. The method according to claim 41, wherein the beam failure indication information is transmitted together with target information, and the target information comprises one or more of following:

the CSI-RS resource information; or
the measurement result corresponding to the CSI-RS resource information.

43. The method according to claim 42, wherein

the beam failure indication information and the target information are carried by using same signalling; or
the beam failure indication information and the target information are carried by using different signalling; or
the beam failure indication information is carried in a plurality of types of signalling; or
the target information is carried in a plurality of types of signalling.

44. The method according to claim 43, wherein

both the beam failure indication information and the target information are carried by using SCI; or
both the beam failure indication information and the target information are carried by using a MAC CE; or
the beam failure indication information is carried by using SCI, and the target information is carried by using a MAC CE; or
the beam indication information is carried in both SCI and a MAC CE; or
the target information is carried in both SCI and a MAC CE.

45. The method according to any one of claims 41 to 44, wherein a sidelink transmission resource used for transmitting the first signalling or the first channel is configured based on a network device or determined by the second terminal device in a first time period range.

46. The method according to claim 45, wherein the first signalling or the first channel is a MAC CE, a physical sidelink shared channel PSSCH carries only second-stage SCI and the MAC CE, or the PSSCH carries second-stage SCI, the MAC CE, and other sidelink data.

47. The method according to claim 45 or 46, wherein a start time of the first time period range is determined based on one of following:

a time domain position of a last CSI-RS resource of A CSI-RS resources used for beam failure detection, wherein the A is a positive integer greater than or equal to 1;
a time domain position in which fourth indication information is located, wherein the fourth indication information is transmitted by the first terminal device, and the fourth indication information is used for instructing the second terminal device to report the beam failure indication information;
a time domain position of a first target CSI-RS resource, wherein the first target CSI-RS resource is associated with a CSI-RS resource selected by the second terminal device after a beam failure is detected; and
a first time interval.

48. The method according to claim 47, wherein the first time interval is determined based on one or more of following: protocol predefined information, pre-configuration information, network device configuration information, resource pool configuration information, PC5-RRC signalling, indication information transmitted by the first terminal device, or indication information transmitted by the second terminal device.

49. The method according to claim 47 or 48, wherein a value of the first time interval is determined based on a sidelink subcarrier spacing.

50. The method according to any one of claims 45 to 49, wherein

an end time of the first time period range is determined based on one or more of following: protocol predefined information, pre-configuration information, network device configuration information, resource pool configuration information, PC5-RRC signalling, indication information transmitted by the first terminal device, or indication information transmitted by the second terminal device; or

duration corresponding to the first time period range is determined based on one or more of following: protocol predefined information, pre-configuration information, network device configuration information, resource pool configuration information, PC5-RRC signalling, indication information transmitted by the first terminal device, or indication information transmitted by the second terminal device.

51. The method according to claim 50, wherein the indication information transmitted by the first terminal device is used for indicating a first latency boundary, and the end time of the first time period range is determined based on a start time of the first time period range and the first latency boundary.

52. The method according to any one of claims 30 to 51, wherein

in a case that the first signalling or the first channel is a PSFCH, SCI, or a MAC CE, a priority corresponding to the first signalling or the first channel is determined based on protocol predefined information, pre-configuration information, or network device information; or

in a case that the first signalling or the first channel is a PSFCH, SCI, or a MAC CE, a priority corresponding to the first signalling or the first channel is a highest priority in preset priorities.

53. The method according to any one of claims 1 to 52, wherein the CSI-RS resource information is carried in second signalling or a second channel, and the second signalling or the second channel comprises one or more of following:

a PSFCH
SCI;
a MAC CE; or
PC5-RRC signalling.

54. The method according to claim 53, wherein the second signalling or the second channel is a second PSFCH.

55. The method according to claim 54, wherein a transmission resource of the second PSFCH is associated with a transmission resource of the selected CSI-RS resource.

56. The method according to claim 55, wherein a time domain resource of the second PSFCH is determined based on a time domain position of the selected CSI-RS resource.

57. The method according to claim 55 or 56, wherein the second PSFCH carries one information bit, and when a value of the one information bit is a first value, the one information bit is used for indicating that a CSI-RS resource associated with the second PSFCH is a CSI-RS resource selected by the second terminal device.

58. The method according to any one of claims 54 to 57, wherein the frequency domain resource of the second PSFCH comprises one PRB.

59. The method according to any one of claims 54 to 58, wherein there is a second time interval between the second PSFCH and the selected CSI-RS resource, and the second time interval is determined based on one or more of following: protocol predefined information, pre-configuration information, network device configuration information, resource pool configuration information, PC5-RRC signalling, indication information transmitted by the first terminal device, or indication information transmitted by the second terminal device.

60. The method according to claim 54, wherein the selected CSI-RS resource belongs to a first group of CSI-RS resources, and a transmission resource of the second PSFCH is associated with a transmission resource of the first group of CSI-RS resources.

61. The method according to claim 60, wherein the CSI-RS resource information is used for indicating L CSI-RS resources selected by the second terminal device from the first group of CSI-RS resources, wherein the L is a positive integer greater than or equal to 1.

62. The method according to claim 61, wherein a value of the L is determined based on one or more of following: protocol predefined information, pre-configuration information, network device configuration information, resource pool configuration information, PC5-RRC signalling, indication information transmitted by the first terminal device, or indication information transmitted by the second terminal device.

63. The method according to claim 61 or 62, wherein the second PSFCH carries $E \times L$ information bits, and the E is used for indicating a quantity of bits required to carry one CSI-RS resource in the L CSI-RS resources.

64. The method according to any one of claims 60 to 63, wherein a frequency domain resource of the second PSFCH comprises Q PRBs, and the Q is a positive integer greater than 1.

65. The method according to claim 64, wherein a value of the Q is determined based on one or more of following: protocol predefined information, pre-configuration information, network device configuration information, resource pool configuration information, PC5-RRC signalling, indication information transmitted by the first terminal device, or indication information transmitted by the second terminal device.

66. The method according to any one of claims 60 to 65, wherein a time domain resource of the second PSFCH is determined based on a time domain position of a last CSI-RS resource in the first group of CSI-RS resources in time domain.

67. The method according to any one of claims 54 to 66, wherein at least one of a frequency domain resource or a code domain resource of the second PSFCH is determined based on one or more of following:

   index information of a PRB corresponding to a start position of a CSI-RS frequency domain resource;
   sub-channel information corresponding to a start position of a CSI-RS frequency domain resource;
   subcarrier information corresponding to a start position of a CSI-RS frequency domain resource;
   a quantity of PRBs available for transmitting a CSI-RS in a slot;
   a size of a frequency domain resource occupied by one CSI-RS;
   a scrambling identity used for generating a CSI-RS sequence;
   a CSI-RS resource set identifier;
   a CSI-RS resource identifier;
   an index of the selected CSI-RS resource in a group of CSI-RS resources;
   a time domain position and/or a frequency domain start position of a time-frequency resource that carries fifth indication information;
   source identifier information;
   destination identifier information;
   a quantity of PSFCHs multiplexed in one frequency domain resource in code division multiplexing mode; or
   a quantity of PRBs available for transmitting a PSFCH in one slot,
   wherein the fifth indication information is transmitted by the first terminal device, and the fifth indication information is used for instructing the second terminal device to report the CSI-RS resource information; or the fifth indication information is used for instructing the second terminal device to report the beam failure indication information.

68. The method according to any one of claims 54 to 67, wherein a time domain resource of the second PSFCH comprises a second-to-last symbol and a third-to-last symbol that are available for sidelink transmission in a slot, and same data is transmitted on the second-to-last symbol and the third-to-last symbol.

69. The method according to claim 53, wherein the second signalling or the second channel is SCI or a MAC CE.

70. The method according to claim 69, wherein the second signalling or the second channel is the MAC CE, and a PSSCH carries only second-stage SCI and the MAC CE, or the PSSCH carries the second-stage SCI, the MAC CE, and other sidelink data.

71. The method according to claim 69 or 70, wherein a sidelink transmission resource used for carrying the second signalling or the second channel is configured based on a network device or determined by the second terminal device in a second time period range.

72. The method according to claim 71, wherein a start time of the second time period range is determined based on one of following:

> a time domain position of the selected CSI-RS resource;
> a time domain position of a last CSI-RS resource in a first group of CSI-RS resources in time domain, wherein the selected CSI-RS resource belongs to the first group of CSI-RS resources; and
> a third time interval.

73. The method according to claim 72, wherein the third time interval is determined based on one or more of following: protocol predefined information, pre-configuration information, network device configuration information, resource pool configuration information, PC5-RRC signalling, indication information transmitted by the first terminal device, or indication information transmitted by the second terminal device.

74. The method according to claim 72 or 73, wherein a value of the third time interval is determined based on a sidelink subcarrier spacing.

75. The method according to any one of claims 71 to 74, wherein

> an end time of the second time period range is determined based on one or more of following: protocol predefined information, pre-configuration information, network device configuration information, resource pool configuration information, PC5-RRC signalling, indication information transmitted by the first terminal device, or indication information transmitted by the second terminal device; or
> duration corresponding to the second time period range is determined based on one or more of following: protocol predefined information, pre-configuration information, network device configuration information, resource pool configuration information, PC5-RRC signalling, indication information transmitted by the first terminal device, or indication information transmitted by the second terminal device.

76. The method according to claim 75, wherein the indication information transmitted by the first terminal device is used for indicating a second latency boundary, and the end time of the second time period range is determined based on a start time of the second time period range and the second latency boundary.

77. The method according to any one of claims 53 to 76, wherein

> in a case that the second signalling or the second channel is a PSFCH, SCI, or a MAC CE, a priority corresponding to the second signalling or the second channel is determined based on protocol predefined information, pre-configuration information, or network device information; or
> in a case that the second signalling or the second channel is a PSFCH, SCI, or a MAC CE, a priority corresponding to the second signalling or the second channel is a highest priority in preset priorities.

78. The method according to any one of claims 1 to 77, wherein

> in a case that the first information is carried in a MAC CE, SCI transmitted together with the first information comprises sixth indication information; or
> in a case that the first information is carried in SCI, the SCI that carries the first information comprises the sixth indication information,
> wherein the sixth indication information is used for instructing to activate sidelink feedback.

79. A sidelink transmission method, comprising:
reporting, by a second terminal device, first information to a first terminal device, wherein the first information comprises one or more of following information:

> channel state information reference signal CSI-RS resource information;

beam failure indication information; or
a measurement result corresponding to the CSI-RS resource information,
wherein the CSI-RS resource information is used for indicating a CSI-RS resource selected by the second terminal device.

80. The method according to claim 79, wherein the beam failure indication information is determined based on measurement of J CSI-RS resources, and the J is a positive integer greater than or equal to 1.

81. The method according to claim 80, wherein the beam failure indication information is determined based on one or more of following:

   a first parameter; or
   first indication information received by a higher layer of the second terminal device,
   wherein the first indication information is determined based on measurement results corresponding to A CSI-RS resources, the A CSI-RS resources belong to the J CSI-RS resources, and the A is a positive integer greater than or equal to 1.

82. The method according to claim 81, wherein the A CSI-RS resources are periodic CSI-RS resources.

83. The method according to claim 81 or 82, wherein the first terminal device transmits the A CSI-RS resources by using a same spatial domain transmission filter.

84. The method according to any one of claims 81 to 83, wherein

   the A CSI-RS resources correspond to A measurement results, and in a case that measurement values corresponding to B measurement results in the A measurement results are all less than or equal to a first threshold, the first indication information is reported to the higher layer of the second terminal device; and
   the B is a positive integer less than or equal to the A.

85. The method according to claim 84, wherein a value of the B is determined based on one or more of following: protocol predefined information, pre-configuration information, network device configuration information, resource pool configuration information, PC5 interface radio resource control PC5-RRC signalling, indication information transmitted by the first terminal device, or indication information transmitted by the second terminal device.

86. The method according to any one of claims 81 to 83, wherein in a case that a first measurement value is less than or equal to a first threshold, the first indication information is reported to the higher layer of the second terminal device; and
the first measurement value is determined based on an average value, a maximum value, or a minimum value of the A measurement results corresponding to the A CSI-RS resources.

87. The method according to any one of claims 81 to 86, wherein a value of the A is determined based on one or more of following: protocol predefined information, pre-configuration information, network device configuration information, resource pool configuration information, PC5-RRC signalling, indication information transmitted by the first terminal device, or indication information transmitted by the second terminal device.

88. The method according to any one of claims 81 to 87, wherein the higher layer is a MAC layer.

89. The method according to any one of claims 81 to 88, wherein the first indication information comprises a beam failure instance.

90. The method according to any one of claims 81 to 89, wherein the first parameter comprises one or more of following:

   a first timer; or
   a first counter.

91. The method according to claim 90, wherein timing duration of the first timer is determined based on a period parameter corresponding to the A CSI-RS resources.

**92.** The method according to claim 91, wherein the timing duration of the first timer is equal to A×P, and the P denotes a period value indicated by using the period parameter.

**93.** The method according to any one of claims 90 to 92, wherein a count value of the first counter is determined based on a quantity of pieces of the first indication information received by the higher layer.

**94.** The method according to any one of claims 90 to 93, wherein the first timer meets one or more of following:

in a case that the higher layer receives the first indication information, starting or restarting the first timer; or
in a case that the first timer expires, restarting the first timer.

**95.** The method according to any one of claims 90 to 94, wherein the first counter meets one or more of following:

in a case that the higher layer receives the first indication information, increasing a count value of the first counter by 1;
in a case that the first counter is greater than or equal to a second threshold, determining that a beam failure occurs or beam failure recovery is triggered;
in a case that the first timer expires, setting a count value of the first counter to 0; or
in a case that the first counter is equal to the second threshold, setting the count value of the first counter to 0.

**96.** The method according to any one of claims 81 to 95, wherein the measurement result comprises a sidelink reference signal received power RSRP and/or a sidelink signal to interference plus noise ratio SINR.

**97.** The method according to any one of claims 80 to 96, wherein

priorities of the J CSI-RS resources are determined based on protocol predefined information, pre-configuration information, or network configuration information; or
priorities of the J CSI-RS resources are a highest priority or a lowest priority in preset priorities.

**98.** The method according to any one of claims 79 to 97, wherein reporting of the beam failure indication information comprises one or more of following: condition-based reporting, trigger-based reporting, or periodic reporting.

**99.** The method according to any one of claims 79 to 98, wherein reporting of the beam failure indication information is performed in one or more of following cases:

when the second terminal device determines that a beam failure occurs;
when the second terminal device receives indication information used for triggering the second terminal device to report the beam failure indication information; or
when a reporting period of the beam failure indication information is reached.

**100.**
The method according to any one of claims 79 to 99, wherein the CSI-RS resource information is determined based on measurement of M CSI-RS resources, and the M is a positive integer greater than or equal to 1.

**101.**
The method according to claim 100, wherein the M CSI-RS resources are periodic CSI-RS resources.

**102.**
The method according to claim 100 or 101, wherein the first terminal device transmits the M CSI-RS resources by using different spatial domain transmission filters, or the first terminal device does not transmit the M CSI-RS resources by using a same spatial domain transmission filter.

**103.**
The method according to any one of claims 100 to 102, wherein

priorities of the M CSI-RS resources are determined based on protocol predefined information, pre-configuration information, or network configuration information; or
priorities of the M CSI-RS resources are a highest priority or a lowest priority in preset priorities.

**104.**

The method according to any one of claims 100 to 103, wherein the CSI-RS resource information is used for indicating D CSI-RS resources selected by the second terminal device, and the D CSI-RS resources are selected in one of following manners:

being selected in descending order based on measurement results corresponding to the M CSI-RS resources;
being selected in descending order based on measurement results corresponding to C CSI-RS resources; and
being randomly selected from C CSI-RS resources,
wherein the C CSI-RS resources correspond to C measurement results, measurement values corresponding to the C measurement results are all greater than or equal to a third threshold, the C is a positive integer greater than or equal to 1, and the D is a positive integer less than or equal to C.

**105.**

The method according to claim 104, wherein

a value of the C is determined based on one or more of following: protocol predefined information, pre-configuration information, network device configuration information, resource pool configuration information, PC5-RRC signalling, indication information transmitted by the first terminal device, or indication information transmitted by the second terminal device; and/or
a value of the D is determined based on one or more of following: protocol predefined information, pre-configuration information, network device configuration information, resource pool configuration information, PC5-RRC signalling, indication information transmitted by the first terminal device, or indication information transmitted by the second terminal device; and/or
the third threshold is determined based on one or more of following: protocol predefined information, pre-configuration information, network device configuration information, resource pool configuration information, PC5-RRC signalling, indication information transmitted by the first terminal device, or indication information transmitted by the second terminal device.

**106.**

The method according to any one of claims 79 to 105, wherein reporting of the CSI-RS resource information comprises one or more of following: condition-based reporting, trigger-based reporting, or periodic reporting.

**107.**

The method according to any one of claims 79 to 106, wherein reporting of the CSI-RS resource information is performed in one or more of following cases:

when the second terminal device determines that a beam failure occurs;
when the second terminal device receives second indication information; or
when a reporting period of the CSI-RS resource information is reached,
wherein the second indication information is transmitted by the first terminal device, and the second indication information is used for instructing the second terminal device to report the CSI-RS resource information; or the second indication information is used for instructing the second terminal device to report the beam failure indication information.

**108.**

The method according to any one of claims 79 to 107, wherein the beam failure indication information is carried in first signalling or a first channel, and the first signalling or the first channel comprises one or more of following:

a physical sidelink feedback channel PSFCH;
sidelink control information SCI;
a medium access control control element MAC CE; or
PC5-RRC signalling.

**109.**

The method according to claim 108, wherein the first signalling or the first channel is a first PSFCH.

**110.**

The method according to claim 109, wherein the first PSFCH is used for carrying a first sequence, and the first sequence is generated based on the beam failure indication information.

**111.** The method according to claim 110, wherein the first PSFCH occupies K physical resource blocks PRBs in frequency domain, and the K is a positive integer greater than or equal to 1.

**112.**
The method according to claim 111, wherein

in a case that the K is equal to 1, the first sequence is a sequence whose length is t; or
in a case that the K is greater than 1, the first sequence is a sequence whose length is $t \times K$; or
in a case that the K is greater than 1, the first sequence is a sequence whose length is t, and sequences to which the K PRBs are mapped are all generated based on the first sequence,
wherein t denotes a quantity of subcarriers comprised in one PRB.

**113.**
The method according to any one of claims 110 to 112, wherein the first sequence is generated based on one or more of following:

a root sequence; or
a cyclic shift.

**114.**
The method according to claim 113, wherein the cyclic shift is generated based on one or more of following:

a slot number;
a quantity of subcarriers comprised in one resource block RB;
a quantity of symbols comprised in one slot;
index information corresponding to a symbol for transmitting a PSFCH in a slot;
a pseudorandom sequence;
a second parameter determined based on a quantity of cyclic shift pairs or cyclic shifts; or
a third parameter determined depending on whether a beam failure occurs.

**115.**
The method according to claim 114, wherein
in a case that a beam failure occurs, a value of the third parameter is 6, and/or in a case that no beam failure occurs, a value of the third parameter is 0.

**116.**
The method according to any one of claims 109 to 115, wherein a time domain resource of the first PSFCH is determined based on one of following:

a time domain position of A CSI-RS resources used for beam failure detection, wherein the A is a positive integer greater than or equal to 1;
a time domain position in which third indication information is located, wherein the third indication information is used for instructing the second terminal device to report the beam failure indication information; and
a time domain position of a first target CSI-RS resource, wherein the first target CSI-RS resource is associated with a CSI-RS resource selected by the second terminal device after a beam failure is detected.

**117.**
The method according to claim 116, wherein the time domain resource of the first PSFCH is determined based on a time domain position of a last CSI-RS resource in the A CSI-RS resources.

**118.**
The method according to any one of claims 109 to 117, wherein the time domain resource of the first PSFCH comprises a second-to-last symbol and a third-to-last symbol that are available for sidelink transmission in a slot, and same data is transmitted on the second-to-last symbol and the third-to-last symbol.

**119.**

The method according to claim 108, wherein the first signalling or the first channel is SCI, a MAC CE, or PC5-RRC signalling.

**120.**

The method according to claim 119, wherein the beam failure indication information is transmitted together with target information, and the target information comprises one or more of following:

> the CSI-RS resource information; or
> the measurement result corresponding to the CSI-RS resource information.

**121.**

The method according to claim 120, wherein

> the beam failure indication information and the target information are carried by using same signalling; or
> the beam failure indication information and the target information are carried by using different signalling; or
> the beam failure indication information is carried in a plurality of types of signalling; or
> the target information is carried in a plurality of types of signalling.

**122.**

The method according to claim 121, wherein

> both the beam failure indication information and the target information are carried by using SCI; or
> both the beam failure indication information and the target information are carried by using a MAC CE; or
> the beam failure indication information is carried by using SCI, and the target information is carried by using a MAC CE; or
> the beam indication information is carried in both SCI and a MAC CE; or
> the target information is carried in both SCI and a MAC CE.

**123.**

The method according to any one of claims 119 to 122, wherein a sidelink transmission resource used for transmitting the first signalling or the first channel is configured based on a network device or determined by the second terminal device in a first time period range.

**124.**

The method according to claim 123, wherein the first signalling or the first channel is a MAC CE, a physical sidelink shared channel PSSCH carries only second-stage SCI and the MAC CE, or the PSSCH carries second-stage SCI, the MAC CE, and other sidelink data.

**125.**

The method according to claim 123 or 124, wherein a start time of the first time period range is determined based on one of following:

> a time domain position of a last CSI-RS resource of A CSI-RS resources used for beam failure detection, wherein the A is a positive integer greater than or equal to 1;
> a time domain position in which fourth indication information is located, wherein the fourth indication information is transmitted by the first terminal device, and the fourth indication information is used for instructing the second terminal device to report the beam failure indication information;
> a time domain position of a first target CSI-RS resource, wherein the first target CSI-RS resource is associated with a CSI-RS resource selected by the second terminal device after a beam failure is detected; and
> a first time interval.

**126.**

The method according to claim 125, wherein the first time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**127.**

The method according to claim 125 or 126, wherein a value of the first time interval is determined based on a sidelink subcarrier spacing.

**128.**

The method according to any one of claims 123 to 127, wherein

an end time of the first time period range is determined based on one or more of following: protocol predefined information, pre-configuration information, network device configuration information, resource pool configuration information, PC5-RRC signalling, indication information transmitted by the first terminal device, or indication information transmitted by the second terminal device; or

duration corresponding to the first time period range is determined based on one or more of following: protocol predefined information, pre-configuration information, network device configuration information, resource pool configuration information, PC5-RRC signalling, indication information transmitted by the first terminal device, or indication information transmitted by the second terminal device.

**129.**

The method according to claim 128, wherein the indication information transmitted by the first terminal device is used for indicating a first latency boundary, and the end time of the first time period range is determined based on a start time of the first time period range and the first latency boundary.

**130.**

The method according to any one of claims 108 to 129, wherein

in a case that the first signalling or the first channel is a PSFCH, SCI, or a MAC CE, a priority corresponding to the first signalling or the first channel is determined based on protocol predefined information, pre-configuration information, or network device information; or

in a case that the first signalling or the first channel is a PSFCH, SCI, or a MAC CE, a priority corresponding to the first signalling or the first channel is a highest priority in preset priorities.

**131.**

The method according to any one of claims 79 to 130, wherein the CSI-RS resource information is carried in second signalling or a second channel, and the second signalling or the second channel comprises one or more of following:

a PSFCH
SCI;
a MAC CE; or
PC5-RRC signalling.

**132.**

The method according to claim 131, wherein the second signalling or the second channel is a second PSFCH.

**133.**

The method according to claim 132, wherein a transmission resource of the second PSFCH is associated with a transmission resource of the selected CSI-RS resource.

**134.**

The method according to claim 133, wherein a time domain resource of the second PSFCH is determined based on a time domain position of the selected CSI-RS resource.

**135.**

The method according to claim 133 or 134, wherein the second PSFCH carries one information bit, and when a value of the one information bit is a first value, the one information bit is used for indicating that a CSI-RS resource associated with the second PSFCH is a CSI-RS resource selected by the second terminal device.

**136.**

The method according to any one of claims 132 to 135, wherein the frequency domain resource of the second PSFCH comprises one PRB.

**137.**

The method according to any one of claims 132 to 136, wherein there is a second time interval between the second PSFCH and the selected CSI-RS resource, and the second time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**138.**

The method according to claim 132, wherein the selected CSI-RS resource belongs to a first group of CSI-RS resources, and a transmission resource of the second PSFCH is associated with a transmission resource of the first group of CSI-RS resources.

**139.**

The method according to claim 138, wherein the CSI-RS resource information is used for indicating L CSI-RS resources selected by the second terminal device from the first group of CSI-RS resources, wherein the L is a positive integer greater than or equal to 1.

**140.**

The method according to claim 139, wherein a value of the L is determined based on one or more of following: protocol predefined information, pre-configuration information, network device configuration information, resource pool configuration information, PC5-RRC signalling, indication information transmitted by the first terminal device, or indication information transmitted by the second terminal device.

**141.**

The method according to claim 139 or 140, wherein the second PSFCH carries E×L information bits, and the E is used for indicating a quantity of bits required to carry one CSI-RS resource in the L CSI-RS resources.

**142.**

The method according to any one of claims 138 to 141, wherein a frequency domain resource of the second PSFCH comprises Q PRBs, and the Q is a positive integer greater than 1.

**143.**

The method according to claim 142, wherein a value of the Q is determined based on one or more of following: protocol predefined information, pre-configuration information, network device configuration information, resource pool configuration information, PC5-RRC signalling, indication information transmitted by the first terminal device, or indication information transmitted by the second terminal device.

**144.**

The method according to any one of claims 138 to 143, wherein a time domain resource of the second PSFCH is determined based on a time domain position of a last CSI-RS resource in the first group of CSI-RS resources in time domain.

**145.**

The method according to any one of claims 132 to 144, wherein at least one of a frequency domain resource or a code domain resource of the second PSFCH is determined based on one or more of following:

  index information of a PRB corresponding to a start position of a CSI-RS frequency domain resource;
  sub-channel information corresponding to a start position of a CSI-RS frequency domain resource;
  subcarrier information corresponding to a start position of a CSI-RS frequency domain resource;
  a quantity of PRBs available for transmitting a CSI-RS in a slot;
  a size of a frequency domain resource occupied by one CSI-RS;
  a scrambling identity used for generating a CSI-RS sequence;
  a CSI-RS resource set identifier;
  a CSI-RS resource identifier;
  an index of the selected CSI-RS resource in a group of CSI-RS resources;
  a time domain position and/or a frequency domain start position of a time-frequency resource that carries fifth indication information;
  source identifier information;

destination identifier information;
a quantity of PSFCHs multiplexed in one frequency domain resource in code division multiplexing mode; or
a quantity of PRBs available for transmitting a PSFCH in one slot,
wherein the fifth indication information is transmitted by the first terminal device, and the fifth indication information is used for instructing the second terminal device to report the CSI-RS resource information; or the fifth indication information is used for instructing the second terminal device to report the beam failure indication information.

**146.**

The method according to any one of claims 132 to 145, wherein a time domain resource of the second PSFCH comprises a second-to-last symbol and a third-to-last symbol that are available for sidelink transmission in a slot, and same data is transmitted on the second-to-last symbol and the third-to-last symbol.

**147.**

The method according to claim 131, wherein the second signalling or the second channel is SCI or a MAC CE.

**148.**

The method according to claim 147, wherein the second signalling or the second channel is the MAC CE, and a PSSCH carries only second-stage SCI and the MAC CE, or the PSSCH carries the second-stage SCI, the MAC CE, and other sidelink data.

**149.**

The method according to claim 147 or 148, wherein a sidelink transmission resource used for carrying the second signalling or the second channel is configured based on a network device or determined by the second terminal device in a second time period range.

**150.**

The method according to claim 149, wherein a start time of the second time period range is determined based on one of following:

a time domain position of the selected CSI-RS resource;
a time domain position of a last CSI-RS resource in a first group of CSI-RS resources in time domain, wherein the selected CSI-RS resource belongs to the first group of CSI-RS resources; and
a third time interval.

**151.**

The method according to claim 150, wherein the third time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**152.**

The method according to claim 150 or 151, wherein a value of the third time interval is determined based on a sidelink subcarrier spacing.

**153.**

The method according to any one of claims 149 to 152, wherein

an end time of the second time period range is determined based on one or more of following: protocol predefined information, pre-configuration information, network device configuration information, resource pool configuration information, PC5-RRC signalling, indication information transmitted by the first terminal device, or indication information transmitted by the second terminal device; or
duration corresponding to the second time period range is determined based on one or more of following: protocol predefined information, pre-configuration information, network device configuration information, resource pool configuration information, PC5-RRC signalling, indication information transmitted by the first terminal device, or indication information transmitted by the second terminal device.

**154.**

The method according to claim 153, wherein the indication information transmitted by the first terminal device is used for indicating a second latency boundary, and the end time of the second time period range is determined based on a start time of the second time period range and the second latency boundary.

**155.**

The method according to any one of claims 131 to 154, wherein

in a case that the second signalling or the second channel is a PSFCH, SCI, or a MAC CE, a priority corresponding to the second signalling or the second channel is determined based on protocol predefined information, pre-configuration information, or network device information; or
in a case that the second signalling or the second channel is a PSFCH, SCI, or a MAC CE, a priority corresponding to the second signalling or the second channel is a highest priority in preset priorities.

**156.**

The method according to any one of claims 79 to 155, wherein

in a case that the first information is carried in a MAC CE, SCI transmitted together with the first information comprises sixth indication information; or
in a case that the first information is carried in SCI, the SCI that carries the first information comprises the sixth indication information,
wherein the sixth indication information is used for instructing to activate sidelink feedback.

**157.**

A terminal device, wherein the terminal device is a first terminal device, and the first terminal device comprises:
a communications module, configured to receive first information reported by a second terminal device, wherein the first information comprises one or more of following information:

channel state information reference signal CSI-RS resource information;
beam failure indication information; or
a measurement result corresponding to the CSI-RS resource information,
wherein the CSI-RS resource information is used for indicating a CSI-RS resource selected by the second terminal device.

**158.**

The terminal device according to claim 157, wherein the beam failure indication information is determined based on measurement of J CSI-RS resources, and the J is a positive integer greater than or equal to 1.

**159.**

The terminal device according to claim 158, wherein the beam failure indication information is determined based on one or more of following:

a first parameter; or
first indication information received by a higher layer of the second terminal device,
wherein the first indication information is determined based on measurement results corresponding to A CSI-RS resources, the A CSI-RS resources belong to the J CSI-RS resources, and the A is a positive integer greater than or equal to 1.

**160.**

The terminal device according to claim 159, wherein the A CSI-RS resources are periodic CSI-RS resources.

**161.**

The terminal device according to claim 159 or 160, wherein the first terminal device transmits the A CSI-RS resources by using a same spatial domain transmission filter.

**162.**

The terminal device according to any one of claims 159 to 161, wherein

the A CSI-RS resources correspond to A measurement results, and in a case that measurement values corresponding to B measurement results in the A measurement results are all less than or equal to a first threshold, the first indication information is reported to the higher layer of the second terminal device; and the B is a positive integer less than or equal to the A.

**163.**
The terminal device according to claim 162, wherein a value of the B is determined based on one or more of following: protocol predefined information, pre-configuration information, network device configuration information, resource pool configuration information, PC5 interface radio resource control PC5-RRC signalling, indication information transmitted by the first terminal device, or indication information transmitted by the second terminal device.

**164.**
The terminal device according to any one of claims 159 to 161, wherein in a case that a first measurement value is less than or equal to a first threshold, the first indication information is reported to the higher layer of the second terminal device; and the first measurement value is determined based on an average value, a maximum value, or a minimum value of the A measurement results corresponding to the A CSI-RS resources.

**165.**
The terminal device according to any one of claims 159 to 164, wherein a value of the A is determined based on one or more of following: protocol predefined information, pre-configuration information, network device configuration information, resource pool configuration information, PC5-RRC signalling, indication information transmitted by the first terminal device, or indication information transmitted by the second terminal device.

**166.**
The terminal device according to any one of claims 159 to 165, wherein the higher layer is a MAC layer.

**167.**
The terminal device according to any one of claims 159 to 166, wherein the first indication information comprises a beam failure instance.

**168.**
The terminal device according to any one of claims 159 to 167, wherein the first parameter comprises one or more of following:

a first timer; or
a first counter.

**169.**
The terminal device according to claim 168, wherein timing duration of the first timer is determined based on a period parameter corresponding to the A CSI-RS resources.

**170.**
The terminal device according to claim 169, wherein the timing duration of the first timer is equal to $A \times P$, and the P denotes a period value indicated by using the period parameter.

**171.**
The terminal device according to any one of claims 168 to 170, wherein a count value of the first counter is determined based on a quantity of pieces of the first indication information received by the higher layer.

**172.**
The terminal device according to any one of claims 168 to 171, wherein the first timer meets one or more of following:

in a case that the higher layer receives the first indication information, starting or restarting the first timer; or
in a case that the first timer expires, restarting the first timer.

**173.**
The terminal device according to any one of claims 168 to 172, wherein the first counter meets one or more of following:

in a case that the higher layer receives the first indication information, increasing a count value of the first counter by 1;
in a case that the first counter is greater than or equal to a second threshold, determining that a beam failure occurs or beam failure recovery is triggered;
in a case that the first timer expires, setting a count value of the first counter to 0; or
in a case that the first counter is equal to the second threshold, setting the count value of the first counter to 0.

**174.**
The terminal device according to any one of claims 159 to 173, wherein the measurement result comprises a sidelink reference signal received power RSRP and/or a sidelink signal to interference plus noise ratio SINR.

**175.**
The terminal device according to any one of claims 158 to 174, wherein

priorities of the J CSI-RS resources are determined based on protocol predefined information, pre-configuration information, or network configuration information; or
priorities of the J CSI-RS resources are a highest priority or a lowest priority in preset priorities.

**176.**
The terminal device according to any one of claims 157 to 175, wherein reporting of the beam failure indication information comprises one or more of following: condition-based reporting, trigger-based reporting, or periodic reporting.

**177.**
The terminal device according to any one of claims 157 to 176, wherein reporting of the beam failure indication information is performed in one or more of following cases:

when the second terminal device determines that a beam failure occurs;
when the second terminal device receives indication information used for triggering the second terminal device to report the beam failure indication information; or
when a reporting period of the beam failure indication information is reached.

**178.**
The terminal device according to any one of claims 157 to 177, wherein the CSI-RS resource information is determined based on measurement of M CSI-RS resources, and the M is a positive integer greater than or equal to 1.

**179.**
The terminal device according to claim 178, wherein the M CSI-RS resources are periodic CSI-RS resources.

**180.**
The terminal device according to claim 178 or 179, wherein the first terminal device transmits the M CSI-RS resources by using different spatial domain transmission filters, or the first terminal device does not transmit the M CSI-RS resources by using a same spatial domain transmission filter.

**181.**
The terminal device according to any one of claims 178 to 180, wherein

priorities of the M CSI-RS resources are determined based on protocol predefined information, pre-configuration information, or network configuration information; or
priorities of the M CSI-RS resources are a highest priority or a lowest priority in preset priorities.

**182.**
The terminal device according to any one of claims 178 to 181, wherein the CSI-RS resource information is used for indicating D CSI-RS resources selected by the second terminal device, and the D CSI-RS resources are selected in one of following manners:

being selected in descending order based on measurement results corresponding to the M CSI-RS resources;
being selected in descending order based on measurement results corresponding to C CSI-RS resources; and
being randomly selected from C CSI-RS resources,
wherein the C CSI-RS resources correspond to C measurement results, measurement values corresponding to the C measurement results are all greater than or equal to a third threshold, the C is a positive integer greater than or equal to 1, and the D is a positive integer less than or equal to C.

**183.**

The terminal device according to claim 182, wherein

a value of the C is determined based on one or more of following: protocol predefined information, pre-configuration information, network device configuration information, resource pool configuration information, PC5-RRC signalling, indication information transmitted by the first terminal device, or indication information transmitted by the second terminal device; and/or

a value of the D is determined based on one or more of following: protocol predefined information, pre-configuration information, network device configuration information, resource pool configuration information, PC5-RRC signalling, indication information transmitted by the first terminal device, or indication information transmitted by the second terminal device; and/or

the third threshold is determined based on one or more of following: protocol predefined information, pre-configuration information, network device configuration information, resource pool configuration information, PC5-RRC signalling, indication information transmitted by the first terminal device, or indication information transmitted by the second terminal device.

**184.**

The terminal device according to any one of claims 157 to 183, wherein reporting of the CSI-RS resource information comprises one or more of following: condition-based reporting, trigger-based reporting, or periodic reporting.

**185.**

The terminal device according to any one of claims 157 to 184, wherein reporting of the CSI-RS resource information is performed in one or more of following cases:

when the second terminal device determines that a beam failure occurs;

when the second terminal device receives second indication information; or

when a reporting period of the CSI-RS resource information is reached,

wherein the second indication information is transmitted by the first terminal device, and the second indication information is used for instructing the second terminal device to report the CSI-RS resource information; or the second indication information is used for instructing the second terminal device to report the beam failure indication information.

**186.**

The terminal device according to any one of claims 157 to 185, wherein the beam failure indication information is carried in first signalling or a first channel, and the first signalling or the first channel comprises one or more of following:

a physical sidelink feedback channel PSFCH;

sidelink control information SCI;

a medium access control control element MAC CE; or

PC5-RRC signalling.

**187.**

The terminal device according to claim 186, wherein the first signalling or the first channel is a first PSFCH.

**188.**

The terminal device according to claim 187, wherein the first PSFCH is used for carrying a first sequence, and the first sequence is generated based on the beam failure indication information.

**189.**

The terminal device according to claim 188, wherein the first PSFCH occupies K physical resource blocks PRBs in frequency domain, and the K is a positive integer greater than or equal to 1.

**190.**

The terminal device according to claim 189, wherein

in a case that the K is equal to 1, the first sequence is a sequence whose length is t; or
in a case that the K is greater than 1, the first sequence is a sequence whose length is t×K; or
in a case that the K is greater than 1, the first sequence is a sequence whose length is t, and sequences to which the K PRBs are mapped are all generated based on the first sequence,
wherein t denotes a quantity of subcarriers comprised in one PRB.

191.
The terminal device according to any one of claims 188 to 190, wherein the first sequence is generated based on one or more of following:

a root sequence; or
a cyclic shift.

192.
The terminal device according to claim 191, wherein the cyclic shift is generated based on one or more of following:

a slot number;
a quantity of subcarriers comprised in one resource block RB;
a quantity of symbols comprised in one slot;
index information corresponding to a symbol for transmitting a PSFCH in a slot;
a pseudorandom sequence;
a second parameter determined based on a quantity of cyclic shift pairs or cyclic shifts; or
a third parameter determined depending on whether a beam failure occurs.

193.
The terminal device according to claim 192, wherein
in a case that a beam failure occurs, a value of the third parameter is 6, and/or in a case that no beam failure occurs, a value of the third parameter is 0.

194.
The terminal device according to any one of claims 187 to 193, wherein a time domain resource of the first PSFCH is determined based on one of following:

a time domain position of A CSI-RS resources used for beam failure detection, wherein the A is a positive integer greater than or equal to 1;
a time domain position in which third indication information is located, wherein the third indication information is used for instructing the second terminal device to report the beam failure indication information; and
a time domain position of a first target CSI-RS resource, wherein the first target CSI-RS resource is associated with a CSI-RS resource selected by the second terminal device after a beam failure is detected.

195.
The terminal device according to claim 194, wherein the time domain resource of the first PSFCH is determined based on a time domain location of a last CSI-RS resource in the A CSI-RS resources.

196.
The terminal device according to any one of claims 187 to 195, wherein the time domain resource of the first PSFCH comprises a second-to-last symbol and a third-to-last symbol that are available for sidelink transmission in a slot, and same data is transmitted on the second-to-last symbol and the third-to-last symbol.

197.
The terminal device according to claim 186, wherein the first signalling or the first channel is SCI, a MAC CE, or PC5-RRC signalling.

198.
The terminal device according to claim 197, wherein the beam failure indication information is transmitted together with target information, and the target information comprises one or more of following:

the CSI-RS resource information; or

the measurement result corresponding to the CSI-RS resource information.

**199.**

The terminal device according to claim 198, wherein

the beam failure indication information and the target information are carried by using same signalling; or
the beam failure indication information and the target information are carried by using different signalling; or
the beam failure indication information is carried in a plurality of types of signalling; or
the target information is carried in a plurality of types of signalling.

**200.**

The terminal device according to claim 199, wherein

both the beam failure indication information and the target information are carried by using SCI; or
both the beam failure indication information and the target information are carried by using a MAC CE; or
the beam failure indication information is carried by using SCI, and the target information is carried by using a MAC CE; or
the beam indication information is carried in both SCI and a MAC CE; or
the target information is carried in both SCI and a MAC CE.

**201.**

The terminal device according to any one of claims 197 to 200, wherein a sidelink transmission resource used for transmitting the first signalling or the first channel is configured based on a network device or determined by the second terminal device in a first time period range.

**202.**

The terminal device according to claim 201, wherein the first signalling or the first channel is a MAC CE, a physical sidelink shared channel PSSCH carries only second-stage SCI and the MAC CE, or the PSSCH carries second-stage SCI, the MAC CE, and other sidelink data.

**203.**

The terminal device according to claim 201 or 202, wherein a start time of the first time period range is determined based on one of following:

a time domain position of a last CSI-RS resource of A CSI-RS resources used for beam failure detection, wherein the A is a positive integer greater than or equal to 1;
a time domain position in which fourth indication information is located, wherein the fourth indication information is transmitted by the first terminal device, and the fourth indication information is used for instructing the second terminal device to report the beam failure indication information;
a time domain position of a first target CSI-RS resource, wherein the first target CSI-RS resource is associated with a CSI-RS resource selected by the second terminal device after a beam failure is detected; and
a first time interval.

**204.**

The terminal device according to claim 203, wherein the first time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**205.**

The terminal device according to claim 203 or 204, wherein a value of the first time interval is determined based on a sidelink subcarrier spacing.

**206.**

The terminal device according to any one of claims 201 to 205, wherein

an end time of the first time period range is determined based on one or more of following: protocol predefined information, pre-configuration information, network device configuration information, resource pool configuration information, PC5-RRC signalling, indication information transmitted by the first terminal device, or indication information transmitted by the second terminal device; or

duration corresponding to the first time period range is determined based on one or more of following: protocol predefined information, pre-configuration information, network device configuration information, resource pool configuration information, PC5-RRC signalling, indication information transmitted by the first terminal device, or indication information transmitted by the second terminal device.

**207.**
The terminal device according to claim 206, wherein the indication information transmitted by the first terminal device is used for indicating a first latency boundary, and the end time of the first time period range is determined based on a start time of the first time period range and the first latency boundary.

**208.**
The terminal device according to any one of claims 196 to 207, wherein

in a case that the first signalling or the first channel is a PSFCH, SCI, or a MAC CE, a priority corresponding to the first signalling or the first channel is determined based on protocol predefined information, pre-configuration information, or network device information; or

in a case that the first signalling or the first channel is a PSFCH, SCI, or a MAC CE, a priority corresponding to the first signalling or the first channel is a highest priority in preset priorities.

**209.**
The terminal device according to any one of claims 157 to 208, wherein the CSI-RS resource information is carried in second signalling or a second channel, and the second signalling or the second channel comprises one or more of following:

a PSFCH
SCI;
a MAC CE; or
PC5-RRC signalling.

**210.**
The terminal device according to claim 209, wherein the second signalling or the second channel is a second PSFCH.

**211.**
The terminal device according to claim 210, wherein a transmission resource of the second PSFCH is associated with a transmission resource of the selected CSI-RS resource.

**212.**
The terminal device according to claim 211, wherein a time domain resource of the second PSFCH is determined based on a time domain position of the selected CSI-RS resource.

**213.**
The terminal device according to claim 211 or 212, wherein the second PSFCH carries one information bit, and when a value of the one information bit is a first value, the one information bit is used for indicating that a CSI-RS resource associated with the second PSFCH is a CSI-RS resource selected by the second terminal device.

**214.**
The terminal device according to any one of claims 210 to 213, wherein the frequency domain resource of the second PSFCH comprises one PRB.

**215.**
The terminal device according to any one of claims 210 to 214, wherein there is a second time interval between the second PSFCH and the selected CSI-RS resource, and the second time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**216.**

The terminal device according to claim 210, wherein the selected CSI-RS resource belongs to a first group of CSI-RS resources, and a transmission resource of the second PSFCH is associated with a transmission resource of the first group of CSI-RS resources.

**217.**

The terminal device according to claim 216, wherein the CSI-RS resource information is used for indicating L CSI-RS resources selected by the second terminal device from the first group of CSI-RS resources, wherein the L is a positive integer greater than or equal to 1.

**218.**

The terminal device according to claim 217, wherein a value of the L is determined based on one or more of following: protocol predefined information, pre-configuration information, network device configuration information, resource pool configuration information, PC5-RRC signalling, indication information transmitted by the first terminal device, or indication information transmitted by the second terminal device.

**219.**

The terminal device according to claim 217 or 216, wherein the second PSFCH carries $E \times L$ information bits, and the E is used for indicating a quantity of bits required to carry one CSI-RS resource in the L CSI-RS resources.

**220.**

The terminal device according to any one of claims 216 to 219, wherein a frequency domain resource of the second PSFCH comprises Q PRBs, and the Q is a positive integer greater than 1.

**221.**

The terminal device according to claim 220, wherein a value of the Q is determined based on one or more of following: protocol predefined information, pre-configuration information, network device configuration information, resource pool configuration information, PC5-RRC signalling, indication information transmitted by the first terminal device, or indication information transmitted by the second terminal device.

**222.**

The terminal device according to any one of claims 216 to 221, wherein a time domain resource of the second PSFCH is determined based on a time domain position of a last CSI-RS resource in the first group of CSI-RS resources in time domain.

**223.**

The terminal device according to any one of claims 210 to 222, wherein at least one of a frequency domain resource or a code domain resource of the second PSFCH is determined based on one or more of following:

      index information of a PRB corresponding to a start position of a CSI-RS frequency domain resource;
      sub-channel information corresponding to a start position of a CSI-RS frequency domain resource;
      subcarrier information corresponding to a start position of a CSI-RS frequency domain resource;
      a quantity of PRBs available for transmitting a CSI-RS in a slot;
      a size of a frequency domain resource occupied by one CSI-RS;
      a scrambling identity used for generating a CSI-RS sequence;
      a CSI-RS resource set identifier;
      a CSI-RS resource identifier;
      an index of the selected CSI-RS resource in a group of CSI-RS resources;
      a time domain position and/or a frequency domain start position of a time-frequency resource that carries fifth indication information;
      source identifier information;
      destination identifier information;
      a quantity of PSFCHs multiplexed in one frequency domain resource in code division multiplexing mode; or
      a quantity of PRBs available for transmitting a PSFCH in one slot,
      wherein the fifth indication information is transmitted by the first terminal device, and the fifth indication information is used for instructing the second terminal device to report the CSI-RS resource information; or the fifth indication information is used for instructing the second terminal device to report the beam failure indication information.

**224.**
The terminal device according to any one of claims 210 to 223, wherein a time domain resource of the second PSFCH comprises a second-to-last symbol and a third-to-last symbol that are available for sidelink transmission in a slot, and same data is transmitted on the second-to-last symbol and the third-to-last symbol.

**225.**
The terminal device according to claim 209, wherein the second signalling or the second channel is SCI or a MAC CE.

**226.**
The terminal device according to claim 225, wherein the second signalling or the second channel is the MAC CE, and a PSSCH carries only second-stage SCI and the MAC CE, or the PSSCH carries the second-stage SCI, the MAC CE, and other sidelink data.

**227.**
The terminal device according to claim 225 or 226, wherein a sidelink transmission resource used for carrying the second signalling or the second channel is configured based on a network device or determined by the second terminal device in a second time period range.

**228.**
The terminal device according to claim 227, wherein a start time of the second time period range is determined based on one of following:

a time domain position of the selected CSI-RS resource;
a time domain position of a last CSI-RS resource in a first group of CSI-RS resources in time domain, wherein the selected CSI-RS resource belongs to the first group of CSI-RS resources; and
a third time interval.

**229.**
The terminal device according to claim 228, wherein the third time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**230.**
The terminal device according to claim 228 or 229, wherein a value of the third time interval is determined based on a sidelink subcarrier spacing.

**231.**
The terminal device according to any one of claims 227 to 230, wherein

an end time of the second time period range is determined based on one or more of following: protocol predefined information, pre-configuration information, network device configuration information, resource pool configuration information, PC5-RRC signalling, indication information transmitted by the first terminal device, or indication information transmitted by the second terminal device; or
duration corresponding to the second time period range is determined based on one or more of following: protocol predefined information, pre-configuration information, network device configuration information, resource pool configuration information, PC5-RRC signalling, indication information transmitted by the first terminal device, or indication information transmitted by the second terminal device.

**232.**
The terminal device according to claim 231, wherein the indication information transmitted by the first terminal device is used for indicating a second latency boundary, and the end time of the second time period range is determined based on a start time of the second time period range and the second latency boundary.

**233.**
The terminal device according to any one of claims 209 to 232, wherein

in a case that the second signalling or the second channel is a PSFCH, SCI, or a MAC CE, a priority corresponding to the second signalling or the second channel is determined based on protocol predefined information, pre-configuration information, or network device information; or

in a case that the second signalling or the second channel is a PSFCH, SCI, or a MAC CE, a priority corresponding to the second signalling or the second channel is a highest priority in preset priorities.

**234.**
The terminal device according to any one of claims 157 to 233, wherein

in a case that the first information is carried in a MAC CE, SCI transmitted together with the first information comprises sixth indication information; or
in a case that the first information is carried in SCI, the SCI that carries the first information comprises the sixth indication information,
wherein the sixth indication information is used for instructing to activate sidelink feedback.

**235.**
A terminal device, wherein the terminal device is a second terminal device, and the second terminal device comprises: a communications module, configured to report first information to a first terminal device, wherein the first information comprises one or more of following information:

channel state information reference signal CSI-RS resource information;
beam failure indication information; or
a measurement result corresponding to CSI-RS resource information,
wherein the CSI-RS resource information is used for indicating a CSI-RS resource selected by the second terminal device.

**236.**
The terminal device according to claim 235, wherein the beam failure indication information is determined based on measurement of J CSI-RS resources, and the J is a positive integer greater than or equal to 1.

**237.**
The terminal device according to claim 236, wherein the beam failure indication information is determined based on one or more of following:

a first parameter; or
first indication information received by a higher layer of the second terminal device,
wherein the first indication information is determined based on measurement results corresponding to A CSI-RS resources, the A CSI-RS resources belong to the J CSI-RS resources, and the A is a positive integer greater than or equal to 1.

**238.**
The terminal device according to claim 236 or 237, wherein the A CSI-RS resources are periodic CSI-RS resources.

**239.**
The terminal device according to claim 237 or 238, wherein the first terminal device transmits the A CSI-RS resources by using a same spatial domain transmission filter.

**240.**
The terminal device according to any one of claims 237 to 239, wherein

the A CSI-RS resources correspond to A measurement results, and in a case that measurement values corresponding to B measurement results in the A measurement results are all less than or equal to a first threshold, the first indication information is reported to the higher layer of the second terminal device; and
the B is a positive integer less than or equal to the A.

**241.**
The terminal device according to claim 240, wherein a value of the B is determined based on one or more of following: protocol predefined information, pre-configuration information, network device configuration information, resource pool configuration information, PC5 interface radio resource control PC5-RRC signalling, indication information transmitted by the first terminal device, or indication information transmitted by the second terminal device.

**242.**

The terminal device according to any one of claims 237 to 239, wherein in a case that a first measurement value is less than or equal to a first threshold, the first indication information is reported to the higher layer of the second terminal device; and the first measurement value is determined based on an average value, a maximum value, or a minimum value of the A measurement results corresponding to the A CSI-RS resources.

**243.**

The terminal device according to any one of claims 237 to 242, wherein a value of the A is determined based on one or more of following: protocol predefined information, pre-configuration information, network device configuration information, resource pool configuration information, PC5-RRC signalling, indication information transmitted by the first terminal device, or indication information transmitted by the second terminal device.

**244.**

The terminal device according to any one of claims 237 to 243, wherein the higher layer is a MAC layer.

**245.**

The terminal device according to any one of claims 237 to 244, wherein the first indication information comprises a beam failure instance.

**246.**

The terminal device according to any one of claims 237 to 245, wherein the first parameter comprises one or more of following:

a first timer; or
a first counter.

**247.**

The terminal device according to claim 246, wherein timing duration of the first timer is determined based on a period parameter corresponding to the A CSI-RS resources.

**248.**

The terminal device according to claim 247, wherein the timing duration of the first timer is equal to $A \times P$, and the P denotes a period value indicated by using the period parameter.

**249.**

The terminal device according to any one of claims 246 to 248, wherein a count value of the first counter is determined based on a quantity of pieces of the first indication information received by the higher layer.

**250.**

The terminal device according to any one of claims 246 to 249, wherein the first timer meets one or more of following:

in a case that the higher layer receives the first indication information, starting or restarting the first timer; or
in a case that the first timer expires, restarting the first timer.

**251.**

The terminal device according to any one of claims 246 to 250, wherein the first counter meets one or more of following:

in a case that the higher layer receives the first indication information, increasing a count value of the first counter by 1;
in a case that the first counter is greater than or equal to a second threshold, determining that a beam failure occurs or beam failure recovery is triggered;
in a case that the first timer expires, setting a count value of the first counter to 0; or
in a case that the first counter is equal to the second threshold, setting the count value of the first counter to 0.

**252.**

The terminal device according to any one of claims 246 to 251, wherein the measurement result comprises a sidelink reference signal received power RSRP and/or a sidelink signal to interference plus noise ratio SINR.

**253.**
The terminal device according to any one of claims 246 to 252, wherein

priorities of the J CSI-RS resources are determined based on protocol predefined information, pre-configuration information, or network configuration information; or
priorities of the J CSI-RS resources are a highest priority or a lowest priority in preset priorities.

**254.**
The terminal device according to any one of claims 245 to 253, wherein reporting of the beam failure indication information comprises one or more of following: condition-based reporting, trigger-based reporting, or periodic reporting.

**255.**
The terminal device according to any one of claims 235 to 254, wherein reporting of the beam failure indication information is performed in one or more of following cases:

when the second terminal device determines that a beam failure occurs;
when the second terminal device receives indication information used for triggering the second terminal device to report the beam failure indication information; or
when a reporting period of the beam failure indication information is reached.

**256.**
The terminal device according to any one of claims 235 to 255, wherein the CSI-RS resource information is determined based on measurement of M CSI-RS resources, and the M is a positive integer greater than or equal to 1.

**257.**
The terminal device according to claim 256, wherein the M CSI-RS resources are periodic CSI-RS resources.

**258.**
The terminal device according to claim 256 or 257, wherein the first terminal device transmits the M CSI-RS resources by using different spatial domain transmission filters, or the first terminal device does not transmit the M CSI-RS resources by using a same spatial domain transmission filter.

**259.**
The terminal device according to any one of claims 256 to 258, wherein

priorities of the M CSI-RS resources are determined based on protocol predefined information, pre-configuration information, or network configuration information; or
priorities of the M CSI-RS resources are a highest priority or a lowest priority in preset priorities.

**260.**
The terminal device according to any one of claims 256 to 259, wherein the CSI-RS resource information is used for indicating D CSI-RS resources selected by the second terminal device, and the D CSI-RS resources are selected in one of following manners:

being selected in descending order based on measurement results corresponding to the M CSI-RS resources;
being selected in descending order based on measurement results corresponding to C CSI-RS resources; or
being randomly selected from C CSI-RS resources,
wherein the C CSI-RS resources correspond to C measurement results, measurement values corresponding to the C measurement results are all greater than or equal to a third threshold, the C is a positive integer greater than or equal to 1, and the D is a positive integer less than or equal to C.

**261.**
The terminal device according to claim 260, wherein

a value of the C is determined based on one or more of following: protocol predefined information, pre-configuration information, network device configuration information, resource pool configuration information,

PC5-RRC signalling, indication information transmitted by the first terminal device, or indication information transmitted by the second terminal device; and/or

a value of the D is determined based on one or more of following: protocol predefined information, pre-configuration information, network device configuration information, resource pool configuration information, PC5-RRC signalling, indication information transmitted by the first terminal device, or indication information transmitted by the second terminal device; and/or

the third threshold is determined based on one or more of following: protocol predefined information, pre-configuration information, network device configuration information, resource pool configuration information, PC5-RRC signalling, indication information transmitted by the first terminal device, or indication information transmitted by the second terminal device.

**262.**

The terminal device according to any one of claims 235 to 261, wherein reporting of the CSI-RS resource information comprises one or more of following: condition-based reporting, trigger-based reporting, or periodic reporting.

**263.**

The terminal device according to any one of claims 235 to 262, wherein reporting of the CSI-RS resource information is performed in one or more of following cases:

when the second terminal device determines that a beam failure occurs;
when the second terminal device receives second indication information; or
when a reporting period of the CSI-RS resource information is reached,
wherein the second indication information is transmitted by the first terminal device, and the second indication information is used for instructing the second terminal device to report the CSI-RS resource information; or the second indication information is used for instructing the second terminal device to report the beam failure indication information.

**264.**

The terminal device according to any one of claims 235 to 263, wherein the beam failure indication information is carried in first signalling or a first channel, and the first signalling or the first channel comprises one or more of following:

a physical sidelink feedback channel PSFCH;
sidelink control information SCI;
a medium access control control element MAC CE; or
PC5-RRC signalling.

**265.**

The terminal device according to claim 264, wherein the first signalling or the first channel is a first PSFCH.

**266.**

The terminal device according to claim 265, wherein the first PSFCH is used for carrying a first sequence, and the first sequence is generated based on the beam failure indication information.

**267.**

The terminal device according to claim 266, wherein the first PSFCH occupies K physical resource blocks PRBs in frequency domain, and the K is a positive integer greater than or equal to 1.

**268.**

The terminal device according to claim 267, wherein

in a case that the K is equal to 1, the first sequence is a sequence whose length is t; or
in a case that the K is greater than 1, the first sequence is a sequence whose length is t×K; or in a case that the K is greater than 1, the first sequence is a sequence whose length is t, and sequences to which the K PRBs are mapped are all generated based on the first sequence,
wherein t denotes a quantity of subcarriers comprised in one PRB.

**269.**

The terminal device according to any one of claims 266 to 268, wherein the first sequence is generated based on one or more of following:

a root sequence; or
a cyclic shift.

**270.**
The terminal device according to claim 269, wherein the cyclic shift is generated based on one or more of following:

a slot number;
a quantity of subcarriers comprised in one resource block RB;
a quantity of symbols comprised in one slot;
index information corresponding to a symbol for transmitting a PSFCH in a slot;
a pseudorandom sequence;
a second parameter determined based on a quantity of cyclic shift pairs or cyclic shifts; or
a third parameter determined depending on whether a beam failure occurs.

**271.**
The terminal device according to claim 270, wherein
in a case that a beam failure occurs, a value of the third parameter is 6, and/or in a case that no beam failure occurs, a value of the third parameter is 0.

**272.**
The terminal device according to any one of claims 265 to 271, wherein a time domain resource of the first PSFCH is determined based on one of following:

a time domain position of A CSI-RS resources used for beam failure detection, wherein the A is a positive integer greater than or equal to 1;
a time domain position in which third indication information is located, wherein the third indication information is used for instructing the second terminal device to report the beam failure indication information; and
a time domain position of a first target CSI-RS resource, wherein the first target CSI-RS resource is associated with a CSI-RS resource selected by the second terminal device after a beam failure is detected.

**273.**
The terminal device according to claim 272, wherein the time domain resource of the first PSFCH is determined based on a time domain location of a last CSI-RS resource in the A CSI-RS resources.

**274.**
The terminal device according to any one of claims 265 to 273, wherein the time domain resource of the first PSFCH comprises a second-to-last symbol and a third-to-last symbol that are available for sidelink transmission in a slot, and same data is transmitted on the second-to-last symbol and the third-to-last symbol.

**275.**
The terminal device according to claim 264, wherein the first signalling or the first channel is SCI, a MAC CE, or PC5-RRC signalling.

**276.**
The terminal device according to claim 275, wherein the beam failure indication information is transmitted together with target information, and the target information comprises one or more of following:

the CSI-RS resource information; or
the measurement result corresponding to the CSI-RS resource information.

**277.**
The terminal device according to claim 276, wherein

the beam failure indication information and the target information are carried by using same signalling; or
the beam failure indication information and the target information are carried by using different signalling; or
the beam failure indication information is carried in a plurality of types of signalling; or

the target information is carried in a plurality of types of signalling.

**278.**
The terminal device according to claim 277, wherein

both the beam failure indication information and the target information are carried by using SCI; or
both the beam failure indication information and the target information are carried by using a MAC CE; or
the beam failure indication information is carried by using SCI, and the target information is carried by using a MAC CE; or
the beam indication information is carried in both SCI and a MAC CE; or
the target information is carried in both SCI and a MAC CE.

**279.**
The terminal device according to any one of claims 275 to 278, wherein a sidelink transmission resource used for transmitting the first signalling or the first channel is configured based on a network device or determined by the second terminal device in a first time period range.

**280.**
The terminal device according to claim 279, wherein the first signalling or the first channel is a MAC CE, a physical sidelink shared channel PSSCH carries only second-stage SCI and the MAC CE, or the PSSCH carries second-stage SCI, the MAC CE, and other sidelink data.

**281.**
The terminal device according to claim 279 or 280, wherein a start time of the first time period range is determined based on one of following:

a time domain position of a last CSI-RS resource of A CSI-RS resources used for beam failure detection, wherein the A is a positive integer greater than or equal to 1;
a time domain position in which fourth indication information is located, wherein the fourth indication information is transmitted by the first terminal device, and the fourth indication information is used for instructing the second terminal device to report the beam failure indication information;
a time domain position of a first target CSI-RS resource, wherein the first target CSI-RS resource is associated with a CSI-RS resource selected by the second terminal device after a beam failure is detected; and
a first time interval.

**282.**
The terminal device according to claim 281, wherein the first time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**283.**
The terminal device according to claim 281 or 282, wherein a value of the first time interval is determined based on a sidelink subcarrier spacing.

**284.**
The terminal device according to any one of claims 279 to 283, wherein

an end time of the first time period range is determined based on one or more of following: protocol predefined information, pre-configuration information, network device configuration information, resource pool configuration information, PC5-RRC signalling, indication information transmitted by the first terminal device, or indication information transmitted by the second terminal device; or
duration corresponding to the first time period range is determined based on one or more of following: protocol predefined information, pre-configuration information, network device configuration information, resource pool configuration information, PC5-RRC signalling, indication information transmitted by the first terminal device, or indication information transmitted by the second terminal device.

**285.**

The terminal device according to claim 284, wherein the indication information transmitted by the first terminal device is used for indicating a first latency boundary, and the end time of the first time period range is determined based on a start time of the first time period range and the first latency boundary.

**286.**
The terminal device according to any one of claims 264 to 285, wherein

in a case that the first signalling or the first channel is a PSFCH, SCI, or a MAC CE, a priority corresponding to the first signalling or the first channel is determined based on protocol predefined information, pre-configuration information, or network device information; or
in a case that the first signalling or the first channel is a PSFCH, SCI, or a MAC CE, a priority corresponding to the first signalling or the first channel is a highest priority in preset priorities.

**287.**
The terminal device according to any one of claims 235 to 286, wherein the CSI-RS resource information is carried in second signalling or a second channel, and the second signalling or the second channel comprises one or more of following:

a PSFCH
SCI;
a MAC CE; or
PC5-RRC signalling.

**288.**
The terminal device according to claim 287, wherein the second signalling or the second channel is a second PSFCH.

**289.**
The terminal device according to claim 288, wherein a transmission resource of the second PSFCH is associated with a transmission resource of the selected CSI-RS resource.

**290.**
The terminal device according to claim 289, wherein a time domain resource of the second PSFCH is determined based on a time domain position of the selected CSI-RS resource.

**291.**
The terminal device according to claim 289 or 290, wherein the second PSFCH carries one information bit, and when a value of the one information bit is a first value, the one information bit is used for indicating that a CSI-RS resource associated with the second PSFCH is a CSI-RS resource selected by the second terminal device.

**292.**
The terminal device according to any one of claims 288 to 291, wherein the frequency domain resource of the second PSFCH comprises one PRB.

**293.**
The terminal device according to any one of claims 288 to 292, wherein there is a second time interval between the second PSFCH and the selected CSI-RS resource, and the second time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**294.**
The terminal device according to claim 288, wherein the selected CSI-RS resource belongs to a first group of CSI-RS resources, and a transmission resource of the second PSFCH is associated with a transmission resource of the first group of CSI-RS resources.

**295.**
The terminal device according to claim 294, wherein the CSI-RS resource information is used for indicating L CSI-RS resources selected by the second terminal device from the first group of CSI-RS resources, wherein the L is a positive integer greater than or equal to 1.

**296.**
The terminal device according to claim 295, wherein a value of the L is determined based on one or more of following: protocol predefined information, pre-configuration information, network device configuration information, resource pool configuration information, PC5-RRC signalling, indication information transmitted by the first terminal device, or indication information transmitted by the second terminal device.

**297.**
The terminal device according to claim 295 or 296, wherein the second PSFCH carries E×L information bits, and the E is used for indicating a quantity of bits required to carry one CSI-RS resource in the L CSI-RS resources.

**298.**
The terminal device according to any one of claims 294 to 297, wherein a frequency domain resource of the second PSFCH comprises Q PRBs, and the Q is a positive integer greater than 1.

**299.**
The terminal device according to claim 298, wherein a value of the Q is determined based on one or more of following: protocol predefined information, pre-configuration information, network device configuration information, resource pool configuration information, PC5-RRC signalling, indication information transmitted by the first terminal device, or indication information transmitted by the second terminal device.

**300.**
The terminal device according to any one of claims 294 to 299, wherein a time domain resource of the second PSFCH is determined based on a time domain position of a last CSI-RS resource in the first group of CSI-RS resources in time domain.

**301.**
The terminal device according to any one of claims 288 to 300, wherein at least one of a frequency domain resource or a code domain resource of the second PSFCH is determined based on one or more of following:

index information of a PRB corresponding to a start position of a CSI-RS frequency domain resource;
sub-channel information corresponding to a start position of a CSI-RS frequency domain resource;
subcarrier information corresponding to a start position of a CSI-RS frequency domain resource;
a quantity of PRBs available for transmitting a CSI-RS in a slot;
a size of a frequency domain resource occupied by one CSI-RS;
a scrambling identity used for generating a CSI-RS sequence;
a CSI-RS resource set identifier;
a CSI-RS resource identifier;
an index of the selected CSI-RS resource in a group of CSI-RS resources;
a time domain position and/or a frequency domain start position of a time-frequency resource that carries fifth indication information;
source identifier information;
destination identifier information;
a quantity of PSFCHs multiplexed in one frequency domain resource in code division multiplexing mode; or
a quantity of PRBs available for transmitting a PSFCH in one slot,
wherein the fifth indication information is transmitted by the first terminal device, and the fifth indication information is used for instructing the second terminal device to report the CSI-RS resource information; or the fifth indication information is used for instructing the second terminal device to report the beam failure indication information.

**302.**
The terminal device according to any one of claims 288 to 301, wherein a time domain resource of the second PSFCH comprises a second-to-last symbol and a third-to-last symbol that are available for sidelink transmission in a slot, and same data is transmitted on the second-to-last symbol and the third-to-last symbol.

**303.**
The terminal device according to claim 287, wherein the second signalling or the second channel is SCI or a MAC CE.

**304.**

The terminal device according to claim 303, wherein the second signalling or the second channel is the MAC CE, and a PSSCH carries only second-stage SCI and the MAC CE, or the PSSCH carries the second-stage SCI, the MAC CE, and other sidelink data.

**305.**

The terminal device according to claim 303 or 304, wherein a sidelink transmission resource used for carrying the second signalling or the second channel is configured based on a network device or determined by the second terminal device in a second time period range.

**306.**

The terminal device according to claim 305, wherein a start time of the second time period range is determined based on one of following:

> a time domain position of the selected CSI-RS resource;
> a time domain position of a last CSI-RS resource in a first group of CSI-RS resources in time domain, wherein the selected CSI-RS resource belongs to the first group of CSI-RS resources; and
> a third time interval.

**307.**

The terminal device according to claim 306, wherein the third time interval is determined based on one or more of following: protocol predefined information, pre-configuration information, network device configuration information, resource pool configuration information, PC5-RRC signalling, indication information transmitted by the first terminal device, or indication information transmitted by the second terminal device.

**308.**

The terminal device according to claim 306 or 307, wherein a value of the third time interval is determined based on a sidelink subcarrier spacing.

**309.**

The terminal device according to any one of claims 305 to 308, wherein

> an end time of the second time period range is determined based on one or more of following: protocol predefined information, pre-configuration information, network device configuration information, resource pool configuration information, PC5-RRC signalling, indication information transmitted by the first terminal device, or indication information transmitted by the second terminal device; or
> duration corresponding to the second time period range is determined based on one or more of following: protocol predefined information, pre-configuration information, network device configuration information, resource pool configuration information, PC5-RRC signalling, indication information transmitted by the first terminal device, or indication information transmitted by the second terminal device.

**310.**

The terminal device according to claim 309, wherein the indication information transmitted by the first terminal device is used for indicating a second latency boundary, and the end time of the second time period range is determined based on a start time of the second time period range and the second latency boundary.

**311.**

The terminal device according to any one of claims 287 to 310, wherein

> in a case that the second signalling or the second channel is a PSFCH, SCI, or a MAC CE, a priority corresponding to the second signalling or the second channel is determined based on protocol predefined information, pre-configuration information, or network device information; or
> in a case that the second signalling or the second channel is a PSFCH, SCI, or a MAC CE, a priority corresponding to the second signalling or the second channel is a highest priority in preset priorities.

**312.**

The terminal device according to any one of claims 235 to 311, wherein

in a case that the first information is carried in a MAC CE, SCI transmitted together with the first information comprises sixth indication information; or

in a case that the first information is carried in SCI, the SCI that carries the first information comprises the sixth indication information,

wherein the sixth indication information is used for instructing to activate sidelink feedback.

**313.**

A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 78, or 79 to 156.

**314.**

An apparatus, comprising a processor configured to invoke a program from a memory, to cause the apparatus to execute the method according to any one of claims 1 to 78, or claims 79 to 156.

**315.**

A chip, comprising a processor, configured to invoke a program from a memory to cause a device installed with the chip to execute the method according to any one of claims 1 to 78, or claims 79 to 156.

**316.**

A computer-readable storage medium, wherein the computer-readable storage medium stores a program, and the program causes a computer to execute the method according to any one of claims 1 to 78, or claims 79 to 156.

**317.**

A computer program product, comprising a program that causes a computer to execute the method according to any one of claims 1 to 78, or claims 79 to 156.

**318.**

A computer program, wherein the computer program causes a computer to execute the method according to any one of claims 1 to 78, or claims 79 to 156.

FIG. 1

FIG. 2

FIG. 3

120b

120b

Sidelink
communication

FIG. 4

Terminal
device 1

**Communication
group**

Resource
alloation

Resource
alloation

Terminal
device 2

Terminal
device 3

Sidelink
communication

FIG. 5

Terminal device 2

Terminal device 6

Terminal device 3

**Terminal device 1**

Terminal device 5

Terminal device 4

FIG. 6

Terminal device 1           Terminal device 2

Sidelink data

FIG. 7

**Communication group**

Terminal device 2

Terminal device 1

Terminal device 3

Terminal device 4

FIG. 8

| A G C | | | | | PSSCH | | | | | | | GP |
|---|---|---|---|---|---|---|---|---|---|---|---|---|
| | PSCCH | | | | | | | | | | | |

FIG. 9A

| A G C | | | | | PSSCH | | | | | GP | PSFCH | GP |
|---|---|---|---|---|---|---|---|---|---|---|---|---|
| | PSCCH | | | | | | | | | | | |

FIG. 9B

Denotes a resource occupied
by second-stage SCI

Denotes a resource occupied
by a PSSCH reference signal

Denotes a resource
occupied by a CSI-RS

Denotes a resource
occupied by AGC

PSSCH

RE 11
RE 10
RE 9
RE 8
RE 7
RE 6
RE 5
RE 4
RE 3
RE 2
RE 1
RE 0

0 1 2 3 4 5 6 7 8 9 10 11 12 13

FIG. 10

1110

1

5

2

3

4

FIG. 11

1210

FIG. 12

FIG. 13

**FIG. 14**

**FIG. 15**

**FIG. 16**

PRB

|  0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

Bitmap    1  1  1  0  0  1  1  1  0  0  1  1  1  0  0  1  1  1  0  0  1  1  1  0  0

▦ PRB available for a PSFCH        ▨ PRB available for a CSI-RS

## FIG. 17

PRB

Start PRB

A frequency domain length is 10 PRBs

|  0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

▦ PRB available for a PSFCH        ▨ PRB available for a CSI-RS

## FIG. 18

PRB

Start PRB

A frequency domain length is 10 PRBs

|  0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

▦ PRB available for a PSFCH        ▨ PRB available for a CSI-RS

## FIG. 19

Determine, by a first terminal device or a second terminal device, a first CSI-RS resource — 2010

## FIG. 20

**FIG. 21**

A CSI-RS resource for determining a transmit beam

A CSI-RS resource for determining a receive beam

**FIG. 22**

A first set of CSI-RS resource

A second set of CSI-RS resource

A CSI-RS resource for determining a transmit beam

A CSI-RS resource for determining a receive beam

**FIG. 23**

FIG. 24

FIG. 25

FIG. 26

Beam failure
indication information

k

P

a    b

t

A CSI-RS resource for
beam failure detection

PSFCH slot

... ...

FIG. 27

Beam failure indication information

CSI-RS resource 0    CSI-RS resource 1    CSI-RS resource 2    CSI-RS resource 3    CSI-RS resource 0    CSI-RS resource 1    CSI-RS resource 2    CSI-RS resource 3

a          b    c          t

Optimal beam          Determine that a beam failure occurs

A CSI-RS resource for beam selection    A CSI-RS resource for beam failure detection    PSFCH slot

**FIG. 28**

First terminal device                    Second terminal device

S2610: First information (including CSI-RS resource information)

**FIG. 29**

CSI-RS resource 0    CSI-RS resource 1    CSI-RS resource 2    CSI-RS resource 3

PSFCH

t

CSI-RS slot    PSFCH slot

**FIG. 30**

P2  P2  P2

P1          P1

t

CSI-RS slot    PSFCH slot

**FIG. 31**

Terminal device 3200

Communications module 3210

FIG. 32

Terminal device 3300

Communications module 3310

FIG. 33

Apparatus 3400

Processor 3410

Memory 3420

Transceiver 3430

FIG. 34

## INTERNATIONAL SEARCH REPORT

| International application No. |
| --- |
| **PCT/CN2023/072665** |

| A. | CLASSIFICATION OF SUBJECT MATTER |
| --- | --- |

H04W 72/25(2023.01)i;  H04W 72/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

WPABS, ENTXTC, CNTXT, ENTXT, 3GPP, CNKI: 信道状态信息, 反馈, 参考信号, 资源, 测量, 波束, 失效, 失败, 恢复, 定时器, 计数器, 优先级, 排序, 子载波, 子信道; CSI, Feedback, Reference Signal, Resource, Measurement, Beam, Failure, Recovery, Timer, Counter, Priority, Ordering, Subcarrier, Subchannel

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110536429 A (ZTE CORP.) 03 December 2019 (2019-12-03)<br>description, paragraphs 0046-0157 | 1-318 |
| X | WO 2022078030 A1 (HUAWEI TECHNOLOGIES CO., LTD.) 21 April 2022 (2022-04-21)<br>description, paragraphs 0085-0141 | 1-318 |
| A | CN 111436126 A (ZTE CORP.) 21 July 2020 (2020-07-21)<br>entire document | 1-318 |
| A | CN 113302952 A (APPLE INC.) 24 August 2021 (2021-08-24)<br>entire document | 1-318 |
| A | WO 2022141608 A1 (HUAWEI TECHNOLOGIES CO., LTD.) 07 July 2022 (2022-07-07)<br>entire document | 1-318 |
| A | VIVO. "R1-1810390_NR sidelink synchronization mechanism"<br>*3GPP TSG RAN WG1 Meeting #94bis*, 12 October 2018 (2018-10-12),<br>entire document | 1-318 |

☐ Further documents are listed in the continuation of Box C.  ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 September 2023** | **20 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072665**

| Patent document cited in search report | | | Publication date (day/month/year) | Patent family member(s) | | | Publication date (day/month/year) |
|---|---|---|---|---|---|---|---|
| CN | 110536429 | A | 03 December 2019 | WO | 2020030162 | A1 | 13 February 2020 |
| WO | 2022078030 | A1 | 21 April 2022 | US | 2023254820 | A1 | 10 August 2023 |
| | | | | EP | 4221273 | A1 | 02 August 2023 |
| | | | | WO | 2022077506 | A1 | 21 April 2022 |
| CN | 111436126 | A | 21 July 2020 | US | 2022094505 | A1 | 24 March 2022 |
| | | | | EP | 3911073 | A1 | 17 November 2021 |
| | | | | EP | 3911073 | A4 | 31 August 2022 |
| | | | | WO | 2020143775 | A1 | 16 July 2020 |
| CN | 113302952 | A | 24 August 2021 | US | 2022124466 | A1 | 21 April 2022 |
| | | | | WO | 2020150495 | A1 | 23 July 2020 |
| WO | 2022141608 | A1 | 07 July 2022 | | None | | |

Form PCT/ISA/210 (patent family annex) (July 2022)